# EUROPÄISCHE PATENTANMELDUNG

(11) **EP 4 810 143 A1**
(43) Veröffentlichungstag der Anmeldung: **23.09.2026**
(21) Anmeldenummer: 26164678.0
(22) Anmeldetag: 13.03.2026
(51) Int. Cl.: B01D 17/00, B01D 17/02, C02F 1/00, B01D 17/04

(54) **VORRICHTUNG UND VERFAHREN ZUM AUFBEREITEN VON PROZESSMEDIEN**

(30) Priorität: 19.03.2025 DE 102025110691
(71) Anmelder: MKR Metzger GmbH RECYCLINGSYSTEME, 86653 Monheim (DE)
(72) Erfinder: Xalter, Ralf, 86650 Wemding (DE)
(74) Vertreter: Schmid, Nils T.F.

(57) **Zusammenfassung**

Die vorliegende Erfindung betrifft eine Vorrichtung (1) zum Aufbereiten eines Prozess- oder Industriemediums (81), insbesondere eines wässrigen Prozess- oder Industriemediums, insbesondere einer kohlenwasserstoffhaltigen Emulsion, umfassend einen Wärmetauscher (3), der dazu eingerichtet ist, aus dem Prozess- oder Industriemedium (81) ein unter Überdruck (P1) stehendes Destillat (40) bereitzustellen, das zumindest Wasser (30) und eine weniger dichte Leichtphase (20) enthält, und eine in Fluidverbindung mit dem Wärmetauscher (3) stehende Trennkammer (5), in der ein Koaleszenzorgan (11) angeordnet und die Leichtphase (20) von Wasser (30) abzusondern ist, wobei der Wärmetauscher (3) derart mit der Trennkammer (5) verbunden ist, dass in der Trennkammer (5) ein Überdruck (P2) von wenigstens 10 % des in dem Wärmetauscher (3) wirkenden Überdrucks (P1) wirkt.

## Beschreibung

Die vorliegende Erfindung betrifft eine Vorrichtung und ein Verfahren zum Aufbereiten eines Prozess- oder Industriemediums, insbesondere eines wässrigen Prozess- oder Industriemediums, insbesondere einer kohlenwasserstoffhaltigen Emulsion.

In prozesstechnischen Anlagen entstehen Prozessmedien, die beispielsweise durch emulgierte Kohlenwasserstoffe verunreinigt sind. Diese Abwässer können aufgrund strenger behördlicher Regularien nicht ungereinigt in die Umwelt geleitet werden. Auch moderne Ideen zur Abwasserwiederverwendung, insbesondere unter dem Aspekt von Zero Liquid Discharge (ZLD) stellen eine hohe Anforderung an die Reinigung von Abwässern. Zur Abwasserreinigung, auch Aufbereitung genannt, sind diverse Vorrichtungen und Verfahren bekannt.

Aus dem Stand der Technik ist eine Vorrichtung zur Abwasseraufbereitung bekannt, mit der wasserbasierte Prozessmedien verdampft und im Überdruck kondensiert werden. Das entstehende Destillat kann Wasser, emulgierte Leichtphasen wie Kohlenwasserstoffen und anderen Verunreinigungen der Basiskomponente Wasser beinhalten. Da es sich um einen Überdruckverdampfer handelt, steht das Destillat unter Überdruck. Zum Abscheiden der Leichtphasen aus dem Destillat wird dieses über eine Leitung mit einem Ablassventil in eine Trennkammer geleitet. In der Trennkammer ist ein Koaleszenzorgan angeordnet, das von dem Destillat durchströmt wird. Es sorgt dafür, dass sich im Destillat befindliche Öltröpfchen zu größeren Öltropfen verbinden, sodass diese als Leichtphasen auf dem Destillat bzw. Wasser aufschwimmen. Mittels eines Überlaufs können die aufschwimmenden Leichtphasen abgetrennt werden und das gereinigte Wasser abgelassen werden.

Nachteilig am Stand der Technik hat sich eine unzureichende Reinigungsleistung beziehungsweise ein unzureichendes Abscheidevermögen der Leichtphasen aus dem Destillat erwiesen. Insbesondere hat sich bei der Verwendung eines Überdruckverdampfers als nachteilig herausgestellt, dass an dem Ablassventil zur Begrenzung der Durchströmung der Trennkammer mit dem Destillat eine Druckreduktion im Destillat einhergeht, da die Trennkammer unter atmosphärischem Druck steht. Dabei wird das Destillat derart durchmischt, dass sich transportierte Öltröpfchen verkleinern und die Emulsion weiter homogenisiert wird. Dadurch wird die Wirkung des Koaleszenzorgans vermindert.

Es ist Aufgabe der vorliegenden Erfindung, die Nachteile aus dem bekannten Stand der Technik zu überwinden, insbesondere eine verbesserte Reinigung von Prozessmedien und/oder Abscheidung von Kohlenwasserstoffen aus Prozessmedien bereitzustellen.

Diese Aufgabe wird durch die Merkmale der unabhängigen Ansprüche gelöst.

Gemäß einem Aspekt der vorliegenden Erfindung ist eine Vorrichtung zum Aufbereiten eines Prozess- oder Industriemediums, insbesondere eines wässrigen Prozess- oder Industriemediums, insbesondere einer kohlenwasserstoffhaltigen Emulsion, bereitgestellt. Die Vorrichtung umfasst einen Wärmetauscher, der dazu eingerichtet ist, aus dem Prozess- oder Industriemedium ein unter Überdruck stehendes Destillat bereitzustellen, das zumindest Wasser und eine weniger dichte, insbesondere im Vergleich zu Wasser, Leichtphase enthält. Ferner umfasst die Vorrichtung eine in Fluidverbindung mit dem Wärmetauscher stehende Trennkammer, in der ein Koaleszenzorgan angeordnet und die Leichtphase von Wasser abzusondern ist. Der Wärmetauscher ist derart, insbesondere überdruckerhaltend, mit der Trennkammer verbunden, dass der in dem Wärmetauscher wirkende Überdruck, vorzugsweise hydraulisch, insbesondere durch das Destillat, so verlustfrei wie möglich in die Trennkammer fortgesetzt oder übertragen wird.

Beispielsweise handelt es sich bei Prozess- oder Industriemedien um Abwässer oder Brauchwasser, das im Zyklus einer Anlage regelmäßig gereinigt wird, aus industriellen Anlagen oder von der Herstellung von Produkten. Ein Prozess- oder Industriemedium ist in vielen Fällen mit Leichtphasen, wie mit Ölen oder Salzen und Waschsubstanzen oder dergleichen, versetztes Wasser. Beispiele dafür sind Kühlschmieremulsionen, Druckgussemulsionen, Bodenreinigungswasser, Wasch- und Entfettungsbäder, Spülbäder oder Lackiervorbehandlungen sowie Abwässer aus Beizverfahren zur Oberflächenbehandlung von Metallen.

Der Wärmetauscher kann Teil einer Verdampfungsanlage sein, deren Aufbau beispielsweise aus der EP 4 438 149 A1 bekannt ist, wobei diese Anlage als unter Bezugnahme in der Beschreibung aufgenommen sein soll. Insbesondere ist unter dem Wärmetauscher eine Kondensationsseite des Wärmetauschers zu verstehen, in der unter Überdruck stehender Dampf, insbesondere Brüden, zu Destillat kondensiert. Insbesondere ist dem Wärmetauscher ein Verdampfer, der das Prozess- oder Industriemedium verdampft und ein Verdichter, der den entstehenden Dampf, insbesondere Brüden, verdichtet, vorgeschaltet. Beispielsweise kann es sich bei dem Verdampfer um einen sogenannten Vakuumverdampfer, der das Prozess- oder Industriemedium unter Unterdruck gegenüber atmosphärischem Druck, insbesondere im Vakuum, verdampft, handeln. Auch soll ein atmosphärischer Verdampfer als ein solcher Verdampfer verstanden werden, der das Prozess- oder Industriemedium unter atmosphärischem Druck, insbesondere im Bereich von +- 100 mbar gegenüber atmosphärischem Druck, verdampft. Es kann sich auch um einen Überdruckverdampfer, der das Prozess- oder Industriemedium unter Überdruck gegenüber atmosphärischem Druck, verdampft, handeln. Insbesondere ist der Verdampfer dazu eingerichtet, Feststoffe und/oder Schwerphasen, die insbesondere eine höhere Dichte als Wasser aufweisen, von dem Prozess- oder Industriemedium abzuscheiden.

Der Verdichter kann dazu eingerichtet sein, den im Verdampfer entstehenden Dampf, insbesondere Brüden, so stark zu verdichten, dass dieser einen Überdruck gegenüber dem atmosphärischen Druck aufweist, insbesondere unabhängig vom Druck des Dampfes vor dem Verdichter. Insbesondere ist ein Bereich des Wärmetauschers, vorzugsweise ein Gehäuse, in dem sich das Destillat sammelt, hermetisch, insbesondere gegenüber der Atmosphäre, abgedichtet. Insbesondere steht das Destillat im Wärmetauscher unter dem Überdruck, den ein vorgeschalteter Verdichter erzeugt.

Insbesondere kann das Destillat ein wässriges Medium sein, das vorzugsweise größtenteils aus Wasser besteht. Insbesondere kann das Destillat neben Wasser und Leichtphase weitere Stoffe und/oder Schwerphasen enthalten, wie beispielsweise Salze oder Feststoffe. Das Destillat kann eine oder mehrere Leichtphasen, wie Kohlenwasserstoffe, beispielsweise Öle, Benzin, Diesel, Kerosin oder dergleichen, deren Dichte geringer als die von Wasser ist, aufweisen. Beispielsweise kann das Destillat in seiner Zusammensetzung dem Prozess- oder Industriemedium entsprechen, insbesondere ohne darin befindliche Feststoffe und/oder Schwerphasen, die eine höhere Dichte im Vergleich zu Wasser aufweisen.

Die Trennkammer kann über eine Fluidleitung mit dem Wärmetauscher verbunden sein. Insbesondere ist die Trennkammer stromabwärtig des Wärmetauschers angeordnet. Vorzugsweise ist die Fluidverbindung überdruckerhaltend ausgebildet. Darunter ist insbesondere zu verstehen, dass in der Fluidverbindung zwischen Wärmetauscher und Trennkammer keine druckmindernden Maßnahmen, wie Ventile und/oder Drosseln, vorgesehen sind. Die Fluidverbindung kann es dem Destillat ermöglichen, aus dem Wärmetauscher in die Trennkammer zu strömen.

Vorzugsweise ist die Trennkammer, insbesondere im Betrieb der Vorrichtung, luftleer, vorzugsweise vollständig mit Fluid, insbesondere Destillat, beziehungsweise Wasser und Leichtphase, gefüllt. Insbesondere ist das Koaleszenzorgan stromaufwärtig in der Trennkammer angeordnet, sodass einströmendes Destillat durch das Koaleszenzorgan in die Trennkammer strömt. Vorzugsweise ist das Koaleszenzorgan dazu eingerichtet, das Destillat in Wasser und Leichtphase zu trennen. Es ist möglich, dass im Wasser in der Trennkammer weitere Verunreinigungen oder nicht abgesonderte Leichtphasen vorliegen. Vorzugsweise sind in der Trennkammer zumindest 80 %, insbesondere wenigstens 90 %, insbesondere Gewichtsprozent oder Volumenprozent, der im Destillat vorliegenden Leichtphase vom Wasser abzusondern. Insbesondere beruhigt ein stromaufwärtiger Bereich des Koaleszenzorgans das einströmende Destillat. In einem Koaleszenzbereich des Koaleszenzorgans, kann dieses dafür sorgen, dass im Destillat in Tröpfchen vorliegende Leichtphasen zu größeren Tropfen koaleszieren, insbesondere verbinden, insbesondere wenn sie den Koaleszenzbereich durchströmen. Vorzugsweise wird dieser Vorgang als Koaleszenzprozess verstanden. Stromabwärts des Koaleszenzorgans, insbesondere des Koaleszenzbereichs, kann die koaleszierte Leichtphase aufgrund der geringeren Dichte in Bezug auf das Wasser, in diesem aufsteigen, insbesondere darauf aufschwimmen. Die Leichtphase kann sich somit vom Wasser in der Trennkammer, insbesondere stromabwärtig des Koaleszenzorgans absondern, insbesondere aufschwimmen. Die Leichtphase steigt entgegen der Gravitationskraft in der Trennkammer auf und sammelt sich am oberen Ende der Trennkammer. Beispielsweise kann das Koaleszenzorgan als Koaleszenzkerze ausgestaltet sein. Insbesondere umfasst das Koaleszenzorgan ein hydrophobes, insbesondere superhydrophobes, und/oder lipophiles Material. Beispielsweise als Endlosfaden um einen Stützkern gewickeltes Filterelement. Vorzugsweise umfasst das Koaleszenzorgan faserige Materialien, wie Kunststofffäden, beispielsweise aus Polypropylen, Polyester oder Nylon und/oder Naturfäden, beispielsweise aus Baumwolle und/oder Metallfäden, beispielsweise aus Edelstahl und/oder Glasfasern.

Unter einer verlustfreien Verbindung kann eine möglichst drosselfreie Verbindung verstanden werden, dass sich eine laminare oder möglichst druckverlustfreie Strömung von dem Wärmetauscher hin zu dem vorgeschalteten Koaleszenzorgan etablieren kann, insbesondere wenn ein stromabwärtig der Trennkammer angeordnetes Ablassventil geöffnet ist. Insbesondere ist die Trennkammer derart ausgebildet, dass sich der Überdruck aus dem Wärmetauscher in der Trennkammer aufbauen kann und über einen längeren Zeitraum, insbesondere konstant, gehalten werden kann. Dadurch kann eine Spontanverdampfung des Wassers im Destillat stromaufwärts des Koaleszenzorgans, insbesondere zwischen Wärmetauscher und Koaleszenzorgan vermieden werden. Ein Überdruckverlust vom Wärmetauscher in die Trennkammer soll möglichst gering sein, jedoch nicht mehr als 90 %, insbesondere weniger als 80 %, weniger als 70 %, weniger als 60 %, weniger als 50 %, weniger als 40 %, weniger als 30 %, weniger als 20 %, vorzugsweise weniger als 10 % betragen. Überdruckverluste, die durch Querschnittsänderung der Leitung oder Reibungs- und/oder Strömungsverluste im Destillat in der Fluidverbindung vom Wärmetauscher zur Trennkammer auftreten können hingenommen werden. In der Trennkammer soll ein Überdruck von wenigstens 10 % des in dem Wärmetauscher wirkenden Überdrucks wirken. Überdruck bedeutet im Sinne der vorliegenden Erfindung Überdruck gegenüber atmosphärischem Druck, insbesondere der in der Umgebung der Vorrichtung vorliegende atmosphärische Druck. Insbesondere bezieht sich der Überdruck auf den absoluten Druck ohne hydrostatischen Anteil von Destillat und/oder Wasser und Leichtphase. Beispielsweise ist der Überdruck im Wärmetauscher am Auslass des Wärmetauschers, über den das Destillat zur Trennkammer strömt, erfasst. Insbesondere ist der Überdruck in der Trennkammer am Einlass der Trennkammer, vorzugsweise stromaufwärts des Koaleszenzorgans erfasst oder an einem in Gravitationsrichtung oberen Ende in der Trennkammer erfasst. Vorzugsweise setzt sich der in dem Wärmetauscher wirkende Überdruck über das Destillat in die Trennkammer, insbesondere uneingeschränkt, fort. Vorzugsweise mindert sich der Überdruck im Destillat nur durch Querschnittsänderungen der Leitung oder Reibungs- und/oder Strömungsverluste des Destillats vom Wärmetauscher bis in die Trennkammer. Insbesondere wirkt im Wärmetauscher ein Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Insbesondere wirkt in der Trennkammer ein Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Insbesondere wirkt der Überdruck von wenigstens 10 % des in dem Wärmetauscher wirkenden Überdrucks in der Trennkammer in einem Betriebszustand der Vorrichtung, in dem kein Fluid aus der Trennkammer ausströmen kann oder Fluid nur gedrosselt aus der Trennkammer ausströmen kann, insbesondere derart, dass ein Staudruck beim Ausströmen entsteht. Insbesondere wird der Überdruck in der Trennkammer ausschließlich durch wenigstens ein Ablassventil und/oder eine Drossel, stromabwärts des Koaleszenzorgans entspannt, damit insbesondere eine Spontanverdampfung des Wassers in Strömungsrichtung betrachtet nur stromabwärts des Koaleszenzorgans und des Trennvorgangs zwischen Wasser und Leichtphase einhergeht. Insbesondere ist der Überdruck in der Trennkammer im Bereich des Koaleszenzorgans dann zu messen, wenn das Ablassventil / die Drossel geschlossen ist. Durch das Aufrechterhalten des Überdrucks aus dem Wärmetauscher bis in die Trennkammer, insbesondere über das Koaleszenzorgan, ergibt sich der Vorteil, dass es nicht durch rasche Druckentspannung zu einer Spontanverdampfung des Wassers kommt, solange die Leichtphase nicht von Wasser getrennt ist, sprich im Destillat. Bei einer Spontanverdampfung des Wassers im Destillat wird das Destillat stark durchmischt, sodass die Leichtphase stärker emulgiert und es erschwert ist, diese mittels des Koaleszenzorgans abzusondern. Insbesondere ist die Wirkung des Koaleszenzorgans besonders gut, wenn dort strömungsberuhigtes Destillat einströmt.

Gemäß einer beispielhaften Ausführung der vorliegenden Erfindung wirkt in der Trennkammer ein Überdruck von wenigstens 20 %, insbesondere wenigstens 30 %, wenigstens 40 %, wenigsten 50 %, wenigsten 60 %, wenigsten 70 %, wenigsten 80 %, oder wenigstens 90 %, des in dem Wärmetauscher wirkenden Überdrucks. Insbesondere wirkt in der Trennkammer ein Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Besonders bevorzugt wirkt in der Trennkammer der Überdruck des in dem Wärmetauscher wirkenden Überdrucks nur abzüglich von Strömungsverlusten, die das Destillat beim Strömen vom Wärmetauscher in die Trennkammer in der Fluidleitung erfährt. Besonders vorteilhaft ist es, wenn der Druckverlust des Überdrucks vom Wärmetauscher in die Trennkammer möglichst gering ist, sodass ein insbesondere weiteres Vermischen des Destillats bzw. des Wassers und der Leichtphase aufgrund von Druckentspannung unterbunden werden kann. Dies kann die Effizienz der Abscheidung bzw. des Koaleszierens der Leichtphase steigern und die Reinigung des Wassers verbessern.

Gemäß einem weiteren Aspekt der vorliegenden Erfindung, der mit den vorhergehenden Aspekten und beispielhaften Ausführungen kombinierbar ist, ist eine Vorrichtung zum Aufbereiten eines Prozess- oder Industriemediums, insbesondere eines wässrigen Prozess- oder Industriemediums, insbesondere einer kohlenwasserstoffhaltigen Emulsion, bereitgestellt. Die Vorrichtung umfasst einen Wärmetauscher, der dazu eingerichtet ist, aus dem Prozess- oder Industriemedium ein unter Überdruck stehendes Destillat bereitzustellen, das zumindest Wasser und eine weniger dichte Leichtphase enthält, und eine in Fluidverbindung mit dem Wärmetauscher stehende Trennkammer, in der die Leichtphase koalesziert und von Wasser abzusondern ist. Gemäß dem weiteren Erfindungsaspekt ist zumindest ein Bereich der Trennkammer, in dem die Leichtphase koalesziert, insbesondere gegenüber der Atmosphäre hermetisch abgedichtet. Insbesondere koalesziert die Leichtphase in einem, vorzugsweise in der Trennkammer, insbesondere an einem stromaufwärtigen Einlass der Trennkammer, angeordneten, Koaleszenzorgan, vorzugsweise gemäß einem der Aspekte und/oder beispielhaften Ausführungen der Erfindung. Vorzugsweise ist der Bereich derart hermetisch abgedichtet, dass sich der Überdruck aus dem Wärmetauscher in diesen Bereich uneingeschränkt fortsetzen kann, insbesondere durch das Destillat, vorzugsweise nur unter Strömungs- und/oder Reibungsverlusten. Insbesondere verbinden sich die im Wasser befindlichen Leichtphasen in dem Bereich der Trennkammer und sondern sich vom Wasser ab. Unter hermetisch abgedichtet kann verstanden werden, dass ein Druckniveau in dem Bereich konstant gehalten werden kann. Insbesondere ist in dem Bereich der Trennkammer, in dem die Leichtphase koalesziert ein Koaleszenzorgan, insbesondere gemäß einem der Aspekte und/oder beispielhaften Ausführungen der Erfindung, vorgesehen. Der hermetisch abgedichtete Bereich kann einen Einlass und einen Auslass aufweisen. Insbesondere ist der Auslass mittels eines Ventils hermetisch verschließbar. Vorzugsweise ist am Einlass kein Verschluss, wie ein Ventil oder eine Drossel vorgesehen. Insbesondere schließt der Einlass an einen unter Überdruck stehenden Bereich an, sodass kein Druckabfall im hermetisch abgedichteten Bereich über den Einlass stattfindet. Der hermetisch abgedichtete Bereich der Trennkammer in dem die Leichtphase koalesziert bietet den Vorteil, dass die Leichtphase unter im Wesentlichen gleichbleibenden, vorzugsweise konstanten, Überdruckverhältnissen koaleszieren kann. Dadurch kann eine Spontanverdampfung des Wassers unterbunden werden und das Koaleszieren erfolgt mit sehr hoher Effizienz.

Beispielsweise handelt es sich bei Prozess- oder Industriemedien um Abwässer oder Brauchwasser, das im Zyklus einer Anlage regelmäßig gereinigt wird, aus industriellen Anlagen oder von der Herstellung von Produkten. Ein Prozess- oder Industriemedium ist in vielen Fällen mit Leichtphasen, wie mit Ölen oder Salzen und Waschsubstanzen oder dergleichen, versetztes Wasser. Beispiele dafür sind Kühlschmieremulsionen, Druckgussemulsionen, Bodenreinigungswasser, Wasch- und Entfettungsbäder, Spülbäder oder Lackiervorbehandlungen sowie Abwässer aus Beizverfahren zur Oberflächenbehandlung von Metallen.

Der Wärmetauscher kann Teil einer Verdampfungsanlage sein, deren Aufbau beispielsweise aus der EP 4 438 149 A1 bekannt ist, wobei diese Anlage als unter Bezugnahme in der Beschreibung aufgenommen sein soll. Insbesondere ist unter dem Wärmetauscher eine Kondensationsseite des Wärmetauschers zu verstehen, in der unter Überdruck stehender Dampf, insbesondere Brüden, zu Destillat kondensiert. Insbesondere ist dem Wärmetauscher ein Verdampfer, der das Prozess- oder Industriemedium verdampft und ein Verdichter, der den entstehenden Dampf, insbesondere Brüden, verdichtet, vorgeschaltet. Beispielsweise kann es sich bei dem Verdampfer um einen sogenannten Vakuumverdampfer, der das Prozess- oder Industriemedium unter Unterdruck gegenüber atmosphärischem Druck, insbesondere im Vakuum, verdampft, handeln. Auch soll ein atmosphärischer Verdampfer als ein solcher Verdampfer verstanden werden, der das Prozess- oder Industriemedium unter atmosphärischem Druck, insbesondere im Bereich von +- 100 mbar gegenüber atmosphärischem Druck, verdampft. Es kann sich auch um einen Überdruckverdampfer, der das Prozess- oder Industriemedium unter Überdruck gegenüber atmosphärischem Druck, verdampft, handeln. Insbesondere ist der Verdampfer dazu eingerichtet, Feststoffe und/oder Schwerphasen, die insbesondere eine höhere Dichte als Wasser aufweisen, von dem Prozess- oder Industriemedium abzuscheiden.

Der Verdichter kann dazu eingerichtet sein, den im Verdampfer entstehenden Dampf, insbesondere Brüden, so stark zu verdichten, dass dieser einen Überdruck gegenüber dem atmosphärischen Druck aufweist, insbesondere unabhängig vom Druck des Dampfes vor dem Verdichter. Insbesondere ist ein Bereich des Wärmetauschers, vorzugsweise ein Gehäuse, in dem sich das Destillat sammelt, hermetisch, insbesondere gegenüber der Atmosphäre, abgedichtet. Insbesondere steht das Destillat im Wärmetauscher unter dem Überdruck, den ein vorgeschalteter Verdichter erzeugt.

Insbesondere kann das Destillat ein wässriges Medium sein, das vorzugsweise größtenteils aus Wasser besteht. Insbesondere kann das Destillat neben Wasser und Leichtphase weitere Stoffe und/oder Schwerphasen enthalten, wie beispielsweise Salze oder Feststoffe. Das Destillat kann eine oder mehrere Leichtphasen, wie Kohlenwasserstoffe, beispielsweise Öle, Benzin, Diesel, Kerosin oder dergleichen, deren Dichte geringer als die von Wasser ist, aufweisen. Beispielsweise kann das Destillat in seiner Zusammensetzung dem Prozess- oder Industriemedium entsprechen, insbesondere ohne darin befindliche Feststoffe und/oder Schwerphasen, die eine höhere Dichte im Vergleich zu Wasser aufweisen.

Die Trennkammer kann über eine Fluidleitung mit dem Wärmetauscher verbunden sein. Insbesondere ist die Trennkammer stromabwärtig des Wärmetauschers angeordnet. Vorzugsweise ist die Fluidverbindung überdruckerhaltend ausgebildet. Darunter ist insbesondere zu verstehen, dass in der Fluidverbindung zwischen Wärmetauscher und Trennkammer keine druckmindernden Maßnahmen, wie Ventile und/oder Drosseln, vorgesehen sind. Die Fluidverbindung kann es dem Destillat ermöglichen, aus dem Wärmetauscher in die Trennkammer zu strömen.

Vorzugsweise ist die Trennkammer, insbesondere im Betrieb der Vorrichtung, luftleer, vorzugsweise vollständig mit Fluid, insbesondere Destillat, beziehungsweise Wasser und Leichtphase, gefüllt. Insbesondere ist das Koaleszenzorgan stromaufwärtig in der Trennkammer angeordnet, sodass einströmendes Destillat durch das Koaleszenzorgan in die Trennkammer strömt. Vorzugsweise ist das Koaleszenzorgan dazu eingerichtet, das Destillat in Wasser und Leichtphase zu trennen. Es ist möglich, dass im Wasser in der Trennkammer weitere Verunreinigungen oder nicht abgesonderte Leichtphasen vorliegen. Vorzugsweise sind in der Trennkammer zumindest 80 %, insbesondere wenigstens 90 %, insbesondere Gewichtsprozent oder Volumenprozent, der im Destillat vorliegenden Leichtphase vom Wasser abzusondern. Insbesondere beruhigt ein stromaufwärtiger Bereich des Koaleszenzorgans das einströmende Destillat. In einem Koaleszenzbereich des Koaleszenzorgans, kann dieses dafür sorgen, dass im Destillat in Tröpfchen vorliegende Leichtphasen zu größeren Tropfen koaleszieren, insbesondere verbinden, insbesondere wenn sie den Koaleszenzbereich durchströmen. Vorzugsweise wird dieser Vorgang als Koaleszenzprozess verstanden. Stromabwärts des Koaleszenzorgans, insbesondere des Koaleszenzbereichs, kann die koaleszierte Leichtphase aufgrund der geringeren Dichte in Bezug auf das Wasser, in diesem aufsteigen, insbesondere darauf aufschwimmen. Die Leichtphase kann sich somit vom Wasser in der Trennkammer, insbesondere stromabwärtig des Koaleszenzorgans absondern, insbesondere aufschwimmen. Die Leichtphase steigt entgegen der Gravitationskraft in der Trennkammer auf und sammelt sich am oberen Ende der Trennkammer. Beispielsweise kann das Koaleszenzorgan als Koaleszenzkerze ausgestaltet sein. Insbesondere umfasst das Koaleszenzorgan ein hydrophobes, insbesondere superhydrophobes, und/oder lipophiles Material. Beispielsweise als Endlosfaden um einen Stützkern gewickeltes Filterelement. Vorzugsweise umfasst das Koaleszenzorgan faserige Materialien, wie Kunststofffäden, beispielsweise aus Polypropylen, Polyester oder Nylon und/oder Naturfäden, beispielsweise aus Baumwolle und/oder Metallfäden, beispielsweise aus Edelstahl und/oder Glasfasern.

Gemäß einer beispielhaften Ausführung der vorliegenden Erfindung weist die Trennkammer ein, insbesondere gegenüber der Atmosphäre, hermetisch abgedichtetes Gehäuse auf. Beispielsweise kann das Gehäuse druckdicht und/oder druckfest ausgebildet sein. Vorzugsweise ist das Gehäuse aus Metall, wie Edelstahl, gefertigt. Insbesondere weist das Gehäuse eine Materialstärke von wenigstens 1 mm, insbesondere wenigstens 2 mm, vorzugsweise wenigstens 3 mm auf. Das Gehäuse kann eine Einlassöffnung, sowie zumindest eine Auslassöffnung, insbesondere zwei Auslassöffnungen, aufweisen. Stromabwärtig oder in der Einlassöffnung kann ein Koaleszenzorgan angeordnet sein. Stromabwärtig der zumindest einen Auslassöffnung kann ein Ventil vorgesehen sein, dass insbesondere dazu eingerichtet ist, die Auslassöffnung hermetisch zu verschließen. Beispielsweise kann das Gehäuse ein Sichtfenster umfassen. Insbesondere ist das Gehäuse derart hermetisch abgedichtet, dass ein in dem Gehäuse herrschender Überdruck, ohne Zu- oder Abstrom von Destillat oder Leichtphase oder Wasser in das oder aus dem Gehäuse, aufrecht erhalten bleibt.

Gemäß einer beispielhaften Ausführung der vorliegenden Erfindung wirkt der in dem Wärmetauscher wirkende Überdruck uneingeschränkt in der Trennkammer. Darunter ist insbesondere zu verstehen, dass sich der Überdruck aus dem Wärmetauscher über das Destillat in die Trennkammer fortsetzt, ohne dass beispielsweise Ventile und/oder Drosseln in der Fluidverbindung vorgesehen sind, die druckmindernd wirken. Dadurch kann erreicht werden, dass der in der Trennkammer wirkende Überdruck möglichst dem in dem Wärmetauscher wirkenden Überdruck entspricht. Insbesondere findet keine Druckentspannung des Destillats stromaufwärts des Koaleszierens der Leichtphase statt. Dies bietet den Vorteil, dass eine Spontanverdampfung des Wassers im Destillat verhindert wird.

Gemäß einer beispielhaften Ausführung der vorliegenden Erfindung wirkt in der Trennkammer ein Überdruck von wenigstens 30 mbar gegenüber der Atmosphäre. Insbesondere wirkt der Überdruck, wenn ein stromabwärts der Trennkammer angeordnetes Ablassventil geschlossen ist oder eine Strömung aus der Trennkammer drosselt. Beispielsweise kann durch einen Mindestüberdruck von 30 mbar in der Trennkammer kann eine Spontanverdampfung des Wassers im Destillat stromaufwärts des Koaleszierens der Leichtphase vermieden werden. Insbesondere ist es möglich, ein Fluid, insbesondere entgegen der Gravitationsrichtung, aus der Trennkammer abzulassen bzw. abzusaugen. Insbesondere ist dies durch das Druckgefälle von 30 mbar gegenüber der Atmosphäre möglich, ohne externe Energie zuführen zu müssen.

Gemäß einer beispielhaften Ausführung der vorliegenden Erfindung umfasst die Vorrichtung zumindest ein in Fluidverbindung mit der Trennkammer stehendes Ablassventil, zum Ablassen eines Fluids aus der Trennkammer. Vorzugsweise herrscht über das Ablassventil in Ausströmrichtung ein Druckgefälle von wenigstens 5 mbar, insbesondere wenigsten 10 mbar, wenigstens 15 mbar, wenigstens 29 mbar oder wenigsten 30 mbar, insbesondere in einem Schließzustand oder einem Drosselzustand des Ventils. Insbesondere strömt in dem Schließzustand des Ventils kein Fluid durch das Ventil. Insbesondere wird im Drosselzustand die Strömung eines Fluids durch das Ventil derart begrenzt, dass ein Staudruck in dem Fluid herrscht. Insbesondere ist das Ablassventil ein elektrisches, hydraulisches und/oder pneumatisches Ventil. Insbesondere ist das Ablassventil hermetisch verschließbar. Das Druckgefälle über das Ablassventil soll beispielsweise wenigstens 30 mbar gegenüber atmosphärischem Druck betragen. Insbesondere soll das in Ausströmrichtung stromaufwärtig des Ablassventils vorliegende Fluid einen Überdruck von 30 mbar gegenüber der Atmosphäre aufweisen. Insbesondere besteht das Druckgefälle über das Ablassventil aufgrund des in der Trennkammer wirkenden Überdrucks. Beispielsweise ist das Druckgefälle unabhängig von einem hydrostatischen Druck des Fluids, das an dem Ablassventil stromaufwärtig vorliegt, insbesondere im geschlossenen Zustand des Ablassventils ansteht. Die Ausströmrichtung kann von der Trennkammer zur Atmosphäre hin definiert werden. Das Druckgefälle von wenigstens 30 mbar bietet den Vorteil, dass Fluid, insbesondere entgegen der Gravitationsrichtung, aus der Trennkammer abgelassen werden kann, ohne externe Energie zuzuführen. Dies ermöglicht ein ressourceneffizientes Ablassen von Fluid aus der Trennkammer. Ein weiterer Vorteil besteht darin, dass das Fluid aus der Kammer gedrückt wird, dabei kommt es nicht zu etwaigen Verwirbelungen des Fluids die beispielsweise durch Scherkräfte in einer Pumpe hervorgerufen werden. Dadurch kann die Leichtphase oder das Wasser strömungsberuhigt und ohne vermischen mit der anderen Phase aus der Trennkammer abgelassen werden.

Gemäß einer beispielhaften Ausführung der vorliegenden Erfindung ist das Ablassventil in Gravitationsrichtung oberhalb einer in der Trennkammer vorliegenden Phasengrenze, insbesondere zwischen Wasser und der Leichtphase, angeordnet. Vorzugsweise ist das Ablassventil in Gravitationsrichtung oberhalb der Trennkammer im Einbauzustand vorgesehen. Dies Bietet den Vorteil, dass das Ablassventil nahe der auf dem Wasser aufschwimmenden Leichtphase angeordnet ist, was zu einer effizienten Bauraumnutzung führt. Des Weiteren weist das am Ablassventil abzulassende Fluid einen sehr geringen bzw. keinen hydrostatischen Druck, sondern nur den in der Trennkammer wirkenden Überdruck auf, was zu einem vorhersehbareren Ausströmen und einer vereinfachten Regelung der Durchflussmenge am Ablassventil führt.

Gemäß einem weiteren Aspekt der vorliegenden Erfindung, der mit den vorhergehenden Aspekten und beispielhaften Ausführungen kombinierbar ist, ist eine Vorrichtung zum Aufbereiten eines Prozess- oder Industriemediums, insbesondere eines wässrigen Prozess- oder Industriemediums, insbesondere einer kohlenwasserstoffhaltigen Emulsion, bereitgestellt. Die Vorrichtung umfasst einen Wärmetauscher, der dazu eingerichtet ist, aus dem Prozess- oder Industriemedium ein unter Überdruck stehendes Destillat bereitzustellen, das zumindest Wasser und eine weniger dichte Leichtphase enthält, und eine in Fluidverbindung mit dem Wärmetauscher stehende Trennkammer, in der ein Koaleszenzorgan angeordnet und die Leichtphase von Wasser abzusondern ist. Gemäß dem weiteren Erfindungsaspekt ist ein Leichtphasenauslass derart an der Trennkammer angeordnet, dass die aus dem Destillat abzusondernde Leichtphase entgegen der Gravitationsrichtung aus der Trennkammer abgezogen wird. Insbesondere soll die Leichtphase beim Abziehen aus der Trennkammer zumindest eine Strömungsrichtungskomponente aufweisen, die parallel zur Gravitationsrichtung, vorzugsweise entgegen der Gravitationsrichtung, gerichtet ist. Insbesondere soll die Leichtphase ohne Energie, insbesondere externe Energie, aufzuwenden aus der Trennkammer abgezogen werden. Insbesondere setzt sich der in dem Wärmetauscher wirkende Überdruck in die Trennkammer fort, sodass die Leichtphase in der Trennkammer unter Überdruck steht. Beispielsweise einen Überdruck von 30 mbar gegenüber der Atmosphäre aufweist. Insbesondere herrscht über den Leichtphasenauslass ein Druckgefälle, insbesondere von wenigstens 30 mbar. Durch das Druckgefälle kann die Leichtphase entgegen der Gravitationsrichtung aus der Trennkammer abgezogen werden. Beispielsweise ist der Leichtphasenauslass an einem in Gravitationsrichtung oberen Ende der Trennkammer angeordnet. Insbesondere umfasst die Trennkammer ein Gehäuse, in dem das Koaleszenzorgan angeordnet ist und sich die Leichtphase vom Wasser absondert. Durch die geringere Dichte der Leichtphase im Vergleich zu Wasser, kann diese entgegen der Gravitationskraft in der Trennkammer aufsteigen und auf dem Wasser aufschwimmen.

Vorzugsweise ist das Gehäuse der Trennkammer vollständig mit Fluid, insbesondere Leichtphase und Wasser, gefüllt, vorzugsweise luftleer. Die Leichtphase kann somit an einer im Einbauzustand in Gravitationsrichtung oberen Begrenzungswand der Trennkammer anliegen. Beispielsweise ist der Leichtphasenauslass an der oberen Begrenzungswand der Trennkammer, insbesondere als Durchgangsbohrung, vorgesehen. Das Abziehen der Leichtphase entgegen der Gravitationsrichtung bietet den Vorteil, dass die Leichtphase ohne Aufwändige Konstruktionen wie Überläufe oder dergleichen vom Wasser abgetrennt bzw. abgeschöpft werden kann, da die Leichtphase ohnehin auf dem Wasser aufschwimmt.

Beispielsweise handelt es sich bei Prozess- oder Industriemedien um Abwässer oder Brauchwasser, das im Zyklus einer Anlage regelmäßig gereinigt wird, aus industriellen Anlagen oder von der Herstellung von Produkten. Ein Prozess- oder Industriemedium ist in vielen Fällen mit Leichtphasen, wie mit Ölen oder Salzen und Waschsubstanzen oder dergleichen, versetztes Wasser. Beispiele dafür sind Kühlschmieremulsionen, Druckgussemulsionen, Bodenreinigungswasser, Wasch- und Entfettungsbäder, Spülbäder oder Lackiervorbehandlungen sowie Abwässer aus Beizverfahren zur Oberflächenbehandlung von Metallen.

Der Wärmetauscher kann Teil einer Verdampfungsanlage sein, deren Aufbau beispielsweise aus der EP 4 438 149 A1 bekannt ist, wobei diese Anlage als unter Bezugnahme in der Beschreibung aufgenommen sein soll. Insbesondere ist unter dem Wärmetauscher eine Kondensationsseite des Wärmetauschers zu verstehen, in der unter Überdruck stehender Dampf, insbesondere Brüden, zu Destillat kondensiert. Insbesondere ist dem Wärmetauscher ein Verdampfer, der das Prozess- oder Industriemedium verdampft und ein Verdichter, der den entstehenden Dampf, insbesondere Brüden, verdichtet, vorgeschaltet. Beispielsweise kann es sich bei dem Verdampfer um einen sogenannten Vakuumverdampfer, der das Prozess- oder Industriemedium unter Unterdruck gegenüber atmosphärischem Druck, insbesondere im Vakuum, verdampft, handeln. Auch soll ein atmosphärischer Verdampfer als ein solcher Verdampfer verstanden werden, der das Prozess- oder Industriemedium unter atmosphärischem Druck, insbesondere im Bereich von +- 100 mbar gegenüber atmosphärischem Druck, verdampft. Es kann sich auch um einen Überdruckverdampfer, der das Prozess- oder Industriemedium unter Überdruck gegenüber atmosphärischem Druck, verdampft, handeln. Insbesondere ist der Verdampfer dazu eingerichtet, Feststoffe und/oder Schwerphasen, die insbesondere eine höhere Dichte als Wasser aufweisen, von dem Prozess- oder Industriemedium abzuscheiden.

Der Verdichter kann dazu eingerichtet sein, den im Verdampfer entstehenden Dampf, insbesondere Brüden, so stark zu verdichten, dass dieser einen Überdruck gegenüber dem atmosphärischen Druck aufweist, insbesondere unabhängig vom Druck des Dampfes vor dem Verdichter. Insbesondere ist ein Bereich des Wärmetauschers, vorzugsweise ein Gehäuse, in dem sich das Destillat sammelt, hermetisch, insbesondere gegenüber der Atmosphäre, abgedichtet. Insbesondere steht das Destillat im Wärmetauscher unter dem Überdruck, den ein vorgeschalteter Verdichter erzeugt.

Insbesondere kann das Destillat ein wässriges Medium sein, das vorzugsweise größtenteils aus Wasser besteht. Insbesondere kann das Destillat neben Wasser und Leichtphase weitere Stoffe und/oder Schwerphasen enthalten, wie beispielsweise Salze oder Feststoffe. Das Destillat kann eine oder mehrere Leichtphasen, wie Kohlenwasserstoffe, beispielsweise Öle, Benzin, Diesel, Kerosin oder dergleichen, deren Dichte geringer als die von Wasser ist, aufweisen. Beispielsweise kann das Destillat in seiner Zusammensetzung dem Prozess- oder Industriemedium entsprechen, insbesondere ohne darin befindliche Feststoffe und/oder Schwerphasen, die eine höhere Dichte im Vergleich zu Wasser aufweisen.

Die Trennkammer kann über eine Fluidleitung mit dem Wärmetauscher verbunden sein. Insbesondere ist die Trennkammer stromabwärtig des Wärmetauschers angeordnet. Vorzugsweise ist die Fluidverbindung überdruckerhaltend ausgebildet. Darunter ist insbesondere zu verstehen, dass in der Fluidverbindung zwischen Wärmetauscher und Trennkammer keine druckmindernden Maßnahmen, wie Ventile und/oder Drosseln, vorgesehen sind. Die Fluidverbindung kann es dem Destillat ermöglichen, aus dem Wärmetauscher in die Trennkammer zu strömen.

Vorzugsweise ist die Trennkammer, insbesondere im Betrieb der Vorrichtung, luftleer, vorzugsweise vollständig mit Fluid, insbesondere Destillat, beziehungsweise Wasser und Leichtphase, gefüllt. Insbesondere ist das Koaleszenzorgan stromaufwärtig in der Trennkammer angeordnet, sodass einströmendes Destillat durch das Koaleszenzorgan in die Trennkammer strömt. Vorzugsweise ist das Koaleszenzorgan dazu eingerichtet, das Destillat in Wasser und Leichtphase zu trennen. Es ist möglich, dass im Wasser in der Trennkammer weitere Verunreinigungen oder nicht abgesonderte Leichtphasen vorliegen. Vorzugsweise sind in der Trennkammer zumindest 80 %, insbesondere wenigstens 90 %, insbesondere Gewichtsprozent oder Volumenprozent, der im Destillat vorliegenden Leichtphase vom Wasser abzusondern. Insbesondere beruhigt ein stromaufwärtiger Bereich des Koaleszenzorgans das einströmende Destillat. In einem Koaleszenzbereich des Koaleszenzorgans, kann dieses dafür sorgen, dass im Destillat in Tröpfchen vorliegende Leichtphasen zu größeren Tropfen koaleszieren, insbesondere verbinden, insbesondere wenn sie den Koaleszenzbereich durchströmen. Vorzugsweise wird dieser Vorgang als Koaleszenzprozess verstanden. Stromabwärts des Koaleszenzorgans, insbesondere des Koaleszenzbereichs, kann die koaleszierte Leichtphase aufgrund der geringeren Dichte in Bezug auf das Wasser, in diesem aufsteigen, insbesondere darauf aufschwimmen. Die Leichtphase kann sich somit vom Wasser in der Trennkammer, insbesondere stromabwärtig des Koaleszenzorgans absondern, insbesondere aufschwimmen. Die Leichtphase steigt entgegen der Gravitationskraft in der Trennkammer auf und sammelt sich am oberen Ende der Trennkammer. Beispielsweise kann das Koaleszenzorgan als Koaleszenzkerze ausgestaltet sein. Insbesondere umfasst das Koaleszenzorgan ein hydrophobes, insbesondere superhydrophobes, und/oder lipophiles Material. Beispielsweise als Endlosfaden um einen Stützkern gewickeltes Filterelement. Vorzugsweise umfasst das Koaleszenzorgan faserige Materialien, wie Kunststofffäden, beispielsweise aus Polypropylen, Polyester oder Nylon und/oder Naturfäden, beispielsweise aus Baumwolle und/oder Metallfäden, beispielsweise aus Edelstahl und/oder Glasfasern.

Gemäß einer beispielhaften Ausführung der vorliegenden Erfindung weist der Leichtphasenauslass ein insbesondere elektronisch ansteuerbares Ablassventil auf. Beispielsweise kann es sich bei dem Ablassventil um ein elektrisches, hydraulisches und/oder pneumatisches Ventil handeln. Vorzugsweise kann das Ablassventil den Leichtphasenauslass hermetisch verschließen. Insbesondere ist das Ablassventil dazu eingerichtet, die Strömung durch das Ventil zu drosseln, zu begrenzen und/oder einzustellen. Das Ablassventil bietet den Vorteil, dass das Ablassen von Leichtphase aus der Trennkammer nach Bedarf geregelt werden kann.

Gemäß einer beispielhaften Ausführung der vorliegenden Erfindung weist die Trennkammer einen Leichtphasensammelbereich auf, der insbesondere oberhalb des Koaleszenzorgans oder des Bereichs, in dem die Leichtphase koalesziert angeordnet ist. Der Leichtphasensammelbereich soll insbesondere in Gravitationsrichtung im Einbauszustand der Trennkammer oberhalb des Koaleszenzorgans oder des Bereichs, in dem die Leichtphase koalesziert angeordnet sein. Insbesondere soll die aufsteigende Leichtphase in dem Leichtphasenbereich gesammelt werden, sodass ein Abziehen der Leichtphase vereinfacht ist. Beispielsweise weist der Leichtphasensammelbereich einen sich verjüngenden Querschnitt nach oben, in Gravitationsrichtung auf. Vorzugsweise ist der Leichtphasenauslass am oberen Ende des Leichtphasensammelbereichs vorgesehen.

Gemäß einer beispielhaften Ausführung der vorliegenden Erfindung umfasst das Gehäuse der Trennkammer einen unteren Grundkörper, vorzugsweise einen zylindrischen oder kastenartigen Grundkörper, an dessen oberen Ende ein nach oben vorstehender Sammelturm anschließt, in dem die Leichtphase gesammelt wird. Oben und unten sollen in Bezug auf Gravitationsrichtung im Einbauzustand der Trennkammer definiert sein. Vorzugsweise soll das Gehäuse derart ausgestaltet sein, dass es dem Überdruck des bereitgestellten Destillats standhalten kann und zusätzlich dem hydrostatischen Druck des in dem Gehäuse befindlichen Fluids. Insbesondere ist das Gehäuse der Trennkammer aus Metall oder Kunststoff gefertigt. Vorzugsweise weist das Gehäuse eine Materialstärke von wenigstens 1 mm, insbesondere wenigstens 2 mm, vorzugsweise wenigstens 3 mm auf. In dem Grundkörper kann das Koaleszenzorgan angeordnet sein. Beispielsweise kann an dem Grundkörper ein Sichtfenster vorgesehen sein. Vorzugsweise sind der Grundkörper und der Sammelturm einstückig ausgeführt. Insbesondere schließt der Sammelturm derart an den Grundkörper an, dass keine Trennung zwischen den beiden besteht, insbesondere die Leichtphase ungehindert vom Grundkörper aus in den Sammelturm aufsteigen kann. Insbesondere weist ein zylindrischer Grundkörper eine Längsachse auf, die sich im Einbauzustand der Trennkammer senkrecht zur Gravitationsrichtung erstreckt. Beispielsweise ist der Grundkörper rotationssymmetrisch bezüglich der Längsachse. Insbesondere weist ein kastenartiger Grundkörper eine rechteckige, insbesondere quadratische Grundfläche auf. Der Sammelturm kann zylindrisch ausgeführt sein, wobei die Längsachse parallel zur Gravitationsrichtung liegt. Insbesondere liegt die Längsachse des Sammelturms senkrecht zur Längsachse des zylindrischen Grundkörpers. Beispielsweise kann zwischen Sammelturm und Grundkörper ein Verbindungsabschnitt vorgesehen sein, der sich vom Grundkörper aus zum Sammelturm hin verjüngt. Vorzugsweise ist der Leichtphasensammelbereich im Sammelturm vorgesehen. Insbesondere ist am Sammelturm der Leichtphasenauslass angeordnet, vorzugsweise am oberen Ende. Das Vorsehen von Grundkörper und Sammelturm bietet den Vorteil, dass der Vorgang des Koaleszierens der Leichtphase im Grundkörper unter ausreichend Platz geschehen kann, wobei die aufsteigende Leichtphase an einer Stelle aufkonzentriert wird, da diese einen wesentlich geringeren Anteil am Destillat ausmacht. Vom Sammelturm ist es leichter möglich, die Leichtphase vom Wasser abzuziehen.

Gemäß einer beispielhaften Ausführung der vorliegenden Erfindung ist der Sammelturm am oberen Ende domförmig, insbesondere kuppelförmig, ausgestaltet. Das obere Ende des Sammelturms ist im Einbauzustand der Trennkammer in Gravitationsrichtung definiert. Unter domförmig kann verstanden werden, dass sich der Querschnitt zum oberen Ende hin verjüngt. Insbesondere ist der Leichtphasenauslass der Trennkammer am obersten Punkt des domförmigen Endes angeordnet. Die domförmige Ausgestaltung des Sammelturms ermöglicht es, die aufschwimmende Leichtphase auf einen Punkt zu konzentrieren, sodass selbst kleine Mengen zielgerichtet abgezogen werden können.

Gemäß einer beispielhaften Ausführung der vorliegenden Erfindung ist in dem Leichtphasensammelbereich oder Sammelturm ein Sensor angeordnet ist, der dazu eingerichtet ist, die Leichtphase von Wasser und von Luft zu unterscheiden. Insbesondere ist der Sensor am Gehäuse der Trennkammer angeordnet und ragt in den Leichtphasensammelbereich oder den Sammelturm hinein. Insbesondere stellt der Sensor ein Ausgangssignal bereit, anhand dessen die vorliegende Phase bestimmt werden kann. Beispielsweise gibt der Sensor ein Signal mit einem Wert zwischen 0 und 1 aus, vorzugsweise mit zwei Dezimalstellen. Jeder der Phasen, Leichtphase, Wasser und Luft, kann ein korrespondierender Wertebereich zugeordnet werden. Durch Vergleich des vom Sensor ausgegebenen Werts mit den Wertebereichen der einzelnen Phasen kann auf die am Sensor vorliegende Phase geschlossen werden. Insbesondere basiert der Sensor auf dem Prinzip des Impedanzspektroskopie-Verfahrens, jedoch ist auch jedes andere Prinzip denkbar, mittels dem Leichtphase von Luft und Wasser unterschieden werden kann. Es ist denkbar, dass ein optischer Sensor eingesetzt wird. Beispielsweise handelt es sich bei dem Sensor um einen binären Füllstandsensor des Typs LMTx0x, LMTx1x, oder LMTx2x der Firma ifm electronic GmbH. Der Sensor bietet den Vorteil, im Initialisierungsbetrieb der Anlage, solange die Trennkammer nicht mit Destillat bzw. Wasser und Leichtphase gefüllt ist, zu erfassen, wann die Trennkammer vollständig gefüllt, bzw. luftleer ist und der Initialisierungsbetrieb abgeschlossen ist. Andererseits bietet der Sensor den Vorteil, dass das Vorliegen von Leichtphase erfasst werden kann und somit ein Abziehen derselben initiiert werden kann. Des Weiteren kann auch das Ende des Abziehens bestimmt werden, sobald Wasser am Sensor vorliegt, und keine Leichtphase mehr.

Gemäß einer beispielhaften Ausführung der vorliegenden Erfindung ist ein stromaufwärtig der Trennkammer angeordneter Sensor, wie ein Füllstandsensor, dazu eingerichtet, insbesondere im Wärmetauscher, eine Menge des vom Wärmetauscher bereitgestellten Destillats zu erfassen. Beispielsweise kann der Sensor in dem Wärmetauscher angeordnet sein. Der Sensor kann auch in einem Behälter vorgesehen sein, der derart mit dem Wärmetauscher in Fluidverbindung steht, dass aus der in dem Behälter vorliegenden Menge von Destillat auf die im Wärmetauscher vorliegende Mengen von Destillat geschlossen werden kann. Insbesondere kann der Sensor den Füllstand im Wärmetauscher erfassen. Beispielsweise kann ein optischer Sensor eingesetzt werden oder ein elektrischer Sensor. Insbesondere ein Sensor, der auf dem Prinzip einer geführten Mikrowelle basiert. Insbesondere kann mittels der Erfassten Menge an vorliegendem Destillat ein Durchsatz an Destillat durch die Vorrichtung, insbesondere die Trennkammer geregelt bzw. angepasst werden.

Gemäß einer beispielhaften Ausführung der vorliegenden Erfindung weist das Koaleszenzorgan ein, insbesondere zylindrisches, Koaleszenzgehäuse auf. Das Koaleszenzgehäuse kann an einen Trennkammereinlass anschließen. Insbesondere kann das Koaleszenzgehäuse an einer Aufnahme im Gehäuse der Trennkammer vorgesehen sein, und vorzugsweise von außerhalb der Trennkammer zugänglich sein. Insbesondere ist das Koaleszenzgehäuse derart lösbar mit dem Gehäuse der Trennkammer verbunden, dass es ausgetauscht werden kann. Insbesondere ragt das Koaleszenzgehäuse in die Trennkammer hinein. Beispielsweise kann das Koaleszenzgehäuse einen Einlass aufweisen, der in Fluidverbindung mit dem Wärmetauscher steht. Insbesondere ist der Einlass derart an dem Koaleszenzgehäuse angeordnet, dass das Destillat über den Einlass parallel zu einer Mittelachse des Koaleszenzgehäuses in dieses einströmt. Vorzugsweise strömt das Destillat senkrecht zur Einströmrichtung, insbesondere radial nach außen von der Mittelachse, aus dem Koaleszenzgehäuse aus, insbesondere in die Trennkammer. Insbesondere kann das Koaleszenzgehäuse in einem weiteren, insbesondere hermetisch abgedichteten Gehäuse in der Trennkammer vorgesehen sein. Beispielsweise ist das Koaleszenzgehäuse hohlzylindrisch ausgeführt. Insbesondere kann das Destillat, insbesondere strömungsberuhigt, in das hohlzylindrische Koaleszenzgehäuse einströmen und wird radial nach außen aus dem Koaleszenzgehäuse gedrückt. Insbesondere ist an der Außenseite des Koaleszenzgehäuses, insbesondere in dem Bereich, der in die Trennkammer ragt, ein Koaleszenzmaterial angeordnet. In dem Koaleszenzgehäuse kann ein Koaleszenzmaterial vorgesehen sein. Insbesondere kann in dem Koaleszenzgehäuse und an dessen Außenseite ein Koaleszenzmaterial vorgesehen sein. Beispielsweise ist das Koaleszenzgehäuse in dem Bereich, der innerhalb der Trennkammer angeordnet ist, durch das Koaleszenzmaterial gebildet. Es kann vorgesehen sein, dass innerhalb des Koaleszenzgehäuses ein anderes Koaleszenzmaterial vorgesehen ist als an der Außenseite des Koaleszenzgehäuses. Insbesondere bildet das Koaleszenzmaterial den Koaleszenzbereich des Koaleszenzorgans. Insbesondere dient das Koaleszenzgehäuse als Träger des Koaleszenzmaterials. In dem Koaleszenzbereich können im Destillat in Tröpfchen vorliegende Leichtphasen zu größeren Tropfen koaleszieren, insbesondere sich verbinden, insbesondere wenn sie den Koaleszenzbereich durchströmen. Stromabwärts des Koaleszenzorgans, insbesondere des Koaleszenzbereichs, kann die koaleszierte Leichtphase aufgrund der geringeren Dichte in Bezug auf das Wasser, in diesem aufsteigen, insbesondere darauf aufschwimmen. Die Leichtphase kann sich somit vom Wasser in der Trennkammer, insbesondere stromabwärtig des Koaleszenzorgans absondern, insbesondere ausfallen. Die Leichtphase steigt entgegen der Gravitationskraft in der Trennkammer auf und sammelt sich am oberen Ende der Trennkammer. Beispielsweise kann das Koaleszenzorgan als Koaleszenzkerze ausgestaltet sein. Beispielsweise kann ein Endlosfaden als Koaleszenzmaterial um das Koaleszenzgehäuse gewickelt sein. Insbesondere ist das Koaleszenzmaterial ein hydrophobes, insbesondere superhydrophobes, und/oder lipophiles Material. Vorzugsweise umfasst das Koaleszenzmaterial faserige Materialien, wie Kunststofffäden, beispielsweise aus Polypropylen, Polyester oder Nylon und/oder Naturfäden, beispielsweise aus Baumwolle und/oder Metallfäden, beispielsweise aus Edelstahl und/oder Glasfasern. Das Koaleszenzgehäuse bietet den Vorteil, dass das in die Trennkammer einströmende Destillat bzw. die Leichtphase koalesziert und sich somit vom Wasser absondern kann.

Gemäß einer beispielhaften Ausführung der vorliegenden Erfindung umfasst die Trennkammer zumindest ein Sichtfenster, das derart an der Trennkammer angeordnet ist, dass das Koaleszenzorgan oder der Füllstand von einer aus dem Destillat abgeschiedenen Leichtphase in der Trennkammer, von außerhalb der Trennkammer visuell erfasst werden kann. Insbesondere ist das Sichtfenster druckdicht, insbesondere hermetisch abgedichtet, mit dem Gehäuse der Trennkammer verbunden. Das Sichtfenster kann beispielsweise aus Glas oder Kunststoff, wie Plexiglas gefertigt sein. Insbesondere ist das Sichtfenster rund ausgeführt. Beispielsweise kann das Sichtfenster derart an dem Gehäuse der Trennkammer angeordnet sein, dass der Bereich des Koaleszenzorgans, der in die Trennkammer hineinragt von außen sichtbar ist. Beispielsweise kann das Sichtfenster auch am Sammelturm oder Leichtphasensammelbereich des Gehäuses der Trennkammer vorgesehen sein. Beispielsweise kann dadurch ermöglicht werden, dass der im Sammelturm oder Leichtphasensammelbereich angeordnete Sensor inspiziert werden kann. Insbesondere kann über das Sichtfenster am Sammelturm oder Leichtphasensammelbereich der Füllstand der Leichtphase abgelesen werden. Beispielsweise ist am Sichtfenster eine Skala vorgesehen. Insbesondere kann die Skala derart vorgesehen sein, dass anhand der Position der Phasengrenze zwischen Leichtphase und Wasser in Gravitationsrichtung in der Trennkammer eine Menge von vorliegender Leichtphase abgelesen werden kann.

Gemäß einer beispielhaften Ausführung der vorliegenden Erfindung ist eine zweite, in Fluidverbindung mit der Trennkammer, die eine erste Trennkammer darstellt, stehende, insbesondere nach einem der vorstehenden Aspekte und/oder beispielhaften Ausführungen ausgestaltete, Trennkammer, in der ein Koaleszenzorgan angeordnet, und eine Leichtphase von Wasser abzusondern ist, stromabwärts der ersten Trennkammer vorgesehen. Die zweite Trennkammer kann beispielsweise über eine Fluidleitung mit der ersten Trennkammer verbunden sein. Insbesondere ist ein Wasserauslass der ersten Trennkammer mit dem Einlass der zweiten Trennkammer verbunden. Insbesondere ist das Koaleszenzorgan der zweiten Trennkammer stromaufwärtig in der zweiten Trennkammer angeordnet, sodass das Wasser aus der ersten Trennkammer das Koaleszenzorgan durchströmt, um in die zweite Trennkammer zu gelangen. Insbesondere ragt das Koaleszenzorgan in die zweite Trennkammer hinein. Vorzugsweise sind die beiden Trennkammern ausgehend vom Wärmetauscher in Strömungsrichtung hintereinander geschalten. Insbesondere durchströmt das Destillat zuerst die erste Trennkammer und das darin angeordnete Koaleszenzorgan und anschließend die zweite Trennkammer und das darin angeordnete Koaleszenzorgan. Insbesondere wird das Strömen des Destillats durch die erste und die zweite Trennkammer von einem stromabwärtig der zweiten Trennkammer angeordneten Ablassventil begrenzt. Insbesondere weist die zweite Trennkammer die gleichen Merkmale wie die erste Trennkammer auf. Insbesondere ist die zweite Trennkammer hermetisch gegenüber der Atmosphäre abgedichtet. Insbesondere können weitere Trennkammern stromabwärts der zweiten Trennkammer angeordnet sein. Insbesondere ist denkbar, dass an der stromabwärtigsten Trennkammer ein Wasserablassventil vorgesehen ist, mittels dem die Strömung des Destillats durch alle Trennkammern gesteuert und/oder geregelt wird. Durch die zwei Trennkammern kann eine zweifache Reinigung durch zwei nacheinander geschaltete Koaleszenzorgane erreicht werden. Dies führt zu einer verbesserten Leichtphasenabscheidung aus dem Destillat.

Gemäß einer beispielhaften Ausführung der vorliegenden Erfindung ist die zweite Trennkammer derart, insbesondere überdruckerhaltend, mit der ersten Trennkammer verbunden, dass der in dem Wärmetauscher und/oder der in der ersten Trennkammer wirkende Überdruck, vorzugsweise hydraulisch durch das Wasser, so verlustfrei wie möglich in die zweite Trennkammer fortgesetzt oder übertragen wird. Darunter ist eine möglichst drosselfreie Verbindung zu verstehen, dass sich eine laminare oder druckverlustfreie Strömung von der ersten Trennkammer hin zu dem vorgeschalteten Koaleszenzorgan der zweiten Trennkammer etablieren kann, insbesondere wenn ein Ablassventil der zweiten Trennkammer geöffnet ist. Insbesondere ist die zweite Trennkammer derart ausgebildet, dass sich der Überdruck aus dem Wärmetauscher und/oder aus der ersten Trennkammer in der zweiten Trennkammer aufbauen kann und über einen längeren Zeitraum, insbesondere konstant, gehalten werden kann. Dadurch kann eine Spontanverdampfung des Wassers im Destillat vom Wärmetauscher über die erste Trennkammer zum Koaleszenzorgan der zweiten Trennkammer vermieden werden. Ein Überdruckverlust vom Wärmetauscher und/oder von der ersten Trennkammer in die zweite Trennkammer soll möglichst gering sein, jedoch nicht mehr als 90 %, insbesondere weniger als 80 %, weniger als 70 %, weniger als 60 %, weniger als 50 %, weniger als 40 %, weniger als 30 %, weniger als 20 %, vorzugsweise weniger als 10 % betragen. Überdruckverluste, die durch Querschnittsänderung der Leitung oder Reibungs- und/oder Strömungsverluste im Destillat in der Fluidverbindung von der ersten Trennkammer zur zweiten Trennkammer auftreten, können hingenommen werden. In der zweiten Trennkammer soll ein Überdruck von wenigstens 10 % des in dem Wärmetauscher und/oder der ersten Trennkammer wirkenden Überdrucks wirken. Überdruck bedeutet im Sinne der vorliegenden Erfindung Überdruck gegenüber atmosphärischem Druck, insbesondere der in der Umgebung der Vorrichtung vorliegende atmosphärische Druck. Insbesondere bezieht sich der Überdruck auf den absoluten Druck ohne hydrostatischen Anteil von Destillat und/oder Wasser und Leichtphase. Beispielsweise ist der Überdruck im Wärmetauscher am Auslass des Wärmetauschers, über den das Destillat zur Trennkammer strömt, erfasst. Insbesondere ist der Überdruck in der ersten Trennkammer am Einlass der Trennkammer, vorzugsweise stromaufwärts des Koaleszenzorgans erfasst oder an einem in Gravitationsrichtung oberen Ende in der ersten Trennkammer oder am Wasserauslass erfasst. Insbesondere ist der Überdruck in der zweiten Trennkammer am Einlass der Trennkammer, vorzugsweise stromaufwärts des Koaleszenzorgans erfasst oder an einem in Gravitationsrichtung oberen Ende in der zweiten Trennkammer erfasst. Vorzugsweise setzt sich der in dem Wärmetauscher wirkende Überdruck über das Destillat in die erste Trennkammer und über die erste Trennkammer in die zweite Trennkammer, insbesondere uneingeschränkt, fort. Vorzugsweise mindert sich der Überdruck im Destillat nur durch Querschnittsänderungen der Leitung oder Reibungs- und/oder Strömungsverluste des Destillats vom Wärmetauscher bis in die zweite Trennkammer. Insbesondere wirkt im Wärmetauscher ein Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Insbesondere wirkt in der ersten Trennkammer ein Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Insbesondere wirkt in der zweiten Trennkammer ein Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Insbesondere wirkt der Überdruck von wenigstens 10 % des in dem Wärmetauscher oder des in der ersten Trennkammer wirkenden Überdrucks in der zweiten Trennkammer in einem Betriebszustand der Vorrichtung, in dem kein Fluid aus der zweiten Trennkammer ausströmen kann oder Fluid nur gedrosselt aus der zweiten Trennkammer ausströmen kann, insbesondere derart, dass ein Staudruck beim Ausströmen entsteht. Insbesondere wird der Überdruck in der ersten und der zweiten Trennkammer ausschließlich durch wenigstens ein Ablassventil und/oder eine Drossel, stromabwärts des Koaleszenzorgans der ersten und/oder der zweiten Trennkammer entspannt, damit insbesondere eine Spontanverdampfung des Wassers in Strömungsrichtung betrachtet stromaufwärts des Koaleszenzorgans und des Trennvorgangs zwischen Wasser und Leichtphase in der ersten Trennkammer und der zweiten Trennkammer unterbunden werden kann. Insbesondere ist der Überdruck in der ersten und der zweiten Trennkammer im Bereich des Koaleszenzorgans dann zu messen, wenn das Ablassventil / die Drossel geschlossen ist. Durch das Aufrechterhalten des Überdrucks aus dem Wärmetauscher bis in die zweite Trennkammer, insbesondere über das Koaleszenzorgan der ersten Trennkammer und der zweiten Trennkammer, ergibt sich der Vorteil, dass es nicht durch rasche Druckentspannung zu einer Spontanverdampfung des Wassers kommt, solange die Leichtphase nicht von Wasser getrennt ist, sprich im Destillat.

Bei einer Spontanverdampfung des Wassers im Destillat wird das Destillat stark durchmischt, sodass die Leichtphase stärker emulgiert und es erschwert ist, diese mittels des Koaleszenzorgans abzusondern. Insbesondere ist die Wirkung des Koaleszenzorgans besonders gut, wenn dort strömungsberuhigtes Destillat einströmt, dessen Druck sich vor und während des Prozesses des Koaleszierens ändert.

Gemäß einer beispielhaften Ausführung der vorliegenden Erfindung wirkt in der zweiten Trennkammer ein Überdruck von wenigstens 20 %, insbesondere wenigstens 30 %, wenigstens 40 %, wenigsten 50 %, wenigsten 60 %, wenigsten 70 %, wenigsten 80 %, oder wenigstens 90 %, des in dem Wärmetauscher oder des in der ersten Trennkammer wirkenden Überdrucks. Insbesondere wirkt in der zweiten Trennkammer ein Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Besonders bevorzugt wirkt in der zweiten Trennkammer der Überdruck des in dem Wärmetauscher oder des in der ersten Trennkammer wirkenden Überdrucks nur abzüglich von Strömungsverlusten, die das Destillat beim Strömen vom Wärmetauscher in die erste Trennkammer und/oder beim Strömen von der ersten Trennkammer in die zweite Trennkammer in der Fluidleitung erfährt. Besonders vorteilhaft ist es, wenn der Druckverlust des Überdrucks vom Wärmetauscher in die zweite Trennkammer möglichst gering ist, sodass ein insbesondere weiteres Vermischen des Destillats bzw. des Wassers und der Leichtphase aufgrund von Druckentspannung unterbunden werden kann. Dies kann die Effizienz der Abscheidung bzw. des Koaleszierens der Leichtphase steigern und die Reinigung des Wassers verbessern.

Gemäß einer beispielhaften Ausführung der vorliegenden Erfindung wirkt der in dem Wärmetauscher oder der in der ersten Trennkammer wirkende Überdruck uneingeschränkt in der zweiten Trennkammer. Darunter ist insbesondere zu verstehen, dass sich der Überdruck aus dem Wärmetauscher über das Destillat und/oder das Wasser in die erste und die zweite Trennkammer fortsetzt, ohne dass beispielsweise Ventile und/oder Drosseln in der Fluidverbindung vorgesehen sind, die druckmindernd wirken. Dadurch kann erreicht werden, dass der in der zweiten Trennkammer wirkende Überdruck möglichst dem in dem Wärmetauscher oder dem in der ersten Trennkammer wirkenden Überdruck entspricht. Insbesondere findet keine Druckentspannung des Destillats stromaufwärts des Koaleszierens der Leichtphase statt. Dies bietet den Vorteil, dass eine Spontanverdampfung des Wassers im Destillat verhindert wird.

Gemäß einer beispielhaften Ausführung der vorliegenden Erfindung entspricht die von der zweiten Trennkammer abzusondernde Leichtphase, der in der ersten Trennkammer abzusondernden Leichtphase oder einer andere in dem Destillat vorhandenen Leichtphase. Insbesondere kann es vorgesehen sein, dass in der ersten Trennkammer eine erste Leichtphase vom Destillat abzusondern ist und in der zweiten Trennkammer die gleiche Leichtphase abzusondern ist. Beispielsweise kann das Koaleszenzorgan beider Trennkammern das gleiche Material umfassen. Es kann auch vorgesehen sein, dass in der ersten Trennkammer eine erste Leichtphase aus dem Destillat abzusondern ist und in der zweiten Trennkammer ein zweite Leichtphase aus dem Destillat abzusondern ist. Insbesondere kann sich das Material des Koaleszenzorgans in der ersten Trennkammer von dem Material des Koaleszenzorgans in der zweiten Trennkammer unterscheiden. Dies bietet den Vorteil, dass das Destillat verschiedene Koaleszenzorgane durchläuft und somit eine zielgerichtetere Absonderung durch speziell gewählte Koaleszenzmaterialien erfolgen kann.

Gemäß einem weiteren Aspekt der vorliegenden Erfindung, der mit den vorhergehenden Aspekten und beispielhaften Ausführungen kombinierbar ist, ist eine Vorrichtung zum Steuern und/oder Regeln einer Vorrichtung, insbesondere nach einem der vorstehenden Aspekte und/oder beispielhaften Ausführungen, zum Aufbereiten eines Prozess- oder Industriemediums, insbesondere eines wässrigen Prozess- oder Industriemediums, insbesondere einer kohlenwasserstoffhaltigen Emulsion, bereitgestellt. Die Vorrichtung umfasst einen Wärmetauscher, der dazu eingerichtet ist, aus dem Prozess- oder Industriemedium ein unter Überdruck stehendes Destillat bereitzustellen, das zumindest Wasser und eine weniger dichte Leichtphase enthält. Die Vorrichtung umfasst ferner einen, insbesondere stromaufwärtig der Trennkammer angeordneten, Sensor, insbesondere einen Füllstandsensor, zum Erfassen einer Menge des von dem Wärmetauscher bereitgestellten Destillats. Ferner umfasst die Vorrichtung eine in Fluidverbindung mit dem Wärmetauscher stehende Trennkammer, in der ein Koaleszenzorgan angeordnet und die Leichtphase von Wasser abzusondern ist. Des Weiteren umfasst die Vorrichtung eine Steuer- und/oder Regeleinrichtung, die anhand der erfassten Destillatmenge ein Steuersignal erzeugt, und ein stromabwärtig der Trennkammer angeordnetes und mit dieser in Fluidverbindung stehendes Ablassventil, das anhand des Steuersignals der Steuer- und/oder Regeleinrichtung einstellbar ist.

Beispielsweise handelt es sich bei Prozess- oder Industriemedien um Abwässer oder Brauchwasser, das im Zyklus der Anlage regelmäßig gefiltert wird, aus industriellen Anlagen oder von der Herstellung von Produkten. Ein Prozess- oder Industriemedium ist in vielen Fällen mit Leichtphasen, wie mit Ölen, Salzen, Waschmittel oder dergleichen, versetztes Wasser. Beispiele dafür sind Kühlschmieremulsionen, Druckgussemulsionen, Bodenreinigungswasser, Wasch- und Entfettungsbäder, Spülbäder oder Lackiervorbehandlungen sowie Abwässer aus Beizverfahren zur Oberflächenbehandlung von Metallen.

Der Wärmetauscher kann Teil einer Verdampfungsanlage sein, deren Aufbau beispielsweise aus der EP 4 438 149 A1 bekannt ist, wobei diese Anlage als unter Bezugnahme in der Beschreibung aufgenommen sein soll. Insbesondere ist unter dem Wärmetauscher eine Kondensationsseite des Wärmetauschers zu verstehen, in der unter Überdruck stehender Dampf, insbesondere Brüden, zu Destillat kondensiert. Insbesondere ist dem Wärmetauscher ein Verdampfer, der das Prozess- oder Industriemedium verdampft und ein Verdichter, der den entstehenden Dampf, insbesondere Brüden, verdichtet, vorgeschaltet. Beispielsweise kann es sich bei dem Verdampfer um einen sogenannten Vakuumverdampfer, der das Prozess- oder Industriemedium unter Unterdruck gegenüber atmosphärischem Druck, insbesondere im Vakuum, verdampft, handeln. Auch soll ein atmosphärischer Verdampfer als ein solcher Verdampfer verstanden werden, der das Prozess- oder Industriemedium unter atmosphärischem Druck, insbesondere im Bereich von +- 100 mbar gegenüber atmosphärischem Druck, verdampft. Es kann sich auch um einen Überdruckverdampfer, der das Prozess- oder Industriemedium unter Überdruck gegenüber atmosphärischem Druck, verdampft, handeln. Der Verdichter kann dazu eingerichtet sein, den im Verdampfer entstehenden Dampf, insbesondere Brüden, so stark zu verdichten, dass dieser einen Überdruck gegenüber dem atmosphärischen Druck aufweist, insbesondere unabhängig vom Druck des Dampfes vor dem Verdichter. Insbesondere ist ein Bereich des Wärmetauschers, vorzugsweise ein Gehäuse, in dem sich das Destillat sammelt, hermetisch, insbesondere gegenüber der Atmosphäre, abgedichtet. Insbesondere steht das Destillat im Wärmetauscher unter dem Überdruck, den ein vorgeschalteter Verdichter erzeugt. Das Destillat kann eine oder mehrere Leichtphasen, wie Kohlenwasserstoffe, beispielsweise Öle, Benzin, Diesel, Kerosin oder dergleichen, deren Dichte geringer als die des Wassers ist, aufweisen.

Insbesondere stellt der Wärmetauscher kontinuierlich unter Überdruck stehendes Destillat bereit, das sich bei geschlossenem Ablassventil in dem Wärmetauscher akkumuliert.

Die Trennkammer kann über eine Fluidleitung mit dem Wärmetauscher verbunden sein. Insbesondere ist die Trennkammer stromabwärtig des Wärmetauschers angeordnet. Das Destillat im Wärmetauscher kann allein über die Fluidverbindung in die Trennkammer aus dem Wärmetauscher ausströmen. Vorzugsweise ist die Fluidverbindung überdruckerhaltend ausgebildet. Darunter ist insbesondere zu verstehen, dass in der Fluidverbindung zwischen Wärmetauscher und Trennkammer keine druckmindernden Maßnahmen, wie Ventile und/oder Drosseln, vorgesehen sind. Die Fluidverbindung kann es dem Destillat ermöglichen, aus dem Wärmetauscher in die Trennkammer zu strömen. Vorzugsweise ist die Trennkammer, insbesondere im Betrieb der Vorrichtung, luftleer, vorzugsweise vollständig mit Fluid, insbesondere Destillat, beziehungsweise Wasser und Leichtphase, gefüllt. Insbesondere ist das Koaleszenzorgan stromaufwärtig in der Trennkammer angeordnet, sodass einströmendes Destillat durch das Koaleszenzorgan in die Trennkammer strömt. Vorzugsweise ist das Koaleszenzorgan dazu eingerichtet, das Destillat in Wasser und Leichtphase zu trennen. Insbesondere beruhigt ein stromaufwärtiger Bereich des Koaleszenzorgans das einströmende Destillat. In einem Koaleszenzbereich des Koaleszenzorgans, kann dieses dafür sorgen, dass im Destillat in Tröpfchen vorliegende Leichtphasen zu größeren Tropfen koaleszieren, insbesondere verbinden, insbesondere wenn sie den Koaleszenzbereich durchströmen. Stromabwärts des Koaleszenzorgans, insbesondere des Koaleszenzbereichs, kann die koaleszierte Leichtphase aufgrund der geringeren Dichte in Bezug auf das Wasser, in diesem aufsteigen, insbesondere darauf aufschwimmen. Die Leichtphase kann sich somit vom Wasser in der Trennkammer, insbesondere stromabwärtig des Koaleszenzorgans absondern, insbesondere ausfallen. Die Leichtphase steigt entgegen der Gravitationskraft in der Trennkammer auf und sammelt sich am oberen Ende der Trennkammer. Beispielsweise kann das Koaleszenzorgan als Koaleszenzkerze ausgestaltet sein. Insbesondere umfasst das Koaleszenzorgan ein hydrophobes, insbesondere superhydrophobes, und/oder lipophiles Material. Beispielsweise als Endlosfaden um einen Stützkern gewickeltes Filterelement. Vorzugsweise umfasst das Koaleszenzorgan faserige Materialien, wie Kunststofffäden, beispielsweise aus Polypropylen, Polyester oder Nylon und/oder Naturfäden, beispielsweise aus Baumwolle und/oder Metallfäden, beispielsweise aus Edelstahl und/oder Glasfasern. Der Wärmetauscher ist insbesondere derart, insbesondere überdruckerhaltend, mit der Trennkammer verbunden, dass der in dem Wärmetauscher wirkende Überdruck, vorzugsweise hydraulisch, so verlustfrei wie möglich in die Trennkammer fortgesetzt oder übertragen wird. Darunter ist eine möglichst drosselfreie Verbindung zu verstehen, dass sich eine laminare oder druckverlustfreie Strömung von dem Wärmetauscher hin zu dem vorgeschalteten Koaleszenzorgan etablieren kann. Insbesondere ist die Trennkammer derart ausgebildet, dass sich der Überdruck aus dem Wärmetauscher in der Trennkammer aufbauen kann und über einen längeren Zeitraum, insbesondere konstant, gehalten werden kann. Dadurch kann eine Spontanverdampfung des Wassers im Destillat vom Wärmetauscher zum Koaleszenzorgan vermieden werden. Ein Überdruckverlust vom Wärmetauscher in die Trennkammer soll möglichst gering sein, jedoch nicht mehr als 90 %, insbesondere weniger als 80 %, weniger als 70 %, weniger als 60 %, weniger als 50 %, weniger als 40 %, weniger als 30 %, weniger als 20 %, vorzugsweise weniger als 10 % betragen. Überdruckverluste, die durch Querschnittsänderung der Leitung oder Reibungs- und/oder Strömungsverluste im Destillat in der Fluidverbindung vom Wärmetauscher zur Trennkammer auftreten können hingenommen werden. In der Trennkammer soll ein Überdruck von wenigstens 10 % des in dem Wärmetauscher wirkenden Überdrucks wirken. Überdruck bedeutet im Sinne der vorliegenden Erfindung Überdruck gegenüber atmosphärischem Druck, insbesondere der in der Umgebung der Vorrichtung vorliegende atmosphärische Druck. Insbesondere bezieht sich der Überdruck auf den absoluten Druck ohne hydrostatischen Anteil von Destillat und/oder Wasser und Leichtphase. Beispielsweise ist der Überdruck im Wärmetauscher am Auslass des Wärmetauschers, über den das Destillat zur Trennkammer strömt, erfasst. Insbesondere ist der Überdruck in der Trennkammer am Einlass der Trennkammer, vorzugsweise stromaufwärts des Koaleszenzorgans erfasst oder an einem in Gravitationsrichtung oberen Ende in der Trennkammer erfasst. Vorzugsweise setzt sich der in dem Wärmetauscher wirkende Überdruck über das Destillat in die Trennkammer, insbesondere uneingeschränkt, fort. Vorzugsweise mindert sich der Überdruck im Destillat nur durch Querschnittsänderungen der Leitung oder Reibungs- und/oder Strömungsverluste des Destillats vom Wärmetauscher bis in die Trennkammer. Insbesondere wirkt im Wärmetauscher ein Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Insbesondere wirkt in der Trennkammer ein Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Insbesondere wirkt der Überdruck von wenigstens 10 % des in dem Wärmetauscher wirkenden Überdrucks in der Trennkammer in einem Betriebszustand der Vorrichtung, in dem kein Fluid aus der Trennkammer ausströmen kann oder Fluid nur gedrosselt aus der Trennkammer ausströmen kann, insbesondere derart, dass ein Staudruck beim Ausströmen entsteht. Insbesondere wird der Überdruck in der Trennkammer ausschließlich durch wenigstens ein Ablassventil und/oder eine Drossel, stromabwärts des Koaleszenzorgans entspannt, damit insbesondere eine Spontanverdampfung des Wassers in Strömungsrichtung betrachtet nur stromabwärts des Koaleszenzorgans und des Trennvorgangs zwischen Wasser und Leichtphase einhergeht. Insbesondere ist der Überdruck in der Trennkammer im Bereich des Koaleszenzorgans dann zu messen, wenn das Ablassventil / die Drossel geschlossen ist. Durch das Aufrechterhalten des Überdrucks aus dem Wärmetauscher bis in die Trennkammer, insbesondere über das Koaleszenzorgan, ergibt sich der Vorteil, dass es nicht durch rasche Druckentspannung zu einer Spontanverdampfung des Wassers kommt, solange die Leichtphase nicht von Wasser getrennt ist, sprich im Destillat. Bei einer Spontanverdampfung des Wassers im Destillat wird das Destillat stark durchmischt, sodass die Leichtphase stärker emulgiert und es erschwert ist, diese mittels des Koaleszenzorgans abzusondern. Insbesondere ist die Wirkung des Koaleszenzorgans besonders gut, wenn dort strömungsberuhigtes Destillat einströmt, dessen Druck sich vor und während des Prozesses des Koaleszierens ändert.

Beispielsweise kann der Sensor in dem Wärmetauscher angeordnet sein. Es ist auch denkbar, dass der Sensor in einem Behälter vorgesehen ist, der derart mit dem Wärmetauscher in Fluidverbindung steht, dass aus der in dem Behälter vorliegenden Menge von Destillat auf die im Wärmetauscher vorliegende Mengen von Destillat geschlossen werden kann. Insbesondere kann der Sensor den Füllstand im Wärmetauscher erfassen. Beispielsweise kann ein optischer Sensor eingesetzt werden oder ein elektrischer Sensor. Insbesondere ein Sensor, der auf dem Prinzip einer geführten Mikrowelle basiert. Insbesondere kann mittels der Erfassten Menge an vorliegendem Destillat ein Durchsatz an Destillat durch die Vorrichtung, insbesondere die Trennkammer geregelt bzw. angepasst werden.

Insbesondere umfasst die Steuer- und/oder Regeleinrichtung zumindest einen Prozessor und einen Speicher. Beispielsweise kann die Steuer- und/oder Regeleinrichtung die erfasste Destillatmenge mit einem Referenzwert abgleichen. Insbesondere erzeugt die Steuer- und/oder Regeleinrichtung das Steuersignal auf Basis eines Soll-Ist-Wert-Vergleichs mit einem Referenzwert. Insbesondere kann die Steuer- und/oder Regeleinrichtung einen Referenzwert aus einer Datenbank abfragen. Insbesondere umfasst die Steuereinrichtung Mittel zur drahtlosen Signalübertragung, wie beispielsweise ein WLAN-Modul. Insbesondere kann die Steuer- und/oder Regeleinrichtung das Steuersignal drahtlos übertragen. Beispielsweise kann das Steuersignal ein elektrisches, pneumatisches oder hydraulisches Signal sein. Insbesondere kann die Steuer- und/oder Regeleinrichtung einen I-P-Wandler umfassen, der ein elektronisches Steuersignal in ein pneumatisches oder hydraulisches Steuersignal umwandelt. Insbesondere umfasst die Steuer- und/oder Regeleinrichtung eine Bedienerschnittstelle. Insbesondere kann die Bedienerschnittstelle einen Schalter, Regler oder ein Display, insbesondere einen Touchscreen umfassen, der vorzugsweise dazu eingerichtet ist, dass ein Referenzwert der Menge des von dem Wärmetauscher bereitgestellten Destillats einstellbar ist. Die Steuereinheit soll beispielsweise dazu eingerichtet sein, ein elektrisches, pneumatisches und/oder hydraulisches Steuersignal an das Ablassventil zu übertragen. Insbesondere kann die Steuer- und/oder Regeleinrichtung ein weiteres Steuersignal auf Basis eines weiteren Sensorsignals erzeugen. Vorzugsweise umfasst die Vorrichtung einen Sensor zum Erfassen des Vorliegens einer Leichtphase in der Trennkammer. Insbesondere ist der Sensor am Gehäuse der Trennkammer angeordnet und ragt in den Leichtphasensammelbereich oder den Sammelturm hinein. Insbesondere stellt der Sensor ein Ausgangssignal bereit. Beispielsweise ist das Ausgangssignal des weiteren Sensors ein Wert zwischen 0 und 1, vorzugsweise mit zwei Dezimalstellen. Insbesondere erzeugt die Steuer- und/oder Regeleinrichtung anhand des Ausgangssignals ein weiteres Steuersignal für ein weiteres Ablassventil. Insbesondere kann die Steuer- und/oder Regeleinrichtung durch einen Vergleich des Ausgangssignals des weiteren Sensors mit zumindest zwei insbesondere in einer Datenbank hinterlegten Sollwerten ein Steuersignal für das weitere Ablassventil erzeugen. Insbesondere wird über das weitere Ablassventil Leichtphase aus der Trennkammer abgezogen. Insbesondere basiert der weitere Sensor auf dem Prinzip des Impedanzspektroskopie-Verfahrens, jedoch ist auch jedes andere Prinzip denkbar, mittels dem Leichtphase von Luft und Wasser unterschieden werden kann. Es ist denkbar, dass ein optischer Sensor eingesetzt wird. Beispielsweise handelt es sich bei dem Sensor um einen binären Füllstandsensor des Typs LMTx0x, LMTx1x, oder LMTx2x der Firma ifm electronic GmbH.

Insbesondere ist das Ablassventil ein elektrisches, hydraulisches und/oder pneumatisches Ventil. Insbesondere kann das Ablassventil elektronisch angesteuert werden. Insbesondere ist das Ablassventil dazu eingerichtet einen Strömungsquerschnitt anhand des Steuersignals einzustellen. Beispielsweise kann über das Ablassventil Wasser und/oder Leichtphase aus der Trennkammer abgezogen werden. Insbesondere umfasst die Vorrichtung ein weiteres ein stromabwärtig der Trennkammer angeordnetes und mit dieser in Fluidverbindung stehendes Ablassventil, das anhand eines weiteren Steuersignals der Steuer- und/oder Regeleinrichtung einstellbar ist. Insbesondere kann das Ablassventil geöffnet oder geschlossen werden. Insbesondere kann das Ablassventil auch derart angesteuert werden, dass die Durchströmmenge, insbesondere der Strömungsquerschnitt des Ablassventils, erhöht oder verringert wird. Insbesondere kann über eines der Ablassventile Wasser aus der Trennkammer abgezogen werden und über das weitere Ablassventil Leichtphase aus der Trennkammer abgezogen werden. Insbesondere ist das Ablassventil hermetisch verschließbar. Insbesondere liegt ein Druckgefälle über das Ablassventil von wenigstens 5 mbar gegenüber atmosphärischem Druck vor. Insbesondere besteht das Druckgefälle über das Ablassventil aufgrund des in der Trennkammer wirkenden Überdrucks. Beispielsweise ist das Druckgefälle unabhängig von einem hydrostatischen Druck des Fluids, das an dem Ablassventil stromaufwärtig vorliegt, insbesondere im geschlossenen Zustand des Ablassventils ansteht. Die Ausströmrichtung kann von der Trennkammer zur Atmosphäre hin definiert werden. Das Druckgefälle von wenigstens 5 mbar bietet den Vorteil, dass Fluid, insbesondere entgegen der Gravitationsrichtung, aus der Trennkammer abgelassen werden kann, ohne externe Energie zuzuführen. Dies ermöglicht ein energieeffizientes Ablassen von Fluid aus der Trennkammer. Ein weiterer Vorteil besteht darin, dass das Fluid aus der Kammer gedrückt wird, dabei kommt es nicht zu etwaigen Verwirbelungen des Fluids die beispielsweise durch den Sog einer Pumpe hervorgerufen werden. Dadurch kann die Leichtphase oder das Wasser strömungsberuhigt und ohne vermischen mit der anderen Phase aus der Trennkammer abgelassen werden.

Gemäß einer beispielhaften Ausführung der vorliegenden Erfindung wird das Ablassventil derart gesteuert, insbesondere die Menge des aus der Trennkammer ausströmenden Fluids derart gedrosselt, dass die vorliegende, vom Wärmetauscher bereitgestellte Menge von Destillat höchstens 25 %, insbesondere höchstens 20 %, höchstens 15 %, höchstens 10 %, höchstens 5 %, höchstens 2 %, vorzugsweise höchstens 1 %, von einer vorbestimmten Menge abweicht. Insbesondere soll der Füllstand von Destillat im Wärmetauscher höchstens 25 %, insbesondere höchstens 20 %, höchstens 15 %, höchstens 10 %, höchstens 5 %, höchstens 2 %, vorzugsweise höchstens 1 %, von einem vorbestimmten Füllstand im Wärmetauscher abweichen. Die im Wärmetauscher vorliegende Menge von Destillat soll vorzugsweise konstant gehalten werden. Insbesondere soll die Menge an aus dem Wärmetauscher ausströmenden Destillat der Menge an im Wärmetauscher entstehenden Destillat entsprechen. Es sollen Fluktuationen in der vorliegenden Menge von Destillat zugelassen sein, vorzugsweise sollen diese möglichst gering sein. Insbesondere wird eine kontinuierliche Strömung von Destillat aus dem Wärmetauscher und Fluid aus der Trennkammer durch das Ablassventil zugelassen. Vorzugsweise begrenzt und/oder drosselt das Ablassventil das Ausströmen des Fluids derart, dass sich ein Staudruck im Fluid aufbauen kann. Es hat sich herausgestellt, dass durch die im Wesentlichen konstant gehaltene Menge von Destillat und insbesondere die kontinuierliche Strömung von Destillat die Effizienz des Wärmetauschprozesses im Wärmetauscher verbessert ist. Zudem kann sich durch das kontinuierliche Strömen eine geringe Strömungsgeschwindigkeit des Destillats, bei hoher Durchsatzmenge, beispielsweise von mehr als 500 Liter Prozess- oder Industriemedium pro Stunde, insbesondere durch das Koaleszenzorgan einstellen, was zu einer Strömungsberuhigung führt und den Abscheideprozess der Leichtphase verbessert.

Gemäß einer beispielhaften Ausführung der vorliegenden Erfindung wird das Ablassventil geöffnet, sobald die vom Wärmetauscher bereitgestellte Menge von Destillat einen vorbestimmten oberen Grenzwert erreicht und geschlossen, sobald die vom Wärmetauscher bereitgestellte Menge von Destillat einen vorbestimmten unteren Grenzwert erreicht. Insbesondere kann die Vorrichtung das Sensorsignal mit zwei, vorzugsweise in einer Datenbank hinterlegten, vorbestimmten Grenzwerten abgleichen. Beispielsweise kann die Menge von Destillat im Wärmetauscher einem Füllstand des Destillats im Wärmetauscher entsprechen. Insbesondere ist das Ablassventil geschlossen, solange ein oberer, insbesondere vorbestimmter, Füllstand von Destillat im Wärmetauscher nicht erreicht ist. Vorzugsweise steuert die Vorrichtung bei Erreichen des oberen Füllstands von Destillat im Wärmetauscher das Ablassventil derart an, dass dieses geöffnet wird. Insbesondere drosselt und/oder begrenzt das Ablassventil das ausströmende Fluid aus der Trennkammer derart, dass ein Staudruck in dem Fluid entsteht. Vorzugsweise steuert die Vorrichtung bei Erreichen eines unteren, insbesondere vorbestimmten, Füllstand von Destillat im Wärmetauscher das Ablassventil derart an, dass dieses geschlossen wird. Insbesondere wird das Ablassventil periodisch, insbesondere zyklisch, geöffnet. Beispielsweise kann eine vorbestimmte Menge an Destillat im Wärmetauscher angestaut werden. Insbesondere strömt eine vorbestimmte Menge an Destillat aus dem Wärmetauscher aus, ehe das Ablassventil geschlossen wird. Insbesondere bei geringen Durchsatzmengen von Prozess- oder Industriemedien, beispielsweise von weniger als 500 Liter pro Stunde, ist diese Regelung vorteilhaft. Es hat sich herausgestellt, dass durch die zyklische Strömung im Koaleszenzorgan koaleszierte Leichtphasen, die in dem Zeitraum koaleszieren in dem keine Strömung vorliegt, aus dem Koaleszenzorgan gespült werden können und so eine verbesserte Abscheidung der Leichtphasen aus dem Destillat erfolgt.

Gemäß einer beispielhaften Ausführung ist die Vorrichtung dazu ausgelegt, das Verfahren nach einem der nachstehenden Aspekte und/oder beispielhaften Ausführungen auszuführen.

Gemäß einem weiteren Aspekt der vorliegenden Erfindung, der mit den vorhergehenden Aspekten und beispielhaften Ausführungen kombinierbar ist, ist ein Verfahren zum Aufbereiten eines Prozess- oder Industriemediums, insbesondere eines wässrigen Prozess- oder Industriemediums, insbesondere einer kohlenwasserstoffhaltigen Emulsion, bereitgestellt. Aus dem Prozess- oder Industriemedium wird ein unter Überdruck stehendes Destillat, insbesondere von einem Wärmetauscher, bereitgestellt, das zumindest Wasser und eine weniger dichte Leichtphase enthält. Das Destillat wird, insbesondere in einer Trennkammer, einem Koaleszenzprozess unterzogen, bei dem die Leichtphase im Destillat koalesziert wird, und die Leichtphase wird von Wasser abgesondert, wobei das Koaleszieren und/oder das Absondern der Leichtphase von Wasser unter einem Überdruck von wenigstens 10 % des in dem bereitgestellten Destillat wirkenden Überdrucks erfolgt.

Beispielsweise handelt es sich bei Prozess- oder Industriemedien um Abwässer oder Brauchwasser, das im Zyklus einer Anlage regelmäßig gereinigt wird, aus industriellen Anlagen oder von der Herstellung von Produkten. Ein Prozess- oder Industriemedium ist in vielen Fällen mit Leichtphasen, wie mit Ölen oder Salzen und Waschsubstanzen oder dergleichen, versetztes Wasser. Beispiele dafür sind Kühlschmieremulsionen, Druckgussemulsionen, Bodenreinigungswasser, Wasch- und Entfettungsbäder, Spülbäder oder Lackiervorbehandlungen sowie Abwässer aus Beizverfahren zur Oberflächenbehandlung von Metallen.

Insbesondere kann von einem Wärmetauscher aus dem Prozess- oder Industriemedium, insbesondere kontinuierlich, ein unter Überdruck stehendes Destillat bereitgestellt werden, das zumindest Wasser und eine weniger dichte Leichtphase enthält. Der Wärmetauscher kann Teil einer Verdampfungsanlage sein, deren Aufbau beispielsweise aus der EP 4 438 149 A1 bekannt ist, wobei diese Anlage als unter Bezugnahme in der Beschreibung aufgenommen sein soll. Insbesondere erfolgt die Bereitstellung des Destillats durch Kondensation von unter Überdruck stehendem Dampf, insbesondere Brüden, zu Destillat, insbesondere in einer Kondensationsseite des Wärmetauschers. Insbesondere wird das Prozess- oder Industriemedium verdampft, insbesondere in einem dem Wärmetauscher vorgeschalteten Verdampfer. Insbesondere wird der entstehende Dampf, insbesondere Brüden, verdichtet, insbesondere mittels eines dem Wärmetauscher vorgeschalteten Verdichters. Beispielsweise kann das Prozess- oder Industriemedium unter Unterdruck gegenüber atmosphärischem Druck, insbesondere im Vakuum, verdampft werden. Auch kann das Prozess- oder Industriemedium unter atmosphärischem Druck, insbesondere im Bereich von +- 100 mbar gegenüber atmosphärischem Druck, verdampft werden. Das Prozess- oder Industriemedium kann auch unter Überdruck gegenüber atmosphärischem Druck, verdampft werden. Insbesondere ist der Verdampfer dazu eingerichtet, Feststoffe und/oder Schwerphasen, die insbesondere eine höhere Dichte als Wasser aufweisen, von dem Prozess- oder Industriemedium abzuscheiden.

Der Verdichter kann dazu eingerichtet sein, den im Verdampfer entstehenden Dampf, insbesondere Brüden, so stark zu verdichten, dass dieser einen Überdruck gegenüber dem atmosphärischen Druck aufweist, insbesondere unabhängig vom Druck des Dampfes vor dem Verdichter. Insbesondere ist ein Bereich des Wärmetauschers, vorzugsweise ein Gehäuse, in dem sich das Destillat sammelt, hermetisch, insbesondere gegenüber der Atmosphäre, abgedichtet. Das Destillat kann im Wärmetauscher unter dem Überdruck, den ein vorgeschalteter Verdichter erzeugt.

Insbesondere kann das Destillat ein wässriges Medium sein, das vorzugsweise größtenteils aus Wasser besteht. Insbesondere kann das Destillat neben Wasser und Leichtphase weitere Stoffe und/oder Schwerphasen enthalten, wie beispielsweise Salze oder Feststoffe. Das Destillat kann eine oder mehrere Leichtphasen, wie Kohlenwasserstoffe, beispielsweise Öle, Benzin, Diesel, Kerosin oder dergleichen, deren Dichte geringer als die von Wasser ist, aufweisen. Beispielsweise kann das Destillat in seiner Zusammensetzung dem Prozess- oder Industriemedium entsprechen, insbesondere ohne darin befindliche Feststoffe und/oder Schwerphasen, die eine höhere Dichte im Vergleich zu Wasser aufweisen.

Beispielsweise kann das Destillat in eine in Fluidverbindung mit dem Wärmetauscher stehende Trennkammer, in der ein Koaleszenzorgan angeordnet ist und die Leichtphase von Wasser abgesondert wird, strömen. Die Trennkammer kann über eine Fluidleitung mit dem Wärmetauscher verbunden sein. Insbesondere ist die Trennkammer stromabwärtig des Wärmetauschers angeordnet. Vorzugsweise ist die Fluidverbindung überdruckerhaltend ausgebildet. Darunter ist insbesondere zu verstehen, dass in der Fluidverbindung zwischen Wärmetauscher und Trennkammer keine druckmindernden Maßnahmen, wie Ventile und/oder Drosseln, vorgesehen sind. Die Fluidverbindung kann es dem Destillat ermöglichen, aus dem Wärmetauscher in die Trennkammer zu strömen.

Vorzugsweise wird die Trennkammer, insbesondere vor Betrieb der Vorrichtung, luftleer gemacht, vorzugsweise vollständig mit Fluid, insbesondere Destillat, beziehungsweise Wasser und Leichtphase, gefüllt. Insbesondere ist das Koaleszenzorgan stromaufwärtig in der Trennkammer angeordnet, sodass einströmendes Destillat durch das Koaleszenzorgan in die Trennkammer strömt. Vorzugsweise ist das Koaleszenzorgan dazu eingerichtet, das Destillat in Wasser und Leichtphase zu trennen. Es ist möglich, dass im Wasser in der Trennkammer weitere Verunreinigungen oder nicht abgesonderte Leichtphasen vorliegen. Vorzugsweise werden zumindest 80 %, insbesondere wenigstens 90 %, insbesondere Gewichtsprozent oder Volumenprozent, der im Destillat vorliegenden Leichtphase vom Wasser abgesondert.

Insbesondere wird das einströmende Destillat in einem stromaufwärtiger Bereich eines Koaleszenzorgans beruhigt. Insbesondere wird die Leichtphase in einem Koaleszenzbereich eines Koaleszenzorgans koalesziert. Beispielsweise können im Koaleszenzprozess im Destillat in Tröpfchen vorliegende Leichtphasen zu größeren Tropfen koaleszieren, insbesondere verbunden werden, insbesondere wenn sie einen Koaleszenzbereich und/oder ein Koaleszenzorgan durchströmen. Insbesondere steigt, insbesondere schwimmt, die koaleszierte Leichtphase aufgrund der geringeren Dichte in Bezug auf das Wasser, in diesem auf. Die Leichtphase kann sich somit vom Wasser absondern. Insbesondere steigt die Leichtphase entgegen der Gravitationskraft in der Trennkammer auf und sammelt sich am oberen Ende der Trennkammer. Beispielsweise kann der Koaleszenzprozess in einem Koaleszenzorgan, vorzugsweise einer Koaleszenzkerze erfolgen. Insbesondere umfasst das Koaleszenzorgan ein hydrophobes, insbesondere superhydrophobes, und/oder lipophiles Material. Beispielsweise als Endlosfaden um einen Stützkern gewickeltes Filterelement. Vorzugsweise umfasst das Koaleszenzorgan faserige Materialien, wie Kunststofffäden, beispielsweise aus Polypropylen, Polyester oder Nylon und/oder Naturfäden, beispielsweise aus Baumwolle und/oder Metallfäden, beispielsweise aus Edelstahl und/oder Glasfasern.

Insbesondere wird der Wärmetauscher derart mit der Trennkammer verbunden, dass der in dem Wärmetauscher wirkende Überdruck, vorzugsweise hydraulisch, so verlustfrei wie möglich in die Trennkammer fortgesetzt oder übertragen wird. Darunter ist eine möglichst drosselfreie Verbindung zu verstehen, dass sich eine laminare oder druckverlustfreie Strömung von dem Wärmetauscher hin zu dem vorgeschalteten Koaleszenzorgan etablieren kann. Insbesondere ist die Trennkammer derart ausgebildet, dass sich der Überdruck aus dem Wärmetauscher in der Trennkammer aufbauen kann und über einen längeren Zeitraum, insbesondere konstant, gehalten werden kann. Dadurch kann eine Spontanverdampfung des Wassers im Destillat vom Wärmetauscher zum Koaleszenzorgan vermieden werden. Ein Überdruckverlust vom Bereitstellen des Destillats bis zum Koaleszieren und/oder Absondern der Leichtphase soll möglichst gering sein, jedoch nicht mehr als 90 %, insbesondere weniger als 80 %, weniger als 70 %, weniger als 60 %, weniger als 50 %, weniger als 40 %, weniger als 30 %, weniger als 20 %, vorzugsweise weniger als 10 % betragen. Überdruckverluste, die durch Querschnittsänderung der Leitung oder Reibungs- und/oder Strömungsverluste im Destillat in der Fluidverbindung vom Wärmetauscher zur Trennkammer auftreten können hingenommen werden. Überdruck bedeutet im Sinne der vorliegenden Erfindung Überdruck gegenüber atmosphärischem Druck, insbesondere der in der Umgebung der Vorrichtung vorliegende atmosphärische Druck. Insbesondere bezieht sich der Überdruck auf den absoluten Druck ohne hydrostatischen Anteil von Destillat und/oder Wasser und Leichtphase. Beispielsweise ist der Überdruck im Destillat am Auslass des Wärmetauschers, über den das Destillat zur Trennkammer strömt, erfasst. Insbesondere ist der Überdruck beim Koaleszieren am Einlass der Trennkammer, vorzugsweise stromaufwärts des Koaleszenzorgans erfasst oder an einem in Gravitationsrichtung oberen Ende in der Trennkammer erfasst. Vorzugsweise setzt sich der in dem Destillat wirkende Überdruck in das Wasser und/oder die abgesonderte Leichtphase, insbesondere uneingeschränkt, fort. Vorzugsweise mindert sich der Überdruck im Destillat nur durch Querschnittsänderungen von Leitungen oder Reibungs- und/oder Strömungsverluste des Destillats vom Wärmetauscher bis in die Trennkammer. Insbesondere wirkt im Destillat ein Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Insbesondere erfolgt das Koaleszieren und/oder Absondern der Leichtphase, insbesondere in der Trennkammer, unter einem Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Insbesondere wirkt der Überdruck von wenigstens 10 % des in dem Destillat wirkenden Überdrucks beim Koaleszieren und/oder Absondern der Leichtphase in einem Betriebszustand, in dem kein Fluid strömen kann oder Fluid nur gedrosselt strömen kann, insbesondere derart, dass ein Staudruck beim Strömen entsteht. Insbesondere wird der beim Koaleszieren und/oder Absondern der Leichtphase wirkende Überdruck stromabwärts des Koaleszieren und/oder Absondern der Leichtphase entspannt, damit insbesondere eine Spontanverdampfung des Wassers in Strömungsrichtung betrachtet nur stromabwärts des Koaleszieren und/oder Absondern der Leichtphase einhergeht. Insbesondere ist der Überdruck unter dem das Koaleszieren und/oder Absondern der Leichtphase erfolgt dann zu messen, wenn ein Ablassventil / die Drossel geschlossen ist, insbesondere kein Destillat strömt. Durch das Aufrechterhalten des Überdrucks vom Bereitstellen des Destillats bis zum Koaleszieren und/oder Absondern der Leichtphase, insbesondere über das Koaleszenzorgan, ergibt sich der Vorteil, dass es nicht durch rasche Druckentspannung zu einer Spontanverdampfung des Wassers kommt, solange die Leichtphase nicht von Wasser getrennt ist, sprich im Destillat. Bei einer Spontanverdampfung des Wassers im Destillat wird das Destillat stark durchmischt, sodass die Leichtphase stärker emulgiert und es erschwert ist, diese mittels des Koaleszenzorgans abzusondern. Insbesondere ist die Wirkung des Koaleszenzorgans besonders gut, wenn dort strömungsberuhigtes Destillat einströmt, dessen Druck sich vor und während des Prozesses des Koaleszierens ändert.

Gemäß einer beispielhaften Ausführung erfolgt das Koaleszieren und/oder das Absondern der Leichtphase von Wasser unter einem Überdruck von wenigstens 20 %, insbesondere wenigstens 30 %, wenigstens 40 %, wenigsten 50 %, wenigsten 60 %, wenigsten 70 %, wenigsten 80 %, oder wenigstens 90 %, des in dem bereitgestellten Destillat wirkenden Überdrucks. Insbesondere erfolgt das Koaleszieren und/oder das Absondern der Leichtphase von Wasser unter einem Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Besonders bevorzugt erfolgt das Koaleszieren und/oder das Absondern der Leichtphase von Wasser unter einem Überdruck der dem des in dem Destillat wirkenden Überdrucks nur abzüglich von Strömungsverlusten, die das Destillat beim Strömen beispielsweise in einer Fluidleitung erfährt. Besonders vorteilhaft ist es, wenn der Druckverlust des Überdrucks vom bereitgestellten Destillat zum Koaleszieren und/oder Absondern der Leichtphase möglichst gering ist, sodass ein insbesondere weiteres Vermischen des Destillats bzw. des Wassers und der Leichtphase aufgrund von Druckentspannung unterbunden werden kann. Dies kann die Effizienz der Abscheidung bzw. des Koaleszierens der Leichtphase steigern und die Reinigung des Wassers verbessern.

Gemäß einem weiteren Aspekt der vorliegenden Erfindung, der mit den vorhergehenden Aspekten und beispielhaften Ausführungen kombinierbar ist, ist ein Verfahren zum Aufbereiten eines Prozess- oder Industriemediums, insbesondere eines wässrigen Prozess- oder Industriemediums, insbesondere einer kohlenwasserstoffhaltigen Emulsion, bereitgestellt. Aus dem Prozess- oder Industriemedium wird ein unter Überdruck stehendes Destillat, insbesondere von einem Wärmetauscher, bereitgestellt, das zumindest Wasser und eine weniger dichte Leichtphase enthält, und das Destillat wird, insbesondere in einer Trennkammer, einem Koaleszenzprozess unterzogen, bei dem die Leichtphase im Destillat koalesziert wird, und die Leichtphase wird von Wasser abgesondert. Das Koaleszieren und/oder Absondern der Leichtphase erfolgt in einem gegenüber der Atmosphäre abgedichteten Raum. Insbesondere kann von einem Wärmetauscher aus dem Prozess- oder Industriemedium, insbesondere kontinuierlich, ein unter Überdruck stehendes Destillat bereitgestellt werden, das zumindest Wasser und eine weniger dichte Leichtphase enthält. Insbesondere kann das Destillat in eine in Fluidverbindung mit dem Wärmetauscher stehende Trennkammer, in der die Leichtphase koalesziert und von Wasser abgesondert wird, strömen. Insbesondere wird die Leichtphase insbesondere in einem, vorzugsweise in der Trennkammer, insbesondere an einem stromaufwärtigen Einlass, angeordneten, Koaleszenzorgan koalesziert, vorzugsweise gemäß einem der Aspekte und/oder beispielhaften Ausführungen der Erfindung.

Insbesondere wird zumindest ein Bereich der Trennkammer, in dem die Leichtphase koalesziert, insbesondere gegenüber der Atmosphäre, hermetisch abgedichtet. Insbesondere ist der Raum hermetisch abgedichtet. Insbesondere wird der Raum durch Schließen oder zumindest durch teilweises Schließen eine Ablassventils abgedichtet. Vorzugsweise erfolgt das Koaleszieren und/oder Absondern der Leichtphase in einem Raum, der derart hermetisch abgedichtet wird, dass sich der Überdruck des Destillats in diesen Bereich uneingeschränkt fortsetzen kann, vorzugsweise nur unter Strömungs- und/oder Reibungsverlusten. Insbesondere verbinden sich die im Wasser emulgierten Leichtphasen in dem Raum der Trennkammer und sondern sich vom Wasser ab. Unter abgedichtet kann verstanden werden, dass ein Druckniveau in dem Raum konstant gehalten werden kann. Insbesondere ist in dem Raum, in dem die Leichtphase koalesziert ein Koaleszenzorgan, insbesondere gemäß einem der Aspekte und/oder beispielhaften Ausführungen der Erfindung, vorgesehen. Der hermetisch abgedichtete Bereich kann einen Einlass und einen Auslass aufweisen. Insbesondere ist der Auslass mittels eines Ventils hermetisch verschließbar. Vorzugsweise ist am Einlass kein Verschluss, wie ein Ventil oder eine Drossel vorgesehen. Insbesondere schließt der Einlass an einen unter Überdruck stehenden Bereich an, sodass kein Druckabfall im hermetisch abgedichteten Bereich über den Einlass stattfindet. Der hermetisch abgedichtete Bereich der Trennkammer in dem die Leichtphase koalesziert bietet den Vorteil, dass die Leichtphase unter im Wesentlichen gleichbleibenden, vorzugsweise konstanten, Überdruckverhältnissen koaleszieren kann. Dadurch kann eine Spontanverdampfung des Wassers unterbunden werden und das Koaleszieren erfolgt mit sehr hoher Effizienz.

Beispielsweise handelt es sich bei Prozess- oder Industriemedien um Abwässer oder Brauchwasser, das im Zyklus einer Anlage regelmäßig gereinigt wird, aus industriellen Anlagen oder von der Herstellung von Produkten. Ein Prozess- oder Industriemedium ist in vielen Fällen mit Leichtphasen, wie mit Ölen oder Salzen und Waschsubstanzen oder dergleichen, versetztes Wasser. Beispiele dafür sind Kühlschmieremulsionen, Druckgussemulsionen, Bodenreinigungswasser, Wasch- und Entfettungsbäder, Spülbäder oder Lackiervorbehandlungen sowie Abwässer aus Beizverfahren zur Oberflächenbehandlung von Metallen.

Insbesondere kann von einem Wärmetauscher aus dem Prozess- oder Industriemedium, insbesondere kontinuierlich, ein unter Überdruck stehendes Destillat bereitgestellt werden, das zumindest Wasser und eine weniger dichte Leichtphase enthält. Der Wärmetauscher kann Teil einer Verdampfungsanlage sein, deren Aufbau beispielsweise aus der EP 4 438 149 A1 bekannt ist, wobei diese Anlage als unter Bezugnahme in der Beschreibung aufgenommen sein soll. Insbesondere erfolgt die Bereitstellung des Destillats durch Kondensation von unter Überdruck stehendem Dampf, insbesondere Brüden, zu Destillat, insbesondere in einer Kondensationsseite des Wärmetauschers. Insbesondere wird das Prozess- oder Industriemedium verdampft, insbesondere in einem dem Wärmetauscher vorgeschalteten Verdampfer. Insbesondere wird der entstehende Dampf, insbesondere Brüden, verdichtet, insbesondere mittels eines dem Wärmetauscher vorgeschalteten Verdichters. Beispielsweise kann das Prozess- oder Industriemedium unter Unterdruck gegenüber atmosphärischem Druck, insbesondere im Vakuum, verdampft werden. Auch kann das Prozess- oder Industriemedium unter atmosphärischem Druck, insbesondere im Bereich von +- 100 mbar gegenüber atmosphärischem Druck, verdampft werden. Das Prozess- oder Industriemedium kann auch unter Überdruck gegenüber atmosphärischem Druck, verdampft werden. Insbesondere ist der Verdampfer dazu eingerichtet, Feststoffe und/oder Schwerphasen, die insbesondere eine höhere Dichte als Wasser aufweisen, von dem Prozess- oder Industriemedium abzuscheiden.

Der Verdichter kann dazu eingerichtet sein, den im Verdampfer entstehenden Dampf, insbesondere Brüden, so stark zu verdichten, dass dieser einen Überdruck gegenüber dem atmosphärischen Druck aufweist, insbesondere unabhängig vom Druck des Dampfes vor dem Verdichter. Insbesondere ist ein Bereich des Wärmetauschers, vorzugsweise ein Gehäuse, in dem sich das Destillat sammelt, hermetisch, insbesondere gegenüber der Atmosphäre, abgedichtet. Das Destillat kann im Wärmetauscher unter dem Überdruck, den ein vorgeschalteter Verdichter erzeugt.

Insbesondere kann das Destillat ein wässriges Medium sein, das vorzugsweise größtenteils aus Wasser besteht. Insbesondere kann das Destillat neben Wasser und Leichtphase weitere Stoffe und/oder Schwerphasen enthalten, wie beispielsweise Salze oder Feststoffe. Das Destillat kann eine oder mehrere Leichtphasen, wie Kohlenwasserstoffe, beispielsweise Öle, Benzin, Diesel, Kerosin oder dergleichen, deren Dichte geringer als die von Wasser ist, aufweisen. Beispielsweise kann das Destillat in seiner Zusammensetzung dem Prozess- oder Industriemedium entsprechen, insbesondere ohne darin befindliche Feststoffe und/oder Schwerphasen, die eine höhere Dichte im Vergleich zu Wasser aufweisen.

Beispielsweise kann das Destillat in eine in Fluidverbindung mit dem Wärmetauscher stehende Trennkammer, in der ein Koaleszenzorgan angeordnet ist und die Leichtphase von Wasser abgesondert wird, strömen. Die Trennkammer kann über eine Fluidleitung mit dem Wärmetauscher verbunden sein. Insbesondere ist die Trennkammer stromabwärtig des Wärmetauschers angeordnet. Vorzugsweise ist die Fluidverbindung überdruckerhaltend ausgebildet. Darunter ist insbesondere zu verstehen, dass in der Fluidverbindung zwischen Wärmetauscher und Trennkammer keine druckmindernden Maßnahmen, wie Ventile und/oder Drosseln, vorgesehen sind. Die Fluidverbindung kann es dem Destillat ermöglichen, aus dem Wärmetauscher in die Trennkammer zu strömen.

Vorzugsweise wird die Trennkammer, insbesondere vor Betrieb der Vorrichtung, luftleer gemacht, vorzugsweise vollständig mit Fluid, insbesondere Destillat, beziehungsweise Wasser und Leichtphase, gefüllt. Insbesondere ist das Koaleszenzorgan stromaufwärtig in der Trennkammer angeordnet, sodass einströmendes Destillat durch das Koaleszenzorgan in die Trennkammer strömt. Vorzugsweise ist das Koaleszenzorgan dazu eingerichtet, das Destillat in Wasser und Leichtphase zu trennen. Es ist möglich, dass im Wasser in der Trennkammer weitere Verunreinigungen oder nicht abgesonderte Leichtphasen vorliegen. Vorzugsweise werden in der Trennkammer zumindest 80 %, insbesondere wenigstens 90 %, insbesondere Gewichtsprozent oder Volumenprozent, der im Destillat vorliegenden Leichtphase vom Wasser abgesondert.

Insbesondere wird das einströmende Destillat in einem stromaufwärtiger Bereich eines Koaleszenzorgans beruhigt. Insbesondere wird die Leichtphase in einem Koaleszenzbereich eines Koaleszenzorgans koalesziert. Beispielsweise können im Koaleszenzprozess im Destillat in Tröpfchen vorliegende Leichtphasen zu größeren Tropfen koaleszieren, insbesondere verbunden werden, insbesondere wenn sie einen Koaleszenzbereich und/oder ein Koaleszenzorgan durchströmen. Insbesondere steigt, insbesondere schwimmt, die koaleszierte Leichtphase aufgrund der geringeren Dichte in Bezug auf das Wasser, in diesem auf. Die Leichtphase kann sich somit vom Wasser absondern. Insbesondere steigt die Leichtphase entgegen der Gravitationskraft in der Trennkammer auf und sammelt sich am oberen Ende der Trennkammer. Beispielsweise kann der Koaleszenzprozess in einem Koaleszenzorgan, vorzugsweise einer Koaleszenzkerze erfolgen. Insbesondere umfasst das Koaleszenzorgan ein hydrophobes, insbesondere superhydrophobes, und/oder lipophiles Material. Beispielsweise als Endlosfaden um einen Stützkern gewickeltes Filterelement. Vorzugsweise umfasst das Koaleszenzorgan faserige Materialien, wie Kunststofffäden, beispielsweise aus Polypropylen, Polyester oder Nylon und/oder Naturfäden, beispielsweise aus Baumwolle und/oder Metallfäden, beispielsweise aus Edelstahl und/oder Glasfasern.

Gemäß einer beispielhaften Ausführung erfolgt das Koaleszieren und/oder Absondern der Leichtphase in einem Gehäuse, insbesondere von einer Trennkammer, das, vorzugsweise hermetisch, insbesondere gegenüber der Atmosphäre, abgedichtet wird. Vorzugsweise ist das Gehäuse aus Metall, wie Edelstahl, gefertigt. Insbesondere weist das Gehäuse eine Materialstärke von wenigstens 1 mm, insbesondere wenigstens 2 mm, vorzugsweise wenigstens 3 mm auf. Das Gehäuse kann eine Einlassöffnung, sowie zumindest eine Auslassöffnung, insbesondere zwei Auslassöffnungen, aufweisen. Insbesondere wird das Gehäuse durch, insbesondere zumindest teilweises, Schließen eines Ablassventils des Gehäuses abgedichtet. Insbesondere kann Fluid nur über eine Einlassöffnung in das Gehäuse einströmen und über eine Auslassöffnung ausströmen. Stromabwärtig oder in der Einlassöffnung kann ein Koaleszenzorgan angeordnet sein, in dem der Koaleszenzprozess erfolgt. Stromabwärtig der zumindest einen Auslassöffnung kann ein Ventil vorgesehen sein, dass insbesondere dazu eingerichtet ist, die Auslassöffnung hermetisch zu verschließen. Beispielsweise kann das Gehäuse ein Sichtfenster umfassen. Insbesondere wird das Gehäuse derart hermetisch abgedichtet, dass ein in dem Gehäuse herrschender Überdruck, ohne Zu- oder Abstrom von Destillat oder Leichtphase oder Wasser in das oder aus dem Gehäuse, aufrecht erhalten bleibt.

Gemäß einer beispielhaften Ausführung der vorliegenden Erfindung strömt das Destillat uneingeschränkt von einem Wärmetauscher in eine Trennkammer. Insbesondere wird das Destillat von dem Wärmetauscher bereitgestellt. Insbesondere erfolgt das Koaleszieren und/oder Absondern der Leichtphase in der Trennkammer. Insbesondere strömt das Destillat über eine Fluidleitung in die Trennkammer ein. Insbesondere setzt sich der Überdruck aus dem Wärmetauscher über das Destillat in die Trennkammer fortsetzt, ohne dass beispielsweise Ventile und/oder Drosseln in der Fluidverbindung vorgesehen sind, die druckmindernd wirken. Dadurch kann erreicht werden, dass der in der Trennkammer wirkende Überdruck möglichst dem in dem Wärmetauscher wirkenden Überdruck entspricht. Insbesondere findet keine Druckentspannung des Destillats stromaufwärts des Koaleszierens der Leichtphase statt. Insbesondere muss das Destillat keine Druckmindernden Maßnahmen wie Ventile oder Drosseln in der Fluidverbindung zwischen Wärmetauscher und Trennkammer durchströmen. Dies bietet den Vorteil, dass eine Spontanverdampfung des Wassers im Destillat verhindert wird.

Gemäß einer beispielhaften Ausführung erfolgt das Koaleszieren und/oder das Absondern der Leichtphase von Wasser unter einem Überdruck von wenigstens 30 mbar gegenüber atmosphärischem Druck. Durch einen Mindestüberdruck von 30 mbar beim Koaleszieren und/oder Absondern der Leichtphase kann erreicht werden, dass eine Spontanverdampfung des Wassers im Destillat stromaufwärts des Koaleszierens der Leichtphase vermieden wird. Insbesondere ist es möglich, dass ein Fluid, insbesondere entgegen der Gravitationsrichtung, insbesondere aus der Trennkammer abgelassen bzw. abgezogen werden kann. Insbesondere ist dies durch das Druckgefälle von 30 mbar gegenüber der Atmosphäre möglich, ohne externe Energie zuführen zu müssen.

Gemäß einer beispielhaften Ausführung strömt das Wasser und/oder die abgesonderte Leichtphase durch ein Ablassventil, wobei dabei insbesondere der in Wasser und/oder Leichtphase wirkende Überdruck, vorzugsweise auf atmosphärischen Druck, entspannt wird. Beispielsweise strömt Wasser und/oder die abgesonderte Leichtphase aus der Trennkammer über das, insbesondere geöffnete, Ablassventil. Insbesondere wird das Ablassventil elektrisches, hydraulisches und/oder pneumatisches betätigt. Insbesondere ist das Ablassventil hermetisch verschließbar. Insbesondere strömt das Wasser und/oder die abgesonderte Leichtphase aufgrund eines Druckgefälles über das Ablassventil, beispielsweise von wenigstens 5 mbar, insbesondere wenigsten 10 mbar, wenigstens 15 mbar, vorzugsweise wenigstens 30 mbar, gegenüber atmosphärischem Druck. Insbesondere besteht das Druckgefälle über das Ablassventil aufgrund des in der Trennkammer wirkenden Überdrucks. Beispielsweise ist das Druckgefälle unabhängig von einem hydrostatischen Druck des Fluids, das an dem Ablassventil stromaufwärtig vorliegt, insbesondere im geschlossenen Zustand des Ablassventils ansteht. Die Ausströmrichtung kann von der Trennkammer zur Atmosphäre hin definiert werden. Das Druckgefälle bietet den Vorteil, dass Fluid, insbesondere entgegen der Gravitationsrichtung, aus der Trennkammer abgelassen werden kann, ohne externe Energie zuzuführen. Dies ermöglicht ein energieeffizientes Ablassen von Fluid aus der Trennkammer. Ein weiterer Vorteil besteht darin, dass das Fluid aus der Kammer gedrückt wird, dabei kommt es nicht zu etwaigen Verwirbelungen des Fluids die beispielsweise durch den Sog einer Pumpe hervorgerufen werden. Dadurch kann die Leichtphase oder das Wasser strömungsberuhigt und ohne vermischen mit der anderen Phase aus der Trennkammer abgelassen werden.

Gemäß einer beispielhaften Ausführung weist das Wasser und/oder die Leichtphase beim Strömen durch das Ablassventil zumindest eine Strömungskomponente entgegen der Gravitationsrichtung auf. Vorzugsweise ist das Ablassventil in Gravitationsrichtung oberhalb der Trennkammer im Einbauzustand vorgesehen. Dies bietet den Vorteil, dass die auf dem Wasser aufschwimmenden Leichtphase besonders leicht von dem Wasser abgezogen werden kann.

Gemäß einem weiteren Aspekt der vorliegenden Erfindung, der mit den vorhergehenden Aspekten und beispielhaften Ausführungen kombinierbar ist, ist ein Verfahren zum Aufbereiten eines Prozess- oder Industriemediums, insbesondere eines wässrigen Prozess- oder Industriemediums, insbesondere einer kohlenwasserstoffhaltigen Emulsion, bereitgestellt. Aus dem Prozess- oder Industriemedium wird ein unter Überdruck stehendes Destillat, insbesondere von einem Wärmetauscher, bereitgestellt wird, das zumindest Wasser und eine weniger dichte Leichtphase enthält. Das Destillat strömt in eine Trennkammer, in der das Destillat einem Koaleszenzprozess unterzogen wird, bei dem die Leichtphase im Destillat koalesziert wird, und die Leichtphase von Wasser abgesondert wird. Die abgesonderte Leichtphase wird entgegen der Gravitationsrichtung aus der Trennkammer abgezogen.

Insbesondere wird von einem Wärmetauscher aus dem Prozess- oder Industriemedium, insbesondere kontinuierlich, ein unter Überdruck stehendes Destillat bereitgestellt, das zumindest Wasser und eine weniger dichte Leichtphase enthält. Insbesondere kann das Destillat in eine in Fluidverbindung mit dem Wärmetauscher stehende Trennkammer, in der ein Koaleszenzorgan angeordnet ist und die Leichtphase von dem Waser abgesondert wird, strömen. Insbesondere kann die abgesonderte Leichtphase über einen Leichtphasenauslass der Trennkammer entgegen der Gravitationsrichtung aus der Trennkammer abgezogen werden.

Insbesondere soll die Leichtphase beim Abziehen aus der Trennkammer zumindest eine Strömungsrichtungskomponente aufweisen, die parallel zur Gravitationsrichtung, vorzugsweise entgegen der Gravitationsrichtung, gerichtet ist. Insbesondere soll die Leichtphase ohne Energie, insbesondere externe Energie, aufzuwenden aus der Trennkammer abgezogen werden. Insbesondere setzt sich der in dem Destillat wirkende Überdruck in die Trennkammer fort, sodass die abgesonderte Leichtphase in der Trennkammer unter Überdruck steht. Beispielsweise einen Überdruck von wenigstens 5 mbar, insbesondere wenigsten 10 mbar, wenigsten 15 mbar, wenigstens 20 mbar oder wenigstens 30 mbar gegenüber der Atmosphäre aufweist. Insbesondere herrscht über den Leichtphasenauslass ein Druckgefälle, insbesondere von wenigstens 30 mbar. Durch das Druckgefälle kann die Leichtphase entgegen der Gravitationsrichtung aus der Trennkammer abgezogen werden. Beispielsweise ist der Leichtphasenauslass an einem in Gravitationsrichtung oberen Ende der Trennkammer angeordnet. Insbesondere umfasst die Trennkammer ein Gehäuse, in dem das Koaleszenzorgan angeordnet ist und sich die Leichtphase vom Wasser absondert. Durch die geringere Dichte der Leichtphase im Vergleich zu Wasser, kann diese entgegen der Gravitationskraft in der Trennkammer aufsteigen und auf dem Wasser aufschwimmen. Vorzugsweise ist das Gehäuse der Trennkammer vollständig mit Fluid, insbesondere Leichtphase und Wasser, gefüllt, vorzugsweise luftleer. Die Leichtphase kann somit an einer im Einbauzustand in Gravitationsrichtung oberen Begrenzungswand der Trennkammer anliegen. Beispielsweise ist der Leichtphasenauslass an der oberen Begrenzungswand der Trennkammer, insbesondere als Durchgangsbohrung, vorgesehen. Das Abziehen der Leichtphase entgegen der Gravitationsrichtung bietet den Vorteil, dass die Leichtphase ohne Aufwändige Konstruktionen wie Überläufe oder dergleichen vom Wasser abgetrennt bzw. abgeschöpft werden kann, da die Leichtphase ohnehin auf dem Wasser aufschwimmt.

Beispielsweise handelt es sich bei Prozess- oder Industriemedien um Abwässer oder Brauchwasser, das im Zyklus einer Anlage regelmäßig gereinigt wird, aus industriellen Anlagen oder von der Herstellung von Produkten. Ein Prozess- oder Industriemedium ist in vielen Fällen mit Leichtphasen, wie mit Ölen oder Salzen und Waschsubstanzen oder dergleichen, versetztes Wasser. Beispiele dafür sind Kühlschmieremulsionen, Druckgussemulsionen, Bodenreinigungswasser, Wasch- und Entfettungsbäder, Spülbäder oder Lackiervorbehandlungen sowie Abwässer aus Beizverfahren zur Oberflächenbehandlung von Metallen.

Insbesondere kann von einem Wärmetauscher aus dem Prozess- oder Industriemedium, insbesondere kontinuierlich, ein unter Überdruck stehendes Destillat bereitgestellt werden, das zumindest Wasser und eine weniger dichte Leichtphase enthält. Der Wärmetauscher kann Teil einer Verdampfungsanlage sein, deren Aufbau beispielsweise aus der EP 4 438 149 A1 bekannt ist, wobei diese Anlage als unter Bezugnahme in der Beschreibung aufgenommen sein soll. Insbesondere erfolgt die Bereitstellung des Destillats durch Kondensation von unter Überdruck stehendem Dampf, insbesondere Brüden, zu Destillat, insbesondere in einer Kondensationsseite des Wärmetauschers. Insbesondere wird das Prozess- oder Industriemedium verdampft, insbesondere in einem dem Wärmetauscher vorgeschalteten Verdampfer. Insbesondere wird der entstehende Dampf, insbesondere Brüden, verdichtet, insbesondere mittels eines dem Wärmetauscher vorgeschalteten Verdichters. Beispielsweise kann das Prozess- oder Industriemedium unter Unterdruck gegenüber atmosphärischem Druck, insbesondere im Vakuum, verdampft werden. Auch kann das Prozess- oder Industriemedium unter atmosphärischem Druck, insbesondere im Bereich von +- 100 mbar gegenüber atmosphärischem Druck, verdampft werden. Das Prozess- oder Industriemedium kann auch unter Überdruck gegenüber atmosphärischem Druck, verdampft werden. Insbesondere ist der Verdampfer dazu eingerichtet, Feststoffe und/oder Schwerphasen, die insbesondere eine höhere Dichte als Wasser aufweisen, von dem Prozess- oder Industriemedium abzuscheiden.

Der Verdichter kann dazu eingerichtet sein, den im Verdampfer entstehenden Dampf, insbesondere Brüden, so stark zu verdichten, dass dieser einen Überdruck gegenüber dem atmosphärischen Druck aufweist, insbesondere unabhängig vom Druck des Dampfes vor dem Verdichter. Insbesondere ist ein Bereich des Wärmetauschers, vorzugsweise ein Gehäuse, in dem sich das Destillat sammelt, hermetisch, insbesondere gegenüber der Atmosphäre, abgedichtet. Das Destillat kann im Wärmetauscher unter dem Überdruck, den ein vorgeschalteter Verdichter erzeugt.

Insbesondere kann das Destillat ein wässriges Medium sein, das vorzugsweise größtenteils aus Wasser besteht. Insbesondere kann das Destillat neben Wasser und Leichtphase weitere Stoffe und/oder Schwerphasen enthalten, wie beispielsweise Salze oder Feststoffe. Das Destillat kann eine oder mehrere Leichtphasen, wie Kohlenwasserstoffe, beispielsweise Öle, Benzin, Diesel, Kerosin oder dergleichen, deren Dichte geringer als die von Wasser ist, aufweisen. Beispielsweise kann das Destillat in seiner Zusammensetzung dem Prozess- oder Industriemedium entsprechen, insbesondere ohne darin befindliche Feststoffe und/oder Schwerphasen, die eine höhere Dichte im Vergleich zu Wasser aufweisen.

Beispielsweise kann das Destillat in eine in Fluidverbindung mit dem Wärmetauscher stehende Trennkammer, in der ein Koaleszenzorgan angeordnet ist und die Leichtphase von Wasser abgesondert wird, strömen. Die Trennkammer kann über eine Fluidleitung mit dem Wärmetauscher verbunden sein. Insbesondere ist die Trennkammer stromabwärtig des Wärmetauschers angeordnet. Vorzugsweise ist die Fluidverbindung überdruckerhaltend ausgebildet. Darunter ist insbesondere zu verstehen, dass in der Fluidverbindung zwischen Wärmetauscher und Trennkammer keine druckmindernden Maßnahmen, wie Ventile und/oder Drosseln, vorgesehen sind. Die Fluidverbindung kann es dem Destillat ermöglichen, aus dem Wärmetauscher in die Trennkammer zu strömen.

Vorzugsweise wird die Trennkammer, insbesondere vor Betrieb der Vorrichtung, luftleer gemacht, vorzugsweise vollständig mit Fluid, insbesondere Destillat, beziehungsweise Wasser und Leichtphase, gefüllt. Insbesondere ist das Koaleszenzorgan stromaufwärtig in der Trennkammer angeordnet, sodass einströmendes Destillat durch das Koaleszenzorgan in die Trennkammer strömt. Vorzugsweise ist das Koaleszenzorgan dazu eingerichtet, das Destillat in Wasser und Leichtphase zu trennen. Es ist möglich, dass im Wasser in der Trennkammer weitere Verunreinigungen oder nicht abgesonderte Leichtphasen vorliegen. Vorzugsweise werden zumindest 80 %, insbesondere wenigstens 90 %, insbesondere Gewichtsprozent oder Volumenprozent, der im Destillat vorliegenden Leichtphase vom Wasser abgesondert.

Insbesondere wird das einströmende Destillat in einem stromaufwärtiger Bereich eines Koaleszenzorgans beruhigt. Insbesondere wird die Leichtphase in einem Koaleszenzbereich eines Koaleszenzorgans koalesziert. Beispielsweise können im Koaleszenzprozess im Destillat in Tröpfchen vorliegende Leichtphasen zu größeren Tropfen koaleszieren, insbesondere verbunden werden, insbesondere wenn sie einen Koaleszenzbereich und/oder ein Koaleszenzorgan durchströmen. Insbesondere steigt, insbesondere schwimmt, die koaleszierte Leichtphase aufgrund der geringeren Dichte in Bezug auf das Wasser, in diesem auf. Die Leichtphase kann sich somit vom Wasser absondern. Insbesondere steigt die Leichtphase entgegen der Gravitationskraft in der Trennkammer auf und sammelt sich am oberen Ende der Trennkammer. Beispielsweise kann der Koaleszenzprozess in einem Koaleszenzorgan, vorzugsweise einer Koaleszenzkerze erfolgen. Insbesondere umfasst das Koaleszenzorgan ein hydrophobes, insbesondere superhydrophobes, und/oder lipophiles Material. Beispielsweise als Endlosfaden um einen Stützkern gewickeltes Filterelement. Vorzugsweise umfasst das Koaleszenzorgan faserige Materialien, wie Kunststofffäden, beispielsweise aus Polypropylen, Polyester oder Nylon und/oder Naturfäden, beispielsweise aus Baumwolle und/oder Metallfäden, beispielsweise aus Edelstahl und/oder Glasfasern.

Gemäß einer beispielhaften Ausführung wird die abgesonderte Leichtphase durch ein insbesondere elektronisch ansteuerbares Ablassventil abgezogen. Beispielsweise kann das Ablassventil elektrische, hydraulische und/oder pneumatische betätigt werden. Vorzugsweise kann das Ablassventil den Leichtphasenauslass hermetisch verschließen. Insbesondere ist das Ablassventil dazu eingerichtet, die Strömung durch das Ventil zu drosseln, zu begrenzen und/oder einzustellen. Das Abziehen der Leichtphase durch das Ablassventil bietet den Vorteil, dass das Ablassen von Leichtphase aus der Trennkammer nach Bedarf geregelt werden kann.

Gemäß einer beispielhaften Ausführung steigt die abgesonderte Leichtphase in einen in der Trennkammer angeordneten Leichtphasensammelbereich. Insbesondere ist der Leichtphasensammelbereich oberhalb des Koaleszenzorgans oder des Bereichs, in dem die Leichtphase koalesziert angeordnet. Insbesondere schwimmt die abgesonderte Leichtphase auf dem Wasser auf. Insbesondere ist unter der abgesonderten Leichtphase die koaleszierte Leichtphase zu verstehen. Der Leichtphasensammelbereich soll insbesondere in Gravitationsrichtung im Einbauszustand der Trennkammer oberhalb des Koaleszenzorgans oder des Bereichs, in dem die Leichtphase koalesziert angeordnet sein. Insbesondere soll die aufsteigende Leichtphase in dem Leichtphasenbereich gesammelt werden, sodass ein Abziehen der Leichtphase vereinfacht ist. Beispielsweise weist der Leichtphasensammelbereich einen sich verjüngenden Querschnitt nach oben, in Gravitationsrichtung auf. Vorzugsweise ist der Leichtphasenauslass am oberen Ende des Leichtphasensammelbereichs vorgesehen.

Gemäß einer beispielhaften Ausführung weist die Trennkammer ein Gehäuse auf, das einen unteren Grundkörper, vorzugsweise einen zylindrischen oder kastenartigen Grundkörper, umfasst, an dessen oberen Ende ein nach oben vorstehender Sammelturm anschließt, in den die abgesonderte Leichtphase steigt. Oben und unten sollen in Bezug auf Gravitationsrichtung im Einbauzustand der Trennkammer definiert sein. Insbesondere ist das Gehäuse der Trennkammer aus Metall oder Kunststoff gefertigt. Vorzugsweise weist das Gehäuse eine Materialstärke von wenigstens 1 mm, insbesondere wenigstens 2 mm, vorzugsweise wenigstens 3 mm auf. In dem Grundkörper kann das Koaleszenzorgan angeordnet sein. Beispielsweise kann an dem Grundkörper ein Sichtfenster vorgesehen sein. Vorzugsweise sind der Grundkörper und der Sammelturm einstückig ausgeführt. Insbesondere schließt der Sammelturm derart an den Grundkörper an, dass keine Trennung zwischen den beiden besteht, insbesondere die Leichtphase ungehindert vom Grundkörper aus in den Sammelturm aufsteigen kann. Insbesondere weist ein zylindrischer Grundkörper eine Längsachse auf, die sich im Einbauzustand der Trennkammer senkrecht zur Gravitationsrichtung erstreckt. Beispielsweise ist der Grundkörper rotationssymmetrisch bezüglich der Längsachse. Insbesondere weist ein kastenartiger Grundkörper eine rechteckige, insbesondere quadratische Grundfläche auf. Der Sammelturm kann zylindrisch ausgeführt sein, wobei die Längsachse parallel zur Gravitationsrichtung liegt. Insbesondere liegt die Längsachse des Sammelturms senkrecht zur Längsachse des zylindrischen Grundkörpers. Beispielsweise kann zwischen Sammelturm und Grundkörper ein Verbindungsabschnitt vorgesehen sein, der sich vom Grundkörper aus zum Sammelturm hin verjüngt. Vorzugsweise ist der Leichtphasensammelbereich im Sammelturm vorgesehen. Insbesondere ist am Sammelturm der Leichtphasenauslass angeordnet, vorzugsweise am oberen Ende. Das Vorsehen von Grundkörper und Sammelturm bietet den Vorteil, dass der Vorgang des Koaleszierens der Leichtphase im Grundkörper unter ausreichend Platz geschehen kann, wobei die aufsteigende Leichtphase an einer Stelle aufkonzentriert wird, da diese einen wesentlich geringeren Anteil am Destillat ausmacht. Vom Sammelturm ist es leichter möglich, die Leichtphase vom Wasser abzuziehen.

Gemäß einer beispielhaften Ausführung sammelt sich die abgesonderte Leichtphase an einem domförmigen, insbesondere kuppelförmigen, oberen Ende des Sammelturms. Das obere Ende des Sammelturms ist im Einbauzustand der Trennkammer in Gravitationsrichtung definiert. Unter domförmig kann verstanden werden, dass sich der Querschnitt zum oberen Ende hin verjüngt. Insbesondere ist der Leichtphasenauslass der Trennkammer am obersten Punkt des domförmigen Endes angeordnet. Die domförmige Ausgestaltung des Sammelturms ermöglicht es, die aufschwimmende Leichtphase auf einen Punkt zu konzentrieren. Insbesondere können selbst kleine Mengen der Leichtphase zielgerichtet abgezogen werden.

Gemäß einer beispielhaften Ausführung wird das Vorliegen der Leichtphase in dem Leichtphasensammelbereich oder Sammelturm erfasst. Insbesondere wird das Vorliegen mittels eines Sensors erfasst. Insbesondere ist der Sensor am Gehäuse der Trennkammer angeordnet und ragt in den Leichtphasensammelbereich oder den Sammelturm hinein. Insbesondere stellt der Sensor ein Ausgangssignal bereit, anhand dessen die vorliegende Phase bestimmt werden kann. Beispielsweise gibt der Sensor, vorzugsweise kontinuierlich oder in Zeitintervallen von beispielsweise weniger als 1 Sekunde, insbesondere weniger als 5 Sekunden, weniger als 10 Sekunden oder weniger als 30 Sekunden, ein Signal mit einem Wert zwischen 0 und 1 aus, vorzugsweise mit zwei Dezimalstellen. Jeder der Phasen, Leichtphase, Wasser und Luft, kann ein korrespondierender Wertebereich zugeordnet werden. Durch Vergleich des vom Sensor ausgegebenen Werts mit den Wertebereichen der einzelnen Phasen kann auf die am Sensor vorliegende Phase geschlossen werden. Insbesondere basiert der Sensor auf dem Prinzip des Impedanzspektroskopie-Verfahrens, jedoch ist auch jedes andere Prinzip denkbar, mittels dem Leichtphase von Luft und Wasser unterschieden werden kann. Es ist denkbar, dass ein optischer Sensor eingesetzt wird. Beispielsweise handelt es sich bei dem Sensor um einen binären Füllstandsensor des Typs LMTx0x, LMTx1x, oder LMTx2x der Firma ifm electronic GmbH. Der Sensor bietet den Vorteil, im Initialisierungsbetrieb der Anlage, solange die Trennkammer nicht mit Destillat bzw. Wasser und Leichtphase gefüllt ist, zu erfassen, wann die Trennkammer vollständig gefüllt, bzw. luftleer ist und der Initialisierungsbetrieb abgeschlossen ist. Andererseits bietet der Sensor den Vorteil, dass das Vorliegen von Leichtphase erfasst werden kann und somit ein Abziehen derselben initiiert werden kann. Des Weiteren kann auch das Ende des Abziehens bestimmt werden, sobald Wasser am Sensor vorliegt, und keine Leichtphase mehr.

Gemäß einer beispielhaften Ausführung wird eine Menge des bereitgestellten Destillats erfasst. Insbesondere erfasst ein stromaufwärtig der Trennkammer angeordneter Sensor, wie ein Füllstandsensor, insbesondere im Wärmetauscher, eine Menge des vom Wärmetauscher bereitgestellten, insbesondere eine Menge von in dem Wärmetauscher vorliegenden, Destillats. Beispielsweise kann der Sensor in dem Wärmetauscher angeordnet sein. Es ist auch denkbar, dass der Sensor in einem Behälter vorgesehen ist, der derart mit dem Wärmetauscher in Fluidverbindung steht, dass aus der in dem Behälter vorliegenden Menge von Destillat auf die im Wärmetauscher vorliegende Mengen von Destillat geschlossen werden kann. Insbesondere kann der Sensor den Füllstand im Wärmetauscher erfassen. Insbesondere stellt der Sensor ein Ausgangssignal bereit, anhand dessen die vorliegende Destillatmenge bestimmt werden kann. Beispielsweise gibt der Sensor, vorzugsweise kontinuierlich oder in Zeitintervallen von beispielsweise weniger als 1 Sekunde, insbesondere weniger als 5 Sekunden, weniger als 10 Sekunden oder weniger als 30 Sekunden, ein Signal mit einem Wert, der die Menge von Destillat und/oder den Füllstand angibt aus. Beispielsweise wird die Menge mittels eines optischen Sensors oder eines elektrischen Sensors erfasst werden. Insbesondere ein Sensor, der auf dem Prinzip einer geführten Mikrowelle basiert. Insbesondere kann mittels der Erfassten Menge an vorliegendem Destillat ein Durchsatz an Destillat durch die Vorrichtung, insbesondere die Trennkammer geregelt bzw. angepasst werden.

Gemäß einer beispielhaften Ausführung wird die Leichtphase in einem, insbesondere zylindrischen, Koaleszenzgehäuse eines Koaleszenzorgans koalesziert. Das Koaleszenzgehäuse kann an einen Trennkammereinlass anschließen. Insbesondere kann das Koaleszenzgehäuse an einer Aufnahme im Gehäuse der Trennkammer vorgesehen sein, und vorzugsweise von außerhalb der Trennkammer zugänglich sein. Insbesondere ist das Koaleszenzgehäuse derart lösbar mit dem Gehäuse der Trennkammer verbunden, dass es ausgetauscht werden kann. Insbesondere ragt das Koaleszenzgehäuse in die Trennkammer hinein. Beispielsweise kann das Koaleszenzgehäuse einen Einlass aufweisen, der in Fluidverbindung mit dem Wärmetauscher steht. Insbesondere ist der Einlass derart an dem Koaleszenzgehäuse angeordnet, dass das Destillat über den Einlass parallel zu einer Mittelachse des Koaleszenzgehäuses in dieses einströmt. Vorzugsweise strömt das Destillat senkrecht zur Einströmrichtung, insbesondere radial nach außen von der Mittelachse, aus dem Koaleszenzgehäuse aus, insbesondere in die Trennkammer. Insbesondere kann das Koaleszenzgehäuse in einem weiteren, insbesondere hermetisch abgedichteten Gehäuse in der Trennkammer vorgesehen sein. Beispielsweise ist das Koaleszenzgehäuse hohlzylindrisch ausgeführt. Insbesondere kann das Destillat, insbesondere strömungsberuhigt, in das hohlzylindrische Koaleszenzgehäuse einströmen und wird radial nach außen aus dem Koaleszenzgehäuse gedrückt. Insbesondere ist an der Außenseite des Koaleszenzgehäuses, insbesondere in dem Bereich, der in die Trennkammer ragt, ein Koaleszenzmaterial angeordnet, in dem die Leichtphase koaleszieren kann. In dem Koaleszenzgehäuse kann ein Koaleszenzmaterial vorgesehen sein, in dem die Leichtphase koaleszieren kann. Insbesondere kann in dem Koaleszenzgehäuse und an dessen Außenseite ein Koaleszenzmaterial vorgesehen sein, in dem die Leichtphase koaleszieren kann. Beispielsweise ist das Koaleszenzgehäuse in dem Bereich, der innerhalb der Trennkammer angeordnet ist, durch das Koaleszenzmaterial gebildet. Es kann vorgesehen sein, dass innerhalb des Koaleszenzgehäuses ein anderes Koaleszenzmaterial vorgesehen ist als an der Außenseite des Koaleszenzgehäuses. Insbesondere bildet das Koaleszenzmaterial den Koaleszenzbereich des Koaleszenzorgans. Insbesondere dient das Koaleszenzgehäuse als Träger des Koaleszenzmaterials. In dem Koaleszenzbereich können im Destillat in Tröpfchen vorliegende Leichtphasen zu größeren Tropfen koaleszieren, insbesondere sich verbinden, insbesondere wenn sie den Koaleszenzbereich durchströmen. Stromabwärts des Koaleszenzorgans, insbesondere des Koaleszenzbereichs, kann die koaleszierte Leichtphase aufgrund der geringeren Dichte in Bezug auf das Wasser, in diesem aufsteigen, insbesondere darauf aufschwimmen. Die Leichtphase kann sich somit vom Wasser in der Trennkammer, insbesondere stromabwärtig des Koaleszenzorgans absondern, insbesondere ausfallen. Die Leichtphase steigt entgegen der Gravitationskraft in der Trennkammer auf und sammelt sich am oberen Ende der Trennkammer. Beispielsweise kann das Koaleszenzorgan als Koaleszenzkerze ausgestaltet sein. Beispielsweise kann ein Endlosfaden als Koaleszenzmaterial um das Koaleszenzgehäuse gewickelt sein. Insbesondere ist das Koaleszenzmaterial ein hydrophobes, insbesondere superhydrophobes, und/oder lipophiles Material. Vorzugsweise umfasst das Koaleszenzmaterial faserige Materialien, wie Kunststofffäden, beispielsweise aus Polypropylen, Polyester oder Nylon und/oder Naturfäden, beispielsweise aus Baumwolle und/oder Metallfäden, beispielsweise aus Edelstahl und/oder Glasfasern. Das Koaleszenzgehäuse bietet den Vorteil, dass das in die Trennkammer einströmende Destillat bzw. die Leichtphase koalesziert und sich somit vom Wasser absondern kann.

Gemäß einer beispielhaften Ausführung wird das Koaleszieren und/oder das Absondern der Leichtphase und/oder ein Füllstand der abgesonderten Leichtphase visuell, insbesondere durch ein Sichtfenster von außerhalb eines Gehäuses einer Trennkammer, erfasst. Insbesondere kann eine Bedienperson das Koaleszieren und/oder das Absondern der Leichtphase und/oder einen Füllstand der abgesonderten Leichtphase visuell erfassen. Insbesondere kann damit die korrekte Funktion des Verfahrens und von Bauteilen überwacht werden. Beispielsweise kann der Füllstand anhand einer Skala abgelesen werden. Insbesondere ist das Sichtfenster druckdicht, insbesondere hermetisch abgedichtet, mit dem Gehäuse der Trennkammer verbunden. Das Sichtfenster kann beispielsweise aus Glas oder Kunststoff, wie Plexiglas gefertigt sein. Insbesondere ist das Sichtfenster rund ausgeführt. Beispielsweise kann das Sichtfenster derart an dem Gehäuse der Trennkammer angeordnet sein, dass der Bereich des Koaleszenzorgans, der in die Trennkammer hineinragt von außen sichtbar ist. Beispielsweise kann das Sichtfenster auch am Sammelturm oder Leichtphasensammelbereich des Gehäuses der Trennkammer vorgesehen sein. Beispielsweise kann der im Sammelturm oder Leichtphasensammelbereich angeordnete Sensor inspiziert werden. Insbesondere kann über das Sichtfenster der Füllstand der Leichtphase abgelesen werden. Beispielsweise ist am Sichtfenster eine Skala vorgesehen. Insbesondere kann die Skala derart vorgesehen sein, dass anhand der Position der Phasengrenze zwischen Leichtphase und Wasser in Gravitationsrichtung in der Trennkammer eine Menge von vorliegender Leichtphase abgelesen werden kann.

Gemäß einer beispielhaften Ausführung der vorliegenden Erfindung wird das Wasser einem weiteren, insbesondere nachfolgenden, Koaleszenzprozess unterzogen, in dem eine weitere Leichtphase in dem Wasser koalesziert wird, und die weitere Leichtphase wird von Wasser abgesondert. Insbesondere erfolgt der weitere Koaleszenzprozess nach dem ersten Koaleszenzprozess. Insbesondere erfolgt der weitere Koaleszenzprozess in einer zweiten, in Fluidverbindung mit der Trennkammer, die eine erste Trennkammer darstellt, stehende, insbesondere nach einem der vorstehenden Aspekte und/oder beispielhaften Ausführungen ausgestaltete, Trennkammer, in der ein Koaleszenzorgan angeordnet, und eine Leichtphase von Wasser abzusondern ist, stromabwärts der ersten Trennkammer. Insbesondere strömt das Wasser nach dem Koaleszenzprozess in einen Bereich, in dem der weitere Koaleszenzprozess erfolgt. Insbesondere erfolgt der weitere Koaleszenzprozess stromabwärts des vorherigen Koaleszenzprozesses. Insbesondere kann die zweite Trennkammer beispielsweise über eine Fluidleitung mit der ersten Trennkammer verbunden werden. Insbesondere wird ein Wasserauslass der ersten Trennkammer mit dem Einlass der zweiten Trennkammer verbunden. Insbesondere ist das Koaleszenzorgan der zweiten Trennkammer stromaufwärtig in der zweiten Trennkammer angeordnet, sodass das Wasser aus der ersten Trennkammer das Koaleszenzorgan durchströmt, um in die zweite Trennkammer zu gelangen. Insbesondere ragt das Koaleszenzorgan in die zweite Trennkammer hinein. Vorzugsweise werden die beiden Trennkammern ausgehend vom Wärmetauscher in Strömungsrichtung hintereinander geschalten. Insbesondere durchströmt das Destillat zuerst die erste Trennkammer und das darin angeordnete Koaleszenzorgan und anschließend die zweite Trennkammer und das darin angeordnete Koaleszenzorgan. Insbesondere wird das Strömen des Destillats durch die erste und die zweite Trennkammer von einem stromabwärtig der zweiten Trennkammer angeordneten Ablassventil bestimmt. Insbesondere können weitere Trennkammern stromabwärts der zweiten Trennkammer angeordnet sein. Insbesondere ist denkbar, dass an der stromabwärtigsten Trennkammer ein Wasserablassventil vorgesehen ist, mittels dem die Strömung des Destillats durch alle Trennkammern geregelt wird. Durch die zwei Koaleszenzprozesse kann eine zweifache Reinigung erreicht werden. Dies führt zu einer verbesserten Leichtphasenabscheidung aus dem Destillat.

Gemäß einer beispielhaften Ausführung erfolgt das Koaleszieren und/oder das Absondern der weiteren Leichtphase von Wasser unter einem Überdruck von wenigstens 10 % des in dem bereitgestellten Destillat oder dem Wasser während des Koaleszierens und/oder Absondern der Leichtphase wirkenden Überdrucks. Insbesondere wird die zweite Trennkammer derart, insbesondere überdruckerhaltend, mit der ersten Trennkammer verbunden, dass der in dem Wärmetauscher und/oder der in der ersten Trennkammer wirkende Überdruck, vorzugsweise hydraulisch, so verlustfrei wie möglich in die zweite Trennkammer fortgesetzt oder übertragen wird. Darunter ist eine möglichst drosselfreie Verbindung zu verstehen, dass sich eine laminare oder druckverlustfreie Strömung von der ersten Trennkammer hin zu dem vorgeschalteten Koaleszenzorgan der zweiten Trennkammer etablieren kann. Insbesondere ist die zweite Trennkammer derart ausgebildet, dass sich der Überdruck aus dem Wärmetauscher und/oder aus der ersten Trennkammer in der zweiten Trennkammer aufbauen kann und über einen längeren Zeitraum, insbesondere konstant, gehalten werden kann. Dadurch kann eine Spontanverdampfung des Wassers im Destillat vom Wärmetauscher über die erste Trennkammer zum Koaleszenzorgan der zweiten Trennkammer vermieden werden. Insbesondere erfolgt das Koaleszieren und/oder Absondern der weiteren Leichtphase von Wasser unter einem Überdruckverlust vom Koaleszieren und/oder Absondern der Leichtphase von Wasser und/oder vom bereitgestellten Destillat, der möglichst gering ist, insbesondere nicht mehr als 90 %, insbesondere weniger als 80 %, weniger als 70 %, weniger als 60 %, weniger als 50 %, weniger als 40 %, weniger als 30 %, weniger als 20 %, vorzugsweise weniger als 10 % beträgt. Überdruckverluste, die durch Querschnittsänderung der Leitung oder Reibungs- und/oder Strömungsverluste im Destillat und/oder Wasser, insbesondere beim Strömen von der ersten Trennkammer zur zweiten Trennkammer, auftreten, können hingenommen werden. In der zweiten Trennkammer soll ein Überdruck von wenigstens 10 % des in dem Wärmetauscher und/oder der ersten Trennkammer wirkenden Überdrucks wirken. Überdruck bedeutet im Sinne der vorliegenden Erfindung Überdruck gegenüber atmosphärischem Druck, insbesondere der in der Umgebung der Vorrichtung vorliegende atmosphärische Druck. Insbesondere bezieht sich der Überdruck auf den absoluten Druck ohne hydrostatischen Anteil von Destillat und/oder Wasser und Leichtphase. Beispielsweise ist der Überdruck im Wärmetauscher am Auslass des Wärmetauschers, über den das Destillat zur Trennkammer strömt, erfasst. Insbesondere ist der Überdruck in der ersten Trennkammer am Einlass der Trennkammer, vorzugsweise stromaufwärts des Koaleszenzorgans erfasst oder an einem in Gravitationsrichtung oberen Ende in der ersten Trennkammer oder am Wasserauslass erfasst. Insbesondere ist der Überdruck in der zweiten Trennkammer am Einlass der Trennkammer, vorzugsweise stromaufwärts des Koaleszenzorgans erfasst oder an einem in Gravitationsrichtung oberen Ende in der zweiten Trennkammer erfasst. Vorzugsweise setzt sich der in dem Wärmetauscher wirkende Überdruck über das Destillat in die erste Trennkammer und über die erste Trennkammer in die zweite Trennkammer, insbesondere uneingeschränkt, fort. Vorzugsweise mindert sich der Überdruck im Destillat nur durch Querschnittsänderungen der Leitung oder Reibungs- und/oder Strömungsverluste des Destillats vom Wärmetauscher bis in die zweite Trennkammer. Insbesondere wirkt bereitgestellten Destillat ein Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Insbesondere erfolgt das Koaleszieren und/oder Absondern der Leichtphase von Wasser unter einem Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Insbesondere erfolgt das Koaleszieren und/oder Absondern der weiteren Leichtphase von Wasser unter einem Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Insbesondere wirkt der Überdruck von wenigstens 10 % des in dem Wärmetauscher oder des in der ersten Trennkammer wirkenden Überdrucks in der zweiten Trennkammer in einem Betriebszustand der Vorrichtung, in dem kein Fluid aus der zweiten Trennkammer ausströmen kann oder Fluid nur gedrosselt aus der zweiten Trennkammer ausströmen kann, insbesondere derart, dass ein Staudruck beim Ausströmen entsteht. Insbesondere wird der Überdruck in der ersten und der zweiten Trennkammer ausschließlich durch wenigstens ein Ablassventil und/oder eine Drossel, stromabwärts des Koaleszenzorgans der ersten und/oder der zweiten Trennkammer entspannt, damit insbesondere eine Spontanverdampfung des Wassers in Strömungsrichtung betrachtet nur stromabwärts des Koaleszenzorgans und des Trennvorgangs zwischen Wasser und Leichtphase in der ersten Trennkammer und der zweiten Trennkammer einhergeht. Insbesondere ist der Überdruck in der ersten und der zweiten Trennkammer im Bereich des Koaleszenzorgans dann zu messen, wenn das Ablassventil / die Drossel geschlossen ist. Durch das Aufrechterhalten des Überdrucks aus dem Wärmetauscher bis in die zweite Trennkammer, insbesondere über das Koaleszenzorgan der ersten Trennkammer und der zweiten Trennkammer, ergibt sich der Vorteil, dass es nicht durch rasche Druckentspannung zu einer Spontanverdampfung des Wassers kommt, solange die Leichtphase nicht von Wasser getrennt ist, sprich im Destillat. Bei einer Spontanverdampfung des Wassers im Destillat wird das Destillat stark durchmischt, sodass die Leichtphase stärker emulgiert und es erschwert ist, diese mittels des Koaleszenzorgans abzusondern. Insbesondere ist die Wirkung des Koaleszenzorgans besonders gut, wenn dort strömungsberuhigtes Destillat einströmt, dessen Druck sich vor und während des Prozesses des Koaleszierens ändert.

Gemäß einer beispielhaften Ausführung erfolgt das Koaleszieren und/oder das Absondern der weiteren Leichtphase von Wasser unter einem Überdruck von wenigstens 20 %, insbesondere wenigstens 30 %, wenigstens 40 %, wenigsten 50 %, wenigsten 60 %, wenigsten 70 %, wenigsten 80 %, oder wenigstens 90 %, des in dem bereitgestellten Destillat oder dem Wasser während des Koaleszierens und/oder Absondern der Leichtphase wirkenden Überdrucks. Insbesondere wirkt in der zweiten Trennkammer ein Überdruck von wenigstens 20 %, insbesondere wenigstens 30 %, wenigstens 40 %, wenigsten 50 %, wenigsten 60 %, wenigsten 70 %, wenigsten 80 %, oder wenigstens 90 %, des in dem Wärmetauscher oder des in der ersten Trennkammer wirkenden Überdrucks. Insbesondere erfolgt das Koaleszieren und/oder Absondern der weiteren Leichtphase von Wasser unter einem Überdruck von bis zu 500 mbar, insbesondere von wenigstens 300 mbar, wenigstens 250 mbar, wenigstens 200 mbar, wenigstens 150 mbar, wenigstens 100 mbar, wenigstens 50 mbar, vorzugsweise wenigstens 30 mbar. Besonders bevorzugt erfolgt das Koaleszieren und/oder Absondern der weiteren Leichtphase von Wasser unter einem Überdruck des in dem bereitgestellten Destillat oder des beim Koaleszieren und/oder Absondern der Leichtphase von Wasser wirkenden Überdrucks nur abzüglich von Strömungsverlusten, die das Destillat beim Strömen, insbesondere vom Wärmetauscher in die erste Trennkammer und/oder von der ersten Trennkammer in die zweite Trennkammer in der Fluidleitung, erfährt. Besonders vorteilhaft ist es, wenn der Druckverlust des Überdrucks vom bereitgestellten Destillat zum Koaleszieren und/oder Absondern der weiteren Leichtphase von Wasser möglichst gering ist, sodass ein insbesondere weiteres Vermischen des Destillats bzw. des Wassers und der Leichtphase aufgrund von Druckentspannung unterbunden werden kann. Dies kann die Effizienz der Abscheidung bzw. des Koaleszierens der Leichtphase steigern und die Reinigung des Wassers verbessern.

Gemäß einer beispielhaften Ausführung strömt das Wasser uneingeschränkt von einer ersten Trennkammer, in der die Leichtphase koalesziert und von Wasser abgesondert wird, in eine zweite Trennkammer, in der die weitere Leichtphase koalesziert wird und von Wasser abgesondert wird. Insbesondere strömt das Wasser möglichst druckverlustfrei, insbesondere durchströmt das Wasser keine druckmindernden Maßnahmen wie Ventile oder Drosseln. Insbesondere wirkt der in dem Wärmetauscher oder der in der ersten Trennkammer wirkende Überdruck uneingeschränkt in der zweiten Trennkammer und/oder das Wasser kann aus der ersten Trennkammer uneingeschränkt in die zweite Trennkammer strömen. Darunter ist insbesondere zu verstehen, dass sich der Überdruck aus dem Wärmetauscher über das Destillat in die erste und die zweite Trennkammer fortsetzt, ohne dass beispielsweise Ventile und/oder Drosseln in der Fluidverbindung vorgesehen sind, die druckmindernd wirken. Dadurch kann erreicht werden, dass der in der zweiten Trennkammer wirkende Überdruck möglichst dem in dem Wärmetauscher oder dem in der ersten Trennkammer wirkenden Überdruck entspricht. Insbesondere findet keine Druckentspannung des Destillats stromaufwärts des Koaleszierens und/oder Absondern der Leichtphase und/oder der weiteren Leichtphase statt. Insbesondere muss das Destillat keine druckmindernden Maßnahmen wie Ventile oder Drosseln in der Fluidverbindung zwischen Wärmetauscher und Trennkammer durchströmen. Dies bietet den Vorteil, dass eine Spontanverdampfung des Wassers im Destillat verhindert wird.

Gemäß einer beispielhaften Ausführung entspricht die weitere Leichtphase der Leichtphase oder ist eine andere Leichtphase. Insbesondere kann das Koaleszieren der Leichtphase in einem anderen Koaleszenzmaterial erfolgen als das Koaleszieren der weiteren Leichtphase. Insbesondere wird in der zweiten Trennkammer eine Leichtphase vom Wasser abgesondert, die der in der der ersten Trennkammer abzusondernden Leichtphase oder einer anderen in dem Destillat vorhandenen Leichtphase entspricht. Insbesondere kann es vorgesehen sein, dass in der ersten Trennkammer eine erste Leichtphase vom Destillat abgesondert wird und in der zweiten Trennkammer die gleiche Leichtphase abgesondert wird. Beispielsweise kann das Koaleszenzorgan beider Trennkammern das gleiche Material umfassen. Es kann auch vorgesehen sein, dass in der ersten Trennkammer eine erste Leichtphase aus dem Destillat abgesondert wird und in der zweiten Trennkammer ein zweite Leichtphase aus dem Destillat abgesondert wird. Insbesondere kann sich das Material des Koaleszenzorgans in der ersten Trennkammer von dem Material des Koaleszenzorgans in der zweiten Trennkammer unterscheiden. Dies bietet den Vorteil, dass das Destillat verschiedene Koaleszenzorgane durchläuft und somit eine zielgerichtetere Absonderung durch speziell gewählte Koaleszenzmaterialien erfolgen kann.

Gemäß einem weiteren Aspekt der vorliegenden Erfindung, der mit den vorhergehenden Aspekten und beispielhaften Ausführungen kombinierbar ist, ist ein Verfahren zum Steuern und/oder Regeln einer Vorrichtung, insbesondere nach einem der vorstehenden Aspekte und/oder beispielhaften Ausführungen, zum Aufbereiten eines Prozess- oder Industriemediums, insbesondere eines wässrigen Prozess- oder Industriemediums, insbesondere einer kohlenwasserstoffhaltigen Emulsion, bereitgestellt. Eine Füllstandhöhe von aus dem Prozess- oder Industriemedium bereitgestellten Destillat, das zumindest Wasser und eine weniger dichte Leichtphase enthält, wird erfasst. Ein Soll-Ist-Wert-Vergleich der erfassten Füllstandhöhe mit einem Referenzwert wird vollzogen und anhand des Soll-Ist-Wert-Vergleichs wird eine Zufuhrmenge von Destillat in eine Trennkammer, in der das Destillat einem Koaleszenzprozess unterzogen wird, bei dem die Leichtphase im Destillat koalesziert, und die Leichtphase von Wasser abgesondert wird, durch Abziehen von Wasser und/oder Leichtphase eingestellt.

Beispielsweise handelt es sich bei Prozess- oder Industriemedien um Abwässer oder Brauchwasser, das im Zyklus einer Anlage regelmäßig gereinigt wird, aus industriellen Anlagen oder von der Herstellung von Produkten. Ein Prozess- oder Industriemedium ist in vielen Fällen mit Leichtphasen, wie mit Ölen oder Salzen und Waschsubstanzen oder dergleichen, versetztes Wasser. Beispiele dafür sind Kühlschmieremulsionen, Druckgussemulsionen, Bodenreinigungswasser, Wasch- und Entfettungsbäder, Spülbäder oder Lackiervorbehandlungen sowie Abwässer aus Beizverfahren zur Oberflächenbehandlung von Metallen.

Insbesondere kann von einem Wärmetauscher aus dem Prozess- oder Industriemedium, insbesondere kontinuierlich, ein unter Überdruck stehendes Destillat bereitgestellt werden, das zumindest Wasser und eine weniger dichte Leichtphase enthält. Der Wärmetauscher kann Teil einer Verdampfungsanlage sein, deren Aufbau beispielsweise aus der EP 4 438 149 A1 bekannt ist, wobei diese Anlage als unter Bezugnahme in der Beschreibung aufgenommen sein soll. Insbesondere erfolgt die Bereitstellung des Destillats durch Kondensation von unter Überdruck stehendem Dampf, insbesondere Brüden, zu Destillat, insbesondere in einer Kondensationsseite des Wärmetauschers. Insbesondere wird das Prozess- oder Industriemedium verdampft, insbesondere in einem dem Wärmetauscher vorgeschalteten Verdampfer. Insbesondere wird der entstehende Dampf, insbesondere Brüden, verdichtet, insbesondere mittels eines dem Wärmetauscher vorgeschalteten Verdichters. Beispielsweise kann das Prozess- oder Industriemedium unter Unterdruck gegenüber atmosphärischem Druck, insbesondere im Vakuum, verdampft werden. Auch kann das Prozess- oder Industriemedium unter atmosphärischem Druck, insbesondere im Bereich von +- 100 mbar gegenüber atmosphärischem Druck, verdampft werden. Das Prozess- oder Industriemedium kann auch unter Überdruck gegenüber atmosphärischem Druck, verdampft werden. Insbesondere ist der Verdampfer dazu eingerichtet, Feststoffe und/oder Schwerphasen, die insbesondere eine höhere Dichte als Wasser aufweisen, von dem Prozess- oder Industriemedium abzuscheiden.

Der Verdichter kann dazu eingerichtet sein, den im Verdampfer entstehenden Dampf, insbesondere Brüden, so stark zu verdichten, dass dieser einen Überdruck gegenüber dem atmosphärischen Druck aufweist, insbesondere unabhängig vom Druck des Dampfes vor dem Verdichter. Insbesondere ist ein Bereich des Wärmetauschers, vorzugsweise ein Gehäuse, in dem sich das Destillat sammelt, hermetisch, insbesondere gegenüber der Atmosphäre, abgedichtet. Das Destillat kann im Wärmetauscher unter dem Überdruck, den ein vorgeschalteter Verdichter erzeugt.

Insbesondere kann das Destillat ein wässriges Medium sein, das vorzugsweise größtenteils aus Wasser besteht. Insbesondere kann das Destillat neben Wasser und Leichtphase weitere Stoffe und/oder Schwerphasen enthalten, wie beispielsweise Salze oder Feststoffe. Das Destillat kann eine oder mehrere Leichtphasen, wie Kohlenwasserstoffe, beispielsweise Öle, Benzin, Diesel, Kerosin oder dergleichen, deren Dichte geringer als die von Wasser ist, aufweisen. Beispielsweise kann das Destillat in seiner Zusammensetzung dem Prozess- oder Industriemedium entsprechen, insbesondere ohne darin befindliche Feststoffe und/oder Schwerphasen, die eine höhere Dichte im Vergleich zu Wasser aufweisen.

Beispielsweise kann das Destillat in eine in Fluidverbindung mit dem Wärmetauscher stehende Trennkammer, in der ein Koaleszenzorgan angeordnet ist und die Leichtphase von Wasser abgesondert wird, strömen. Die Trennkammer kann über eine Fluidleitung mit dem Wärmetauscher verbunden sein. Insbesondere ist die Trennkammer stromabwärtig des Wärmetauschers angeordnet. Vorzugsweise ist die Fluidverbindung überdruckerhaltend ausgebildet. Darunter ist insbesondere zu verstehen, dass in der Fluidverbindung zwischen Wärmetauscher und Trennkammer keine druckmindernden Maßnahmen, wie Ventile und/oder Drosseln, vorgesehen sind. Die Fluidverbindung kann es dem Destillat ermöglichen, aus dem Wärmetauscher in die Trennkammer zu strömen.

Vorzugsweise wird die Trennkammer, insbesondere vor Betrieb der Vorrichtung, luftleer gemacht, vorzugsweise vollständig mit Fluid, insbesondere Destillat, beziehungsweise Wasser und Leichtphase, gefüllt. Insbesondere ist das Koaleszenzorgan stromaufwärtig in der Trennkammer angeordnet, sodass einströmendes Destillat durch das Koaleszenzorgan in die Trennkammer strömt. Vorzugsweise ist das Koaleszenzorgan dazu eingerichtet, das Destillat in Wasser und Leichtphase zu trennen. Es ist möglich, dass im Wasser in der Trennkammer weitere Verunreinigungen oder nicht abgesonderte Leichtphasen vorliegen. Vorzugsweise werden zumindest 80 %, insbesondere wenigstens 90 %, insbesondere Gewichtsprozent oder Volumenprozent, der im Destillat vorliegenden Leichtphase vom Wasser abgesondert.

Insbesondere wird das einströmende Destillat in einem stromaufwärtiger Bereich eines Koaleszenzorgans beruhigt. Insbesondere wird die Leichtphase in einem Koaleszenzbereich eines Koaleszenzorgans koalesziert. Beispielsweise können im Koaleszenzprozess im Destillat in Tröpfchen vorliegende Leichtphasen zu größeren Tropfen koaleszieren, insbesondere verbunden werden, insbesondere wenn sie einen Koaleszenzbereich und/oder ein Koaleszenzorgan durchströmen. Insbesondere steigt, insbesondere schwimmt, die koaleszierte Leichtphase aufgrund der geringeren Dichte in Bezug auf das Wasser, in diesem auf. Die Leichtphase kann sich somit vom Wasser absondern. Insbesondere steigt die Leichtphase entgegen der Gravitationskraft in der Trennkammer auf und sammelt sich am oberen Ende der Trennkammer. Beispielsweise kann der Koaleszenzprozess in einem Koaleszenzorgan, vorzugsweise einer Koaleszenzkerze erfolgen. Insbesondere umfasst das Koaleszenzorgan ein hydrophobes, insbesondere superhydrophobes, und/oder lipophiles Material. Beispielsweise als Endlosfaden um einen Stützkern gewickeltes Filterelement. Vorzugsweise umfasst das Koaleszenzorgan faserige Materialien, wie Kunststofffäden, beispielsweise aus Polypropylen, Polyester oder Nylon und/oder Naturfäden, beispielsweise aus Baumwolle und/oder Metallfäden, beispielsweise aus Edelstahl und/oder Glasfasern.

Insbesondere kann die Füllstandhöhe, insbesondere in einem Wärmetauscher erfasst werden. Insbesondere kann die Füllstandhöhe mittels eines Sensors gemessen werden. Beispielsweise mittels eines optischen Sensors oder eines elektrischen Sensors. Insbesondere ein Sensor, der auf dem Prinzip einer geführten Mikrowelle basiert. Beispielsweise kann der Füllstand mittels eines Drucksensors erfasst werden, der den Füllstand über den vorliegenden hydrostatischen Druck erfasst. Der Füllstand kann auch indirekt, beispielsweise über einen Sensor erfasst werden, der eine Durchflussmenge von zu reinigendem Prozess- oder Industriemedium in die Vorrichtung erfasst. Insbesondere wird der Füllstand kontinuierlich oder periodisch, insbesondere zyklisch, beispielsweise in Zeitintervallen von höchstens 1 Sekunde, insbesondere höchstens 5 Sekunden, höchstens 10 Sekunden oder höchstens 30 Sekunden, erfasst. Insbesondere wird der erfasste Füllstand an eine Steuereinrichtung übergeben.

Beispielsweise erfolgt der Soll-Ist-Wert-Vergleich in einer Steuereinrichtung. Insbesondere wird der Referenzwert aus einer Datenbank abgefragt. Insbesondere wird der Soll-Ist-Wert-Vergleich mit zwei Referenzwerten vollzogen. Insbesondere kann der Referenzwert von einer Bedienperson bereitgestellt oder eingestellt werden. Beispielsweise kann der Referenzwert über eine Schnittstelle, beispielsweise einen Schalter oder Regler oder ein Display, vorzugsweise ein Touchscreen, eingestellt werden.

Insbesondere wird eine Menge von durch das Koaleszenzorgan strömenden Destillats über ein stromabwärtig der Trennkammer angeordnetes, mit dieser in Fluidverbindung stehendes Ablassventil, auf Basis eines Sensorsignals eines Sensors, insbesondere Füllstandsensors, zum Erfassen einer Menge des von dem Wärmetauscher bereitgestellten Destillats, begrenzt. Beispielsweise kann der Sensor in dem Wärmetauscher angeordnet sein. Es ist auch denkbar, dass der Sensor in einem Behälter vorgesehen ist, der derart mit dem Wärmetauscher in Fluidverbindung steht, dass aus der in dem Behälter vorliegenden Menge von Destillat auf die im Wärmetauscher vorliegende Mengen von Destillat geschlossen werden kann. Insbesondere kann der Sensor den Füllstand im Wärmetauscher erfassen. Insbesondere kann mittels der Erfassten Menge an vorliegendem Destillat ein Durchsatz an Destillat durch die Vorrichtung, insbesondere die Trennkammer geregelt bzw. angepasst werden. Insbesondere erfolgt das Abziehen Wasser und/oder Leichtphase über ein Ablassventil. Insbesondere wird das Wasser über ein erstes Ablassventil und die Leichtphase über ein zweites Ablassventil abgezogen. Insbesondere erfolgt das Abziehen von Wasser und/oder Leichtphase durch Öffnen eines Ablassventils. Insbesondere ist das Ablassventil stromabwärts des Koaleszenzprozesses, insbesondere der Trennkammer angeordnet. Insbesondere erfolgt das Abziehen von Wasser und/oder Leichtphase kontinuierlich oder periodisch. Insbesondere wird die Menge an abgezogenem Wasser und/oder Destillat durch Begrenzen der Durchstrommenge von Wasser und/oder Destillat durch das Ablassventil eingestellt. Beispielsweise entspricht die Menge an Abgezogenem Wasser und/oder Leichtphase der Zufuhrmenge von Destillat. Insbesondere wird die Zufuhrmenge gedrosselt, insbesondere auf Null gedrosselt, wenn die erfasste Füllstandhöhe geringer als der Referenzwert ist. Insbesondere wird die Zufuhrmenge von Destillat erhöht, wenn der Referenzwert größer als der Referenzwert ist. Insbesondere ist das Ablassventil ein elektrisches, hydraulisches und/oder pneumatisches Ventil. Insbesondere ist das Ablassventil hermetisch verschließbar. Insbesondere liegt ein Druckgefälle über das Ablassventil von wenigstens 5 mbar gegenüber atmosphärischem Druck vor. Insbesondere besteht das Druckgefälle über das Ablassventil aufgrund des in der Trennkammer wirkenden Überdrucks. Beispielsweise ist das Druckgefälle unabhängig von einem hydrostatischen Druck des Fluids, das an dem Ablassventil stromaufwärtig vorliegt, insbesondere im geschlossenen Zustand des Ablassventils ansteht. Die Ausströmrichtung kann von der Trennkammer zur Atmosphäre hin definiert werden. Das Druckgefälle von wenigstens 5 mbar bietet den Vorteil, dass Fluid, insbesondere entgegen der Gravitationsrichtung, aus der Trennkammer abgelassen werden kann, ohne externe Energie zuzuführen. Dies ermöglicht ein energieeffizientes Ablassen von Fluid aus der Trennkammer. Ein weiterer Vorteil besteht darin, dass das Fluid aus der Kammer gedrückt wird, dabei kommt es nicht zu etwaigen Verwirbelungen des Fluids die beispielsweise durch den Sog einer Pumpe hervorgerufen werden. Dadurch kann die Leichtphase oder das Wasser strömungsberuhigt und ohne vermischen mit der anderen Phase aus der Trennkammer abgelassen werden. Die Steuereinheit soll beispielsweise dazu eingerichtet sein, ein elektrisches, pneumatisches und/oder hydraulisches Stellsignal an das Ablassventil übertragen. Insbesondere stellt das Ablassventil auf Basis des Stellsignals einen Strömungsquerschnitt im Ablassventil ein. Insbesondere stellt der Wärmetausche kontinuierlich unter Überdruck stehendes Destillat bereit, das sich in dem Wärmetauscher akkumuliert. Das Destillat im Wärmetauscher kann allein über die Fluidverbindung in die Trennkammer aus dem Wärmetauscher ausströmen. Das Ablassventil kann so angesteuert werden, beispielsweise über ein zentrale Steuereinrichtung, dass bei einem bestimmten Sensorsignal, insbesondere bei Erreichen eines vorbestimmten Werts, das Ablassventil geöffnet oder geschlossen wird. Insbesondere kann das Ablassventil auch derart angesteuert werden, dass die Durchströmmenge, insbesondere der Strömungsquerschnitt des Ablassventils, erhöht oder verringert wird.

Gemäß einer beispielhaften Ausführung wird das Abziehen von Wasser und/oder Leichtphase derart eingestellt, dass die erfasste Füllstandhöhe höchstens 25 %, insbesondere höchstens 20 %, höchstens 15 %, höchstens 10 %, höchstens 5 %, höchstens 2 %, vorzugsweise höchstens 1 %, von einer vorbestimmten Füllstandhöhe, insbesondere vom Referenzwert, abweicht. Insbesondere erfolgt das Einstellen kontinuierlich oder periodisch, insbesondere zyklisch, beispielsweise in Zeitintervallen von höchstens 1 Sekunde, insbesondere höchstens 5 Sekunden, höchstens 10 Sekunden oder höchstens 30 Sekunden. Insbesondere wird das Ablassventil derart gesteuert, insbesondere die Menge des aus der Trennkammer ausströmenden Fluids derart gedrosselt, dass die vorliegende, vom Wärmetauscher bereitgestellte Menge von Destillat höchstens 25 %, insbesondere höchstens 20 %, höchstens 15 %, höchstens 10 %, höchstens 5 %, höchstens 2 %, vorzugsweise höchstens 1 %, von einer vorbestimmten Menge abweicht. Insbesondere soll der Füllstand von Destillat im Wärmetauscher höchstens 25 %, insbesondere höchstens 20 %, höchstens 15 %, höchstens 10 %, höchstens 5 %, höchstens 2 %, vorzugsweise höchstens 1 %, von einem vorbestimmten Füllstand im Wärmetauscher abweichen. Die, insbesondere im Wärmetauscher, vorliegende Menge von Destillat soll vorzugsweise konstant gehalten werden. Insbesondere soll die Menge an aus dem Wärmetauscher ausströmenden Destillat der Menge an im Wärmetauscher entstehenden Destillat entsprechen. Es sollen Fluktuationen in der vorliegenden Menge von Destillat zugelassen sein, vorzugsweise sollen diese möglichst gering sein. Insbesondere wird eine kontinuierliche Strömung von Fluid aus der Trennkammer durch das Ablassventil zugelassen. Vorzugsweise begrenzt und/oder drosselt ein Ablassventil das Abziehen des Fluids derart, dass sich ein Staudruck im Fluid, insbesondere der Trennkammer aufbauen kann. Es hat sich herausgestellt, dass durch die im Wesentlichen konstant gehaltene Menge von Destillat und insbesondere die kontinuierliche Strömung von Destillat, insbesondere durch den Wärmetauscher die Effizienz des Wärmetauschprozesses im Wärmetauscher verbessert ist. Zudem kann sich durch das kontinuierliche Strömen eine geringe Strömungsgeschwindigkeit des Destillats, bei hoher Durchsatzmenge, beispielsweise von mehr als 500 Liter Prozess- oder Industriemedium pro Stunde, insbesondere durch das Koaleszenzorgan einstellen, was zu einer Strömungsberuhigung führt und den Abscheideprozess der Leichtphase verbessert.

Gemäß einer beispielhaften Ausführung wird das Abziehen von Wasser und/oder Leichtphase derart eingestellt, dass ein Abziehen erfolgt, sobald die erfasste Füllstandhöhe einen vorbestimmten oberen Referenzwert erreicht und das Abziehen beendet wird, sobald die erfasste Füllstandhöhe einen vorbestimmten unteren Referenzwert erreicht. Insbesondere wird das Ablassventil geöffnet, sobald die, insbesondere vom Wärmetauscher, bereitgestellte Menge von Destillat einen vorbestimmten oberen Grenzwert erreicht und geschlossen, sobald die, insbesondere vom Wärmetauscher, bereitgestellte Menge von Destillat einen vorbestimmten unteren Grenzwert erreicht. Insbesondere kann die Steuereinheit das Sensorsignal mit zwei, vorzugsweise in einer Datenbank hinterlegten, vorbestimmten Grenzwerten abgleichen. Beispielsweise kann die Menge von Destillat im Wärmetauscher einem Füllstand des Destillats im Wärmetauscher entsprechen. Insbesondere ist das Ablassventil geschlossen, solange ein oberer, insbesondere vorbestimmter, Füllstand von Destillat im Wärmetauscher nicht erreicht ist. Vorzugsweise wird bei Erreichen des oberen Referenzwerts das Ablassventil derart eingestellt, dass dieses geöffnet wird. Insbesondere drosselt und/oder begrenzt das Ablassventil das ausströmende Fluid aus der Trennkammer derart, dass ein Staudruck in dem Fluid entsteht. Vorzugsweise wird bei Erreichen des unteren Referenzwerts das Ablassventil derart eingestellt, dass dieses geschlossen wird. Insbesondere wird das Ablassventil periodisch, insbesondere zyklisch, geöffnet und/oder geschlossen. Beispielsweise kann eine vorbestimmte Menge an Destillat, insbesondere im Wärmetauscher, angestaut werden. Insbesondere strömt eine vorbestimmte Menge an Destillat in die Trennkammer, ehe das Ablassventil geschlossen wird. Insbesondere bei geringen Durchsatzmengen von Prozess- oder Industriemedien, beispielsweise von weniger als 500 Liter pro Stunde, ist diese Regelung vorteilhaft. Es hat sich herausgestellt, dass durch die zyklische Strömung im Koaleszenzorgan koaleszierte Leichtphasen, die in dem Zeitraum koaleszieren in dem keine Strömung vorliegt, aus dem Koaleszenzorgan gespült werden können und so eine verbesserte Abscheidung der Leichtphasen aus dem Destillat erfolgt.

Gemäß einer beispielhaften Ausführung ist ein Verfahren bereitgestellt, das gemäß der Funktion der Vorrichtung nach einem der vorstehenden Aspekte und/oder beispielhaften Ausführungen verfährt.

Gemäß einem weiteren Aspekt der vorliegenden Erfindung, der mit den vorhergehenden Aspekten und beispielhaften Ausführungen kombinierbar ist, ist einen Verfahren zum Nachrüsten einer Vorrichtung zum Aufbereiten eines Prozess- oder Industriemediums, insbesondere eines wässrigen Prozess- oder Industriemediums, insbesondere einer kohlenwasserstoffhaltigen Emulsion, bereitgestellt. Die Vorrichtung umfasst einen Wärmetauscher, der dazu eingerichtet ist, aus dem Prozess- oder Industriemedium ein unter Überdruck stehendes Destillat bereitzustellen, das zumindest Wasser, und eine weniger dichte Leichtphase enthält, und eine in Fluidverbindung mit dem Wärmetauscher stehende Trennkammer, in der ein Koaleszenzorgan angeordnet und die Leichtphase von Wasser abzusondern ist. Die Vorrichtung wird derart nachgerüstet, dass die Vorrichtung nach einem der vorstehenden Aspekte und/oder beispielhaften Ausführungen ausgestaltet ist und/oder betrieben werden kann. Insbesondere können an der Vorrichtung einzelne Komponenten nachgerüstet und/oder ausgetauscht werden, wie beispielsweise die Trennkammer.

Insbesondere wird die Trennkammer derart nachgerüstet, dass diese, insbesondere hermetisch, gegenüber der Atmosphäre abgedichtet werden kann.

Beispielsweise handelt es sich bei Prozess- oder Industriemedien um Abwässer oder Brauchwasser, das im Zyklus einer Anlage regelmäßig gereinigt wird, aus industriellen Anlagen oder von der Herstellung von Produkten. Ein Prozess- oder Industriemedium ist in vielen Fällen mit Leichtphasen, wie mit Ölen oder Salzen und Waschsubstanzen oder dergleichen, versetztes Wasser. Beispiele dafür sind Kühlschmieremulsionen, Druckgussemulsionen, Bodenreinigungswasser, Wasch- und Entfettungsbäder, Spülbäder oder Lackiervorbehandlungen sowie Abwässer aus Beizverfahren zur Oberflächenbehandlung von Metallen.

Der Wärmetauscher kann Teil einer Verdampfungsanlage sein, deren Aufbau beispielsweise aus der EP 4 438 149 A1 bekannt ist, wobei diese Anlage als unter Bezugnahme in der Beschreibung aufgenommen sein soll. Insbesondere ist unter dem Wärmetauscher eine Kondensationsseite des Wärmetauschers zu verstehen, in der unter Überdruck stehender Dampf, insbesondere Brüden, zu Destillat kondensiert. Insbesondere ist dem Wärmetauscher ein Verdampfer, der das Prozess- oder Industriemedium verdampft und ein Verdichter, der den entstehenden Dampf, insbesondere Brüden, verdichtet, vorgeschaltet. Beispielsweise kann es sich bei dem Verdampfer um einen sogenannten Vakuumverdampfer, der das Prozess- oder Industriemedium unter Unterdruck gegenüber atmosphärischem Druck, insbesondere im Vakuum, verdampft, handeln. Auch soll ein atmosphärischer Verdampfer als ein solcher Verdampfer verstanden werden, der das Prozess- oder Industriemedium unter atmosphärischem Druck, insbesondere im Bereich von +- 100 mbar gegenüber atmosphärischem Druck, verdampft. Es kann sich auch um einen Überdruckverdampfer, der das Prozess- oder Industriemedium unter Überdruck gegenüber atmosphärischem Druck, verdampft, handeln. Insbesondere ist der Verdampfer dazu eingerichtet, Feststoffe und/oder Schwerphasen, die insbesondere eine höhere Dichte als Wasser aufweisen, von dem Prozess- oder Industriemedium abzuscheiden.

Der Verdichter kann dazu eingerichtet sein, den im Verdampfer entstehenden Dampf, insbesondere Brüden, so stark zu verdichten, dass dieser einen Überdruck gegenüber dem atmosphärischen Druck aufweist, insbesondere unabhängig vom Druck des Dampfes vor dem Verdichter. Insbesondere ist ein Bereich des Wärmetauschers, vorzugsweise ein Gehäuse, in dem sich das Destillat sammelt, hermetisch, insbesondere gegenüber der Atmosphäre, abgedichtet. Insbesondere steht das Destillat im Wärmetauscher unter dem Überdruck, den ein vorgeschalteter Verdichter erzeugt.

Insbesondere kann das Destillat ein wässriges Medium sein, das vorzugsweise größtenteils aus Wasser besteht. Insbesondere kann das Destillat neben Wasser und Leichtphase weitere Stoffe und/oder Schwerphasen enthalten, wie beispielsweise Salze oder Feststoffe. Das Destillat kann eine oder mehrere Leichtphasen, wie Kohlenwasserstoffe, beispielsweise Öle, Benzin, Diesel, Kerosin oder dergleichen, deren Dichte geringer als die von Wasser ist, aufweisen. Beispielsweise kann das Destillat in seiner Zusammensetzung dem Prozess- oder Industriemedium entsprechen, insbesondere ohne darin befindliche Feststoffe und/oder Schwerphasen, die eine höhere Dichte im Vergleich zu Wasser aufweisen.

Die Trennkammer kann über eine Fluidleitung mit dem Wärmetauscher verbunden sein. Insbesondere ist die Trennkammer stromabwärtig des Wärmetauschers angeordnet. Vorzugsweise ist die Fluidverbindung überdruckerhaltend ausgebildet. Darunter ist insbesondere zu verstehen, dass in der Fluidverbindung zwischen Wärmetauscher und Trennkammer keine druckmindernden Maßnahmen, wie Ventile und/oder Drosseln, vorgesehen sind. Die Fluidverbindung kann es dem Destillat ermöglichen, aus dem Wärmetauscher in die Trennkammer zu strömen.

Vorzugsweise ist die Trennkammer, insbesondere im Betrieb der Vorrichtung, luftleer, vorzugsweise vollständig mit Fluid, insbesondere Destillat, beziehungsweise Wasser und Leichtphase, gefüllt. Insbesondere ist das Koaleszenzorgan stromaufwärtig in der Trennkammer angeordnet, sodass einströmendes Destillat durch das Koaleszenzorgan in die Trennkammer strömt. Vorzugsweise ist das Koaleszenzorgan dazu eingerichtet, das Destillat in Wasser und Leichtphase zu trennen. Es ist möglich, dass im Wasser in der Trennkammer weitere Verunreinigungen oder nicht abgesonderte Leichtphasen vorliegen. Vorzugsweise sind in der Trennkammer zumindest 80 %, insbesondere wenigstens 90 %, insbesondere Gewichtsprozent oder Volumenprozent, der im Destillat vorliegenden Leichtphase vom Wasser abzusondern. Insbesondere beruhigt ein stromaufwärtiger Bereich des Koaleszenzorgans das einströmende Destillat. In einem Koaleszenzbereich des Koaleszenzorgans, kann dieses dafür sorgen, dass im Destillat in Tröpfchen vorliegende Leichtphasen zu größeren Tropfen koaleszieren, insbesondere verbinden, insbesondere wenn sie den Koaleszenzbereich durchströmen. Vorzugsweise wird dieser Vorgang als Koaleszenzprozess verstanden. Stromabwärts des Koaleszenzorgans, insbesondere des Koaleszenzbereichs, kann die koaleszierte Leichtphase aufgrund der geringeren Dichte in Bezug auf das Wasser, in diesem aufsteigen, insbesondere darauf aufschwimmen. Die Leichtphase kann sich somit vom Wasser in der Trennkammer, insbesondere stromabwärtig des Koaleszenzorgans absondern, insbesondere aufschwimmen. Die Leichtphase steigt entgegen der Gravitationskraft in der Trennkammer auf und sammelt sich am oberen Ende der Trennkammer. Beispielsweise kann das Koaleszenzorgan als Koaleszenzkerze ausgestaltet sein. Insbesondere umfasst das Koaleszenzorgan ein hydrophobes, insbesondere superhydrophobes, und/oder lipophiles Material. Beispielsweise als Endlosfaden um einen Stützkern gewickeltes Filterelement. Vorzugsweise umfasst das Koaleszenzorgan faserige Materialien, wie Kunststofffäden, beispielsweise aus Polypropylen, Polyester oder Nylon und/oder Naturfäden, beispielsweise aus Baumwolle und/oder Metallfäden, beispielsweise aus Edelstahl und/oder Glasfasern.

Bevorzugte Ausführungen sind in den Unteransprüchen gegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine schematische Darstellung einer beispielhaften Ausführung der erfindungsgemäßen Vorrichtung;
- Figur 2: eine schematische Detaildarstellung eines beispielhaften Verdampfers;
- Figur 3: eine isometrische Darstellung einer beispielhaften Ausführung der erfindungsgemäßen Vorrichtung;
- Figur 4: eine Schnittansicht der in Figur 3 dargestellten Vorrichtung;
- Figur 5: eine Schnittansicht der in Figur 3 dargestellten Vorrichtung entlang der Schnittebene A - A aus Figur 4;
- Figur 6: eine schematische Darstellung einer weiteren beispielhaften Ausführung der erfindungsgemäßen Vorrichtung;
- Figur 7: eine isometrische Darstellung einer weiteren beispielhaften Ausführung der erfindungsgemäßen Vorrichtung;
- Figur 8: eine seitliche Ansicht der Vorrichtung aus Figur 7;
- Figur 9: eine Schnittansicht der in Figur 7 dargestellten Vorrichtung;
- Figur 10: eine Schnittansicht der in Figur 7 dargestellten Vorrichtung entlang der Schnittebene A - A aus Figur 9;
- Figur 11: eine schematische Darstellung einer beispielhaften Ausführung der erfindungsgemäßen Vorrichtung; und
- Figur 12: ein Diagramm zum Regelungsverfahren einer weiteren beispielhaften Ausführung der erfindungsgemäßen Vorrichtung.

In der folgenden Beschreibung beispielhafter Ausführungen ist die Vorrichtung im Allgemeinen mit der Bezugsziffer 1, der Wärmetauscher im Allgemeinen mit der Bezugsziffer 3 und die Trennkammer im Allgemeinen mit der Bezugsziffer 5 versehen.

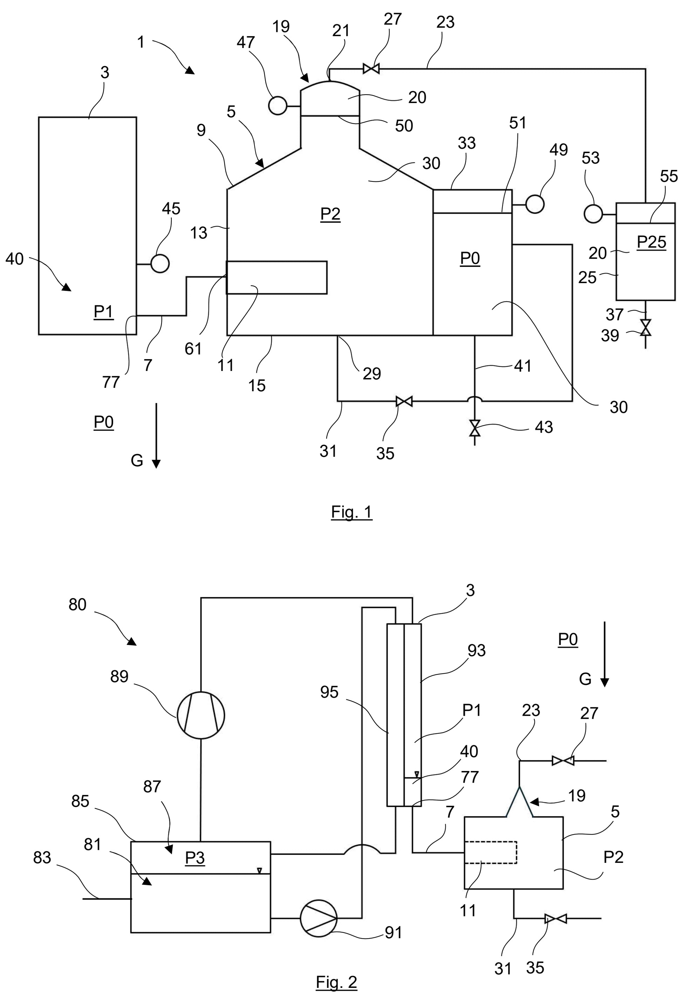

In Figur 1 ist eine schematische Darstellung einer beispielhaften Ausführung der erfindungsgemäßen Vorrichtung 1 abgebildet. Es sei angemerkt, dass es sich um ein schematisches Schaubild handelt und Größenverhältnisse sowie geometrische Merkmale nur schematisch abgebildet sind und nicht der Realität entsprechen müssen. Grundsätzlich umfasst die Vorrichtung 1 einen Wärmetauscher 3 und eine Trennkammer 5. Wärmetauscher 3 und Trennkammer 5 sind mittels einer Destillatleitung 7 verbunden. In der Trennkammer 5, die ein Trennkammergehäuse 9 umfasst, ist ein Koaleszenzorgan 11 angeordnet. Das Koaleszenzorgan 11 ist über die Destillatleitung 7 mit dem Wärmetauscher 3 verbunden. Das Koaleszenzorgan 11 ist vorzugsweise derart an dem Trennkammergehäuse 9 angeordnet, dass es von außerhalb der Trennkammer 3 zugänglich ist, insbesondere ausgetauscht werden kann. Beispielsweise kann an dem Trennkammergehäuse 9 eine in Figur 1 nicht dargestellte Koaleszenzorganaufnahme 17 vorgesehen sein, die das Koaleszenzorgan 11 aufnimmt. Von dem Trennkammergehäuse 9 aus, ragt das Koaleszenzorgan 11 in das Innere der Trennkammer 3 hinein. Es ist denkbar, dass das Koaleszenzorgan 11 an bzw. in einer Trennkammerwand 13 oder am Trennkammerboden 15 des Trennkammergehäuses 9 angeordnet ist, oder an einem anderen Abschnitt des Trennkammergehäuses 9.

Die Trennkammer 5 weist einen Leichtphasensammelbereich 19 auf. Dieser ist in Gravitationsrichtung G an einem oberen Ende der Trennkammer 5 angeordnet. An dem Leichtphasensammelbereich 19, insbesondere an dem Trennkammergehäuse 9 ist in diesem Bereich ein Leichtphasenauslass 21 angeordnet. An den Leichtphasenauslass 21 schließt eine Leichtphasenleitung 23 an, die den Leichtphasensammelbereich 19 fluidisch mit einem Leichtphasensammelbehälter 25 verbindet. An oder in dem Leichtphasensammelbereich 19 ist ein Leichtphasensensor 47 vorgesehen, der dazu eingerichtet ist, das Vorliegen einer Leichtphase 20 im Leichtphasensammelbereich 19 zu erfassen. Vorzugsweise ist der Leichtphasensensor 47 dazu eingerichtet, das Vorliegen wenigstens zwei, vorzugsweise drei, unterschiedlicher Medien zu unterscheiden. Vorzugsweise kann der Sensor das Vorliegen von Luft, Wasser 30 und der Leichtphase 20 in dem Leichtphasensammelbereich 19 differenzieren.

In der dargestellten beispielhaften Ausführung ist der Leichtphasensammelbehälter 25 frei angeordnet. Es ist denkbar, dass der Leichtphasensammelbehälter 25 beispielsweise an das Trennkammergehäuse 9 anschließt bzw. an diesem angeordnet ist. Trennkammer 5 und Leichtphasensammelbehälter 25 sind jedoch in der gezeigten Ausführung ausschließlich über die Leichtphasenleitung 23 verbunden. Zwischen Leichtphasenauslass 21 und Leichtphasensammelbehälter 25 ist in der Leichtphasenleitung 23 ein Leichtphasenventil 27 angeordnet, das dazu eingerichtet ist, den Durchfluss durch die Leichtphasenleitung 23 zu drosseln bzw. zu begrenzen. Vorzugsweise kann das Leichtphasenventil 27 die Leichtphasenleitung 23, insbesondere druckfest bzw. druckdicht, absperren. Das Leichtphasenventil 27 kann in Gravitationsrichtung G über dem Leichtphasenauslass 21 angeordnet sein. Der Leichtphasensammelbehälter 25 umfasst einen Auslass 37 mit einem Ablassventil 39, über den Fluid, insbesondere die Leichtphase 20, vorzugsweise Kohlenwasserstoffe, wie Öl, aus dem Leichtphasensammelbehälter 25 abgelassen werden kann. Die Leichtphase 20 kann beispielsweise in das zu reinigende Prozessmedium 81 wiedereingebracht werden, oder der Vorrichtung entnommen werden. Der Leichtphasensammelbehälter 25 ist zur Atmosphäre hin geöffnet oder mit einem nicht dargestellten Abluftreinigungssystem verbunden, sodass dort ein Druck P25 wirkt, der dem atmosphärischen Druck P0 entspricht oder einem Überdruck, der geringer als der Überdruck P2 ist, vorzugsweise um wenigstens 30 mbar geringer.

An oder in An oder in dem Leichtphasensammelbehälter 25 ist ein Leichtphasenfüllstandsensor 53 vorgesehen, der die Menge an vorliegendem Wasser 30 in dem Leichtphasensammelbehälter 25 bestimmen kann. Beispielsweise kann der Leichtphasenfüllstandsensor 53 den Leichtphasenspiegel 55 im Leichtphasensammelbehälter 25 erfassen, vorzugsweise kontinuierlich. Es ist auch denkbar wenigstens zwei voneinander in Gravitationsrichtung G beabstandete Sensoren einzusetzen, die das Vorliegen der Leichtphase 20 erfassen können, um einen unteren und einen oberen Grenzwert und einen oberen Grenzwert bestimmen zu können. Beispielsweise kann der Leichtphasensammelbehälter 25 bei Erreichen eines vorbestimmten Füllstands über das Ablassventil 39 geleert werden.

Die Trennkammer 5, bzw. das Trennkammergehäuse 9, weist an einem in Gravitationsrichtung G unteren Ende der Trennkammer 5, vorzugsweise am Trennkammerboden 15 einen Wasserauslass 29 auf. Vorzugsweise ist der Wasserauslass 29 in Gravitationsrichtung G unterhalb des Leichtphasensammelbereichs 19, besonders bevorzugt in Gravitationsrichtung G unterhalb des Koaleszenzorgans 11 angeordnet. An den Wasserauslass 29 schließt eine Wasserleitung 31 an, die die Trennkammer 5 fluidisch mit einem Wassersammelbehälter 33 verbindet. In der dargestellten beispielhaften Ausführung ist der Wassersammelbehälter 33 an der Trennkammer 5 angeordnet, bzw. schließt daran an. Es ist denkbar, dass der Wassersammelbehälter 33 auch frei platziert werden kann. Trennkammer 5 und Wassersammelbehälter 33 sind in der gezeigten Ausführung ausschließlich über die Wasserleitung 31 verbunden. Zwischen Wasserauslass 29 und Wassersammelbehälter 33 ist in der Wasserleitung 31 ein Wasserventil 35 angeordnet, das dazu eingerichtet ist, den Durchfluss durch die Wasserleitung 31 zu drosseln bzw. zu begrenzen. Vorzugsweise kann das Wasserventil 35 die Wasserleitung 31, insbesondere druckfest bzw. druckdicht, absperren. Der Wassersammelbehälter 33 umfasst einen Auslass 41 mit einem Ablassventil 43, über den Fluid, insbesondere das Wasser 30, aus dem Wassersammelbehälter 33 abgelassen werden kann. Beispielsweise kann das Wasser 30 in die Anlage zurückgeführt werden oder in den Wärmetauscher 3 zurückgeführt werden. Der Wassersammelbehälter 33 ist zur Atmosphäre hin geöffnet, sodass dort atmosphärischer Druck P0 wirkt.

An oder in dem Wassersammelbehälter 33 ist ein Wasserfüllstandsensor 49 vorgesehen, der die Menge an vorliegendem Wasser 30 in dem Wassersammelbehälter 33 bestimmen kann. Beispielsweise kann der Wasserfüllstandsensor 49 den Wasserspiegel 51 im Wassersammelbehälter 33 erfassen, vorzugsweise kontinuierlich. Es ist auch denkbar wenigstens zwei voneinander in Gravitationsrichtung G beabstandete Sensoren einzusetzen, die das Vorliegen von Wasser 30 erfassen können, um einen unteren und einen oberen Grenzwert und einen oberen Grenzwert bestimmen zu können. Beispielsweise kann der Wassersammelbehälter 33 bei Erreichen eines vorbestimmten Füllstands über das Ablassventil 43 geleert werden.

An oder in dem Wärmetauscher 3 ist ein Destillatfüllstandsensor 45 vorgesehen, der die Menge an vorliegendem Destillat 40 in dem Wärmetauscher 3 bestimmen kann. Beispielsweise kann der Destillatfüllstandsensor 45 den Destillatspiegel im Wärmetauscher 3 erfassen, vorzugsweise kontinuierlich. Es ist auch denkbar wenigstens zwei voneinander in Gravitationsrichtung G beabstandete Sensoren einzusetzen, die das Vorliegen von Destillat 40 erfassen können, um einen unteren und einen oberen Grenzwert und einen oberen Grenzwert bestimmen zu können.

Die Funktionsweise der in Figur 1 dargestellten Vorrichtung 1 kann wie folgt beschrieben werden. Der Wärmetauscher 3 verdampft ein Prozessmedium, insbesondere unter atmosphärischem Druck, vorzugsweise unter Überdruck zur Atmosphäre P0. Der entstehende Dampf wird verdichtet und zu Destillat 40 kondensiert. Das entstehende Destillat 40 besteht aus Wasser 30 und einer darin emulgierten Leichtphase 20. Beispielsweise ist die Leichtphase 20 ein Kohlenwasserstoff, wie Öl. Im Wärmetauscher 3 wirkt vorzugsweise ein Überdruck P1 gegenüber der Atmosphäre P0 von beispielsweise 250 mbar, vorzugsweise von wenigstens 50 mbar. Das Destillat 40 steht unter dem gleichen Überdruck P1, der in dem Wärmetauscher 3 wirkt. Der Überdruck P1 wird an dem Wärmetauscherauslass 77 bestimmt bzw. gemessen, insbesondere entspricht der Wert des Überdrucks P1 dem Überdruck gegenüber der Atmosphäre P0 abzüglich des hydrostatischen Drucks des Destillats 40 am Messpunkt.

Über die Destillatleitung 7 kann das Destillat 40 uneingeschränkt, sprich ohne druckmindernde Maßnahmen wie Drosseln, oder Ventile um- oder durchströmen zu müssen, in die Trennkammer 5 strömen. Beispielsweise kann die Destillatleitung 7 entgegen der Darstellung in Figur 1 ohne Knicke ausgebildet sein. Die Destillatleitung 7 mündet in dem Koaleszenzorgan 11 der Trennkammer 5. Das Koaleszenzorgan 11 ist derart ausgestaltet, dass die Leichtphase 20 des Destillats 40 koalesziert und sich von Wasser 30 abscheidet. Da die Leichtphase 20 eine geringere Dichte als das Wasser 30 aufweist, schwimmt sie auf. Das Trennkammergehäuse 9 ist vollständig mit Destillat 40 bzw. mit Wasser 30 und Leichtphase 20, insbesondere luftleer, gefüllt. Die aufschwimmende Leichtphase 20 sammelt sich in dem Leichtphasensammelbereich 25 und es bildet sich eine Phasengrenze 50. Oberhalb der Phasengrenze 50 liegt die Leichtphase 20 vor, unterhalb der Phasengrenze 50 das Wasser 30.

Die Trennkammer 5 bzw. das Trennkammergehäuse 9 ist gegenüber der Atmosphäre, insbesondere hermetisch abgedichtet. Bei geschlossenem Leichtphasenventil 27 und Wasserventil 35, kann kein Fluid aus der Trennkammer 5 ausströmen. Folglich strömt auch kein Destillat 40 aus dem Wärmetauscher 3 in die Trennkammer 5 nach. In der Trennkammer 5, beziehungsweise in der Leichtphase 20 und Wasser 30 wirkt der Überdruck P2 gegenüber der Atmosphäre P0, der im Wesentlichen dem Überdruck P1 gegenüber der Atmosphäre P0 des Destillats 40 und des Wärmetauschers 3 entspricht. Unter im Wesentlichen kann verstanden werden, dass beispielsweise wenigstens 10 %, insbesondere wenigstens 20 %, wenigsten 30 %, wenigsten 40 %, wenigsten 50 %, wenigstens 60 %, wenigstens 70 %, wenigstens 80 %, vorzugsweise wenigstens 90 % des Überdrucks P1 gegenüber der Atmosphäre P0 wie im Wärmetauscher 3 in der Trennkammer 5 wirkt. Insbesondere soll zumindest ein Überdruck P2 gegenüber der Atmosphäre P0 von 30 mbar in der Trennkammer 5 wirken. Das Verhältnis von P2 zu P1 sollte wenigstens 0,1, insbesondere wenigstens 0,2, wenigstens 0,3, wenigstens 0,4, wenigstens 0,5, wenigstens 0,6, wenigstens 0,7, wenigstens 0,8, vorzugsweise wenigstens 0,9 betragen. Das Verhältnis soll bei geschlossenem Leichtphasenablassventil 27 und geschlossenem Wasserablassventil 35 vorliegen. Der Überdruck P2 wird an dem Destillateinlass 61 und/oder an dem Leichtphasenauslass 21 bestimmt bzw. gemessen. Insbesondere entspricht der Wert des Überdrucks P2 dem Überdruck gegenüber der Atmosphäre P0 abzüglich des hydrostatischen Drucks des Fluids am Messpunkt.

Über das Leichtphasenventil 27 kann die Leichtphase 20 entgegen der Gravitationsrichtung G aus der Trennkammer 5 abgezogen werden. Dies erfolgt durch Öffnen des Leichtphasenventils 27 ohne aufwenden von zusätzlicher Energie durch den in der Trennkammer 5 wirkenden Überdruck P2. Durch das Druckgefälle über das Leichtphasenventils 27 von Überdruck P2 in der Trennkammer 5 zu atmosphärischem Druck P0 in dem Leichtphasensammelbehälter 25, wird die Leichtphase 20 über den Leichtphasenauslass 21 aus der Trennkammer 5 abgezogen. Beispielsweise erfolgt dies, bei Vorliegen von Leichtphase 20 im Leichtphasensammelbereich 19, das vorzugsweise mittels des Leichtphasensensor 47 erfasst wird.

Über das Wasserventil 35 kann das Wasser 30, insbesondere entgegen der Gravitationsrichtung G, aus der Trennkammer 5 abgezogen werden. Dies erfolgt durch Öffnen des Wasserventil 35 ohne aufwenden von zusätzlicher Energie durch den in der Trennkammer 5 wirkenden Überdruck P2. Durch das Druckgefälle über das Wasserventil 35 von Überdruck P2 in der Trennkammer 5 zu atmosphärischem Druck P0 in dem Wassersammelbehälter 33, wird das Wasser 30 über den Wasserauslass 29 aus der Trennkammer 5 abgezogen. Beispielsweise erfolgt dies, bei Vorliegen einer gewissen Menge von Destillat 40 in dem Wärmetauscher 3, die von dem Destillatfüllstandsensor 45 erfasst wird.

Durch das Öffnen von Leichtphasenventils 27 und/oder Wasserventil 35 strömt Fluid aus der Trennkammer 5 aus und es kommt zu einem Druckabfall in der Trennkammer 5. Jedoch wirkt selbst bei geöffnetem Leichtphasenventils 27 und/oder Wasserventil 35 weiterhin ein Überdruck gegenüber der Atmosphäre P0 in der Trennkammer 5. Dieser ist jedoch geringer als der im Wärmetauscher 3 wirkende Überdruck P1. Durch das Ausströmen von Fluid aus der Trennkammer 5 über das Leichtphasenventils 27 und/oder das Wasserventil 35, kann Destillat 40 aus dem Wärmetauscher 3 über die Destillatleitung 7 durch das Koaleszenzorgan 11 in die Trennkammer 5 nachströmen. Vorzugsweise erfolgt das Öffnen von Wasserventil 35 und damit das Ablassen des Wassers 30, bei Erreichen einer vorbestimmten Höchstmenge von Destillat 40 im Wärmetauscher 3. Das Schließen von Wasserventil 35 und damit der Stopp des Ablassens des Wassers 30 erfolgt vorzugsweise bei Erreichen einer vorbestimmten Mindestmenge von Destillat 40 im Wärmetauscher 3. Vorzugsweise erfolgt das Öffnen von Leichtphasenventils 27 und damit das Ablassen bzw. der Leichtphase 20, bei Vorliegen einer Leichtphase 20 im Leichtphasensammelbereich 19, was durch den Leichtphasensensor 47 erfasst werden kann. Insbesondere erfolgt das Ablassen so lange, bis der Leichtphasensensor 47 das Vorliegen von Wasser 30 erfasst. Vorzugsweise erfolgt das Ablassen der Leichtphase 20 mit einem vorbestimmten Zeitversatz zu dem Zeitpunkt, in dem der Leichtphasensensor 47 das Vorliegen der Leichtphase 20 erfasst.

In Figur 2 ist eine schematische Detaildarstellung einer beispielhaften Verdampfungsvorrichtung 80, die den Wärmetausche 3 umfasst, in Verbindung mit einer beispielhaften Ausführung einer Trennkammer 5 dargestellt. Ein, insbesondere wässriges, Prozess- und/oder Industriemedium 81, das insbesondere eine kohlenwasserstoffhaltige Emulsion umfasst, wird über eine Zuführleitung 83 einem Erhitzer bzw. Verdampfer 85 zugeführt. Das Prozessmedium 81 ist vorzugsweise ein Abwasser eines industriellen Prozesses. Es besteht zumindest aus Wasser 30 und einer Leichtphase 20. Ferner können in dem Prozessmedium 81 Schwerphasen und Feststoffe vorhanden sein. In dem Verdampfer 85 wird das Prozessmedium 81 derart erhitzt, dass zumindest das darin enthaltene Wasser 30 und die Leichtphasen 20 verdampfen. In dem Verdampfer 85 herrscht ein Verdampferdruck P3, der entweder geringer als der Atmosphärendruck P0 ist (Vakuumverdampfer), dem Atmosphärendruck P0 entspricht (atmosphärischer Verdampfer) oder einem Überdruck gegenüber dem Atmosphärendruck P0 entspricht (Überdruckverdampfer). Ein atmosphärischer Verdampfer kann einen Druck P3 im Bereich von +- 100 mbar gegenüber dem Atmosphärendruck P0 aufweisen. Das verdampfte Prozessmedium 81 wird als Brüden 87 bezeichnet. Der Brüden 87 wird von einem Verdichter 89, insbesondere Brüdenverdichter, von Druck P3 auf den Überdruck P1 verdichtet. Der Überdruck P1 entspricht einem Überdruck gegenüber dem Atmosphärendruck P0, vorzugsweise von wenigstens 50 mbar, insbesondere wenigstens 100 mbar, wenigstens 150 mbar, wenigstens 200 mbar, besonders bevorzugt von wenigstens 250 mbar. Der verdichtete, unter Überdruck P1 stehende Brüden 87 wird dem Wärmetauscher 3, insbesondere dessen Kondensationsseite 93 zugeführt, wo er zum Destillat 40 kondensiert. Mittels einer Umwälzpumpe 91 wird das in dem Verdampfer 85 vorliegende Prozessmedium 81 durch den Wärmetauscher 3, insbesondere dessen Erwärmungsseite 95, zurück in den Verdampfer 85 zirkuliert. Durch die vom Brüden 87 bei der Kondensation zum Destillat 40 abgegebene Wärmeenergie wird das Prozessmedium 81 im Wärmetauscher 3 erwärmt. Auf der Kondensationsseite 93 des Wärmetauschers 3 wirkt der Überdruck P1, somit steht auch das Destillat 40 unter dem Überdruck P1. Über die Destillatleitung 7 kann das Destillat 40 in die Trennkammer 5 strömen. Der Aufbau der Trennkammer 5 entspricht dem aus Figur 1.

Der in den Figuren 1 und 3 bis 12 referenzierte Wärmetauscher 3 bezieht sich auf den in Figur 2 dargestellten Grundaufbau, wobei nur die Kondensationsseite 93 des Wärmetauschers 3 betrachtet wird. Zur besseren Verständlichkeit wird jedoch auf den Wärmetauscher 3 bezuggenommen, während die Kondensationsseite 93 gemeint ist. Beispielsweise ist der Destillatauslass 77 an der Kondensationsseite 93 des Wärmetauschers 3 vorgesehen.

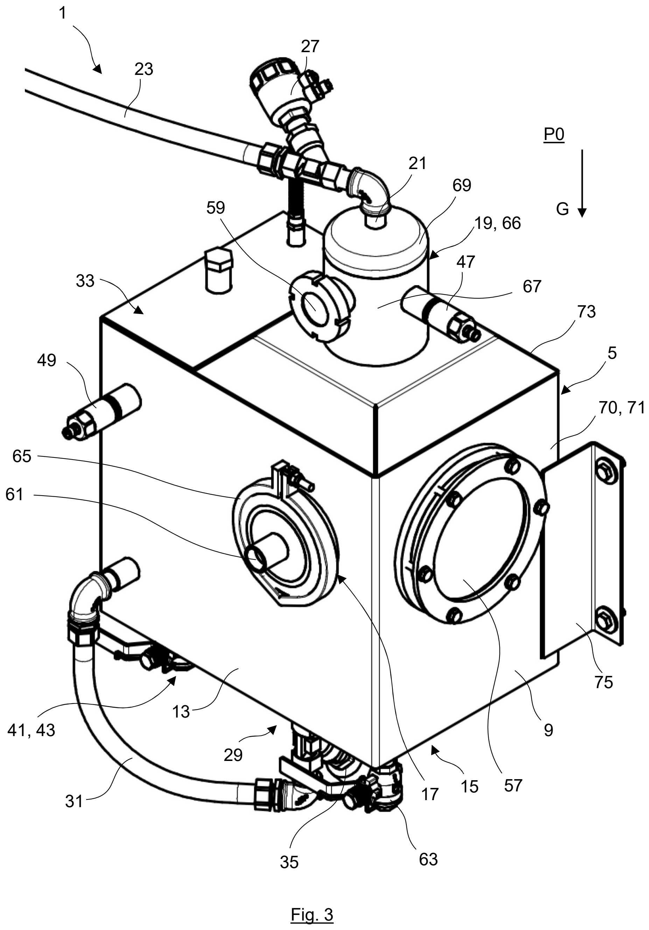

In Figur 3 ist eine isometrische Darstellung einer beispielhaften Ausführung eines Teils der Vorrichtung 1, insbesondere nach Figur 1, dargestellt. Gleiche Elemente sind mit gleichen Bezugsziffern versehen. In Figur 2 sind nur die Trennkammer 5 und der Wassersammelbehälter 33, die in der dargestellten beispielhaften Ausführung eine Einheit bilden, sowie daran angeschlossene Elemente, nicht jedoch der Leichtphasensammelbehälter 25. Die Trennkammer 5 und der Wassersammelbehälter 33 weisen, um beispielsweise Material einzusparen, gemeinsame Gehäusewände, beispielsweise Trennkammerwand 13 auf, sind jedoch nur über die Wasserleitung 31 verbunden.

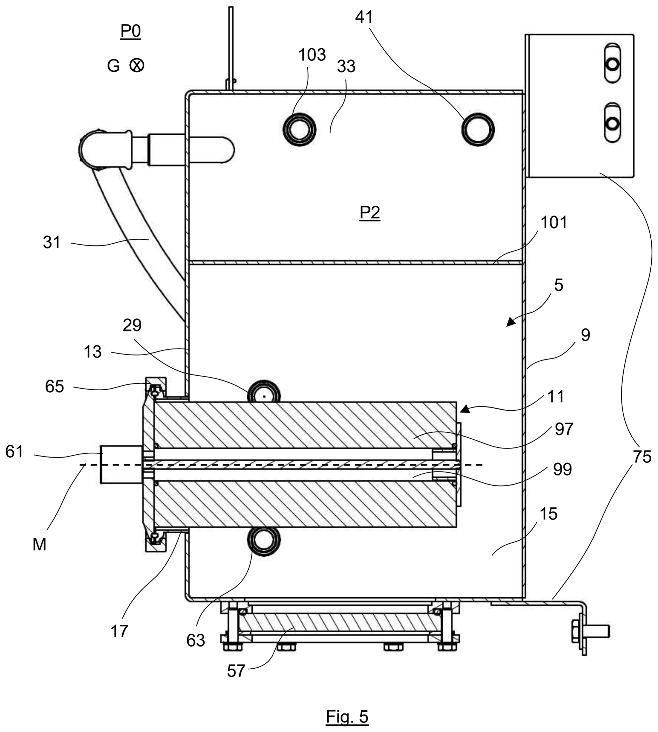

In der Trennkammerwand 13 ist die Koaleszenzorganaufnahme 17 vorgesehen, die das Koaleszenzorgan 11 aufnimmt. Das Koaleszenzorgan 11 ist in Figur 5 näher beschrieben. Die Koaleszenzorganaufnahme 17 ragt über die Trennkammerwand 13 hinaus und das Koaleszenzorgan 11 ist mittels einer Verbindungsschelle 65, vorzugsweise druckfest bzw. druckdicht, insbesondere lösbar, mit der Koaleszenzorganaufnahme 17 verbunden. Das Koaleszenzorgan 11 weist einen Destillateinlass 61 auf, der entweder fest mit diesem verbunden ist, oder als separates Bauteil ausgestaltet ist, das ebenfalls mittels der Verbindungschelle 65, insbesondere druckfest bzw. druckdicht, insbesondere lösbar, mit dem Koaleszenzorgan 11 und der Koaleszenzorganaufnahme 17 verbunden ist. Der Destillateinlass 61 ermöglicht es, mittels der nicht dargestellten Destillatleitung 7, den Wärmetauscher 3 mit dem Koaleszenzorgan 11 und somit mit der Trennkammer 5 fluidisch zu verbinden.

An einer an die Trennkammerwand 13 angrenzende Trennkammerwand ist in der dargestellten Ausführung ein Sichtfenster 57 vorgesehen. Das Sichtfenster 57 ist derart angeordnet, dass es einer Bedienperson ermöglicht ist, das Koaleszenzorgan 11 visuell zu inspizieren. Das Sichtfenster 57 ist insbesondere druckfest bzw. druckdicht in das Trennkammergehäuse 9 eingebracht. Das Sichtfenster 57 kann auch an anderer Stelle an dem Trennkammergehäuse 9 angeordnet sein und ist nicht auf die dargestellte Anordnung beschränkt, soll jedoch die visuelle Inspektion des Koaleszenzorgans 11 ermöglichen.

Ein weiteres Sichtfenster 59 ist an dem Leichtphasensammelbereich 19 des Trennkammergehäuses 9 vorgesehen. Das Sichtfenster 59 ist derart angeordnet, dass es einer Bedienperson ermöglicht ist, den Leichtphasensensor 47 visuell zu inspizieren und/oder das Vorliegen, insbesondere die Menge, der Leichtphase 20 im Leichtphasensammelbereich 19 visuell zu erfassen. Beispielsweise kann an dem Sichtfenster 59 eine Skala aufgebracht sein, mittels der anhand der Position der Grenzphase 60 in Gravitationsrichtung G die Menge an vorliegender Leichtphase 20 bestimmt werden kann. Das Sichtfenster 59 ist insbesondere druckfest bzw. druckdicht in das Trennkammergehäuse 9 eingebracht. Das Sichtfenster 59 kann auch an anderer Stelle an dem Leichtphasensammelbereich 19 angeordnet sein und ist nicht auf die dargestellte Anordnung beschränkt.

Das Leichtphasenventil 27 und das Wasserventil 35 sind vorzugsweise elektrisch, pneumatisch und/oder hydraulisch betätigbar. Die Trennkammer 5 kann am Trennkammerboden 15 ein Zusatzauslassventil 63 aufweisen, mittels dem sämtliches Fluid aus der Trennkammer 5 abgelassen werden kann, beispielsweise für Wartungsarbeiten.

Der Leichtphasensammelbereich 19 der Trennkammer 5 kann als Sammelturm 66, insbesondere kuppel- oder domförmig ausgebildet sein. Er ist durch das Trennkammergehäuse 9 gebildet und bildet dessen oberes Ende in Gravitationsrichtung G. Der Leichtphasensammelbereich 19 bzw. Sammelturm 66 weist einen Kuppelabschnitt 69 auf, an dem der Leichtphasenauslass 21 vorgesehen ist und einen daran anschließenden Hülsenabschnitt 67. Der Hülsenabschnitt 67 schließt an einen Verjüngungsabschnitt 73 der Trennkammer 5 an, der einen Übergang zwischen Leichtphasensammelbereich 19 und Koaleszenzabschnitt 71 bzw. Gehäusegrundkörper 70 der Trennkammer 5 bildet. Der Verjüngungsabschnitt 73 ist pyramidenstumpfförmig ausgestaltet. Er schließt an den insbesondere rechteckigen oder quaderförmigen Koaleszenzabschnitt 71 bzw. Gehäusegrundkörper 70 der Trennkammer 5 an, in dem das Koaleszenzorgan 11 angeordnet ist.

Der Koaleszenzabschnitt 71 bzw. Gehäusegrundkörper 70 weist beispielsweise eine Höhe in Gravitationsrichtung G von ca. 40 cm und eine Länge und Breite von ca. 28 cm senkrecht zur Gravitationsrichtung G auf. Der Leichtphasensammelbereich 19 weist eine Höhe in Gravitationsrichtung G von ca. 15 cm auf. Die Maße können je nach Ausführung abweichen.

An dem Trennkammergehäuse 9 können Verbindungselemente 75 angeordnet sein, mittels derer das Trennkammergehäuse 9 an Stützelementen oder Aufnahmen stützender Strukturen befestigt werden kann.

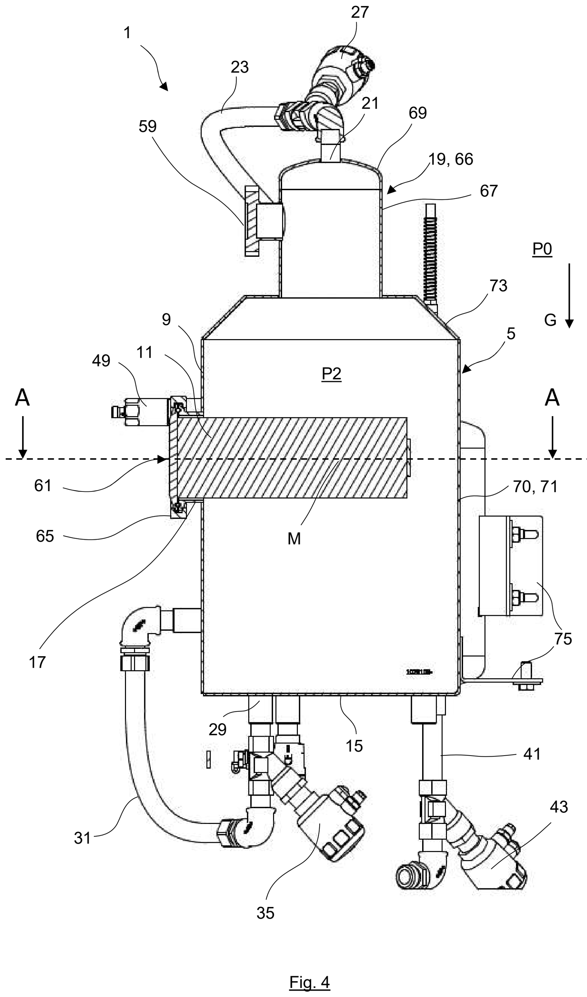

In Figur 4 ist eine Schnittansicht der in Figur 3 dargestellten Vorrichtung 1, insbesondere der Trennkammer 5 abgebildet. Es ist erkennbar, dass das Koaleszenzorgan 11 von der Koaleszenzorganaufnahme 17 in die Trennkammer 5, bzw. das Trennkammergehäuse 9 im Koaleszenzabschnitt 71 bzw. Gehäusegrundkörper 70 hineinragt. Das Koaleszenzorgan 11 kann beispielsweise ca. 23 in die Trennkammer 5 hineinragen. Es ist erkennbar, dass sich das Trennkammergehäuse 9 in entgegengesetzte Gravitationsrichtung G vom Trennkammerboden 15 hin zum Leichtphasenauslass 21 stufenweise vom Koaleszenzabschnitt 71 bzw. Gehäusegrundkörper 70 über den Verjüngungsabschnitt 73, über den Sammelturm 66 bzw. über den Hülsenabschnitt 67 und über den Kuppelabschnitt 69 verjüngt. Es kann auch vorgesehen sein, dass diese Verjüngung nicht stufenartig, sondern kontinuierlich ausgestaltet ist. Die Verjüngung des Trennkammergehäuses 9 ermöglicht es, dass alle durch das Koaleszenzorgan 11 aus dem Wasser 30 abgeschiedenen Leichtphasen 20 in den Leichtphasensammelbereich 19 steigen können. Aus der Schnittdarstellung in Figur 4 ist ferner ersichtlich, dass das Koaleszenzorgan 11, insbesondere dessen Mittelachse M einen Abstand, insbesondere von ca. 26 cm vom Trennkammerboden 15 bzw. vom Wasserauslass 29 aufweist. Dadurch kann sichergestellt werden, dass durch den beim Ablassen des Wassers 30 über das Wasserventil 35 durch den Wasserauslass 29 entstehenden Sog möglichst keine koaleszierenden Leichtphasen 20 aus der Trennkammer 5 abgezogen werden.

In Figur 5 ist eine Schnittansicht der in Figur 3 dargestellten Vorrichtung 1 entlang der Schnittebene A - A aus Figur 4 dargestellt. In dieser Ansicht ist die Aufteilung in Trennkammer 5 und Wassersammelbehälter 33 mittels Trennwand 101, die eine Außenwand des Trennkammergehäuses 9 darstellt. Der Wassersammelbehälter 33 umfasst neben dem Auslass 41 einen Zusatzauslass 103, über den alternativ zum Auslass 41 das Wasser aus dem Wassersammelbehälter 33 abgelassen werden kann, beispielsweise für Wartungsarbeiten. Das Sichtfenster 57 ist fluchtend zum Koaleszenzorgan 11 angeordnet, sodass dieses visuell inspiziert werden kann. Das Koaleszenzorgan 11 ist hohlzylindrisch ausgeführt, wobei im Innern der Einströmbereich 99 vorgesehen ist, der rotationssymmetrisch zur Mittelachse M von Koaleszenzmaterial 97 umgeben ist. Das Destillat 40 strömt über den Destillateinlass 61 in den Einströmbereich 99 entlang der Mittelachse M ein und verlässt das Koaleszenzorgan 11 radial nach außen durch das Koaleszenzmaterial 97. Das Koaleszenzmaterial 97 kann aus einem Material bestehen oder aus mehreren verschiedenen Materialien, die miteinander vermischt oder in Lagen in Radialrichtung geschichtet angeordnet sind. Beispielsweise kommen faserige Materialien wie Fäden aus Kunststoff, beispielsweise Polypropylen oder Naturmaterialien wie Baumwolle, oder Metalle wie Edelstahl als Koaleszenzmaterial in Betracht. Das Koaleszenzmaterial 97 kann um den Einströmbereich 99 gewickelt sein.

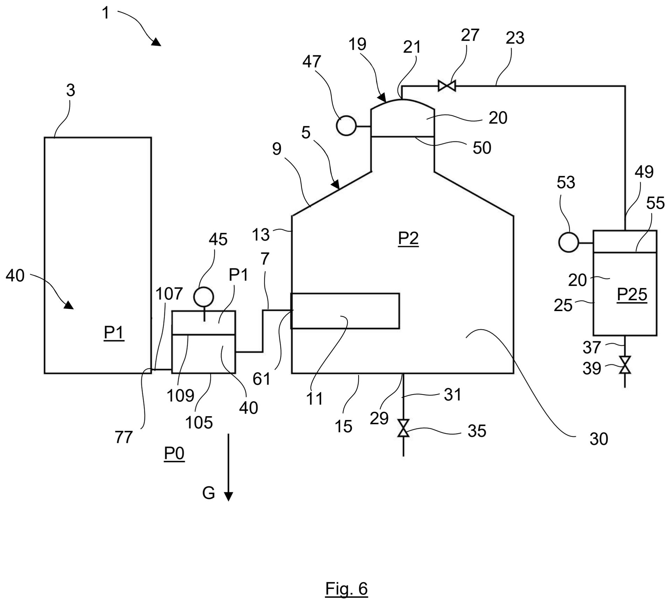

In Figur 6 ist eine schematische Darstellung einer weiteren beispielhaften Ausführung der erfindungsgemäßen Vorrichtung 1 dargestellt. Gleiche Teile aus den vorherigen Figuren sind mit den gleichen Bezugsziffern versehen. Der Aufbau und die Funktion der Trennkammer 5, des Wärmetauschers 3 und des Leichtphasensammelbehälters 25 entspricht dem aus Figur 1. Es wird daher zur Erläuterung auf die Beschreibung von Figur 1 verwiesen. In der Ausführungsform gemäß Figur 6 ist kein Wassersammelbehälter 33 vorgesehen, allerdings ist denkbar, dass ein Wassersammelbehälter 33 an die Wasserleitung 31 angeschlossen ist, oder diese das Wasser 30 in eine Industrieanlage rückführt. Zwischen Wärmetauscher 3 und Trennkammer 5 ist in der gezeigten Ausführung ein Pufferbehälter 105 vorgesehen. Dieser steht über die Destillatleitung 7 in Fluidverbindung mit der Trennkammer 5. Der Wärmetauscherauslass 77 ist mittels einer Verbindungsleitung 107 fluidisch mit dem Pufferbehälter 105 verbunden. In dem Pufferbehälter 105 wirkt der gleiche Druck P1 wie im Wärmetauscher 3, insbesondere uneingeschränkt. Der Pufferbehälter 105 ist hermetisch gegenüber der Atmosphäre abgedichtet. An dem Pufferbehälter ist der Destillatfüllstandsensor 45 angeordnet und dazu eingerichtet, die vorliegende Menge von Destillat 40 kontinuierlich zu bestimmen. Insbesondere bestimmt der Destillatfüllstandsensor 45 kontinuierlich den Füllstand 109 im Pufferbehälter 105. Der Füllstand 109 entspricht dem Füllstand des Destillats im Wärmetauscher.

Die Regelung der dargestellten Ausführungsform stellt sich wie folgt dar. Die Ansteuerung des Leichtphasenventils 27 erfolgt analog zur Ausführung gemäß Figur 1. Die Ansteuerung des Wasserventils 35 erfolgt auf Basis des Signals des Destillatfüllstandsensors 45. Das Wasserventil 35 wird nicht periodisch geöffnet und geschlossen, sondern verändert, basierend auf dem Füllstand 109 die Durchflussmenge. Das Wasserventil 35 ist somit im Regelbetrieb immer zumindest teilweise geöffnet. Das Wasserventil 35 begrenzt bzw. drosselt den Abfluss von Wasser 30 aus der Trennkammer derart, dass der Füllstand 109 im Pufferbehälter 105 im Wesentlichen konstant bleibt. Unter im Wesentlichen kann verstanden werden, dass der Füllstand höchstens 25 %, insbesondere höchstens 20 %, höchstens 15 %, höchstens 10 %, höchstens 5 %, höchstens 2 %, vorzugsweise höchstens 1 % von einem vorbestimmten Füllstand abweicht. Die Drosselung durch das Wasserventil 35 hängt somit von der einströmenden Menge von Destillat 40 aus dem Wärmetauscher 3 in den Pufferbehälter 105 und von der Menge an abgelassener Leichtphase 20 über den Leichtphasenauslass 21 aus der Trennkammer 5 ab. Aus dem Wärmetauscher 3 strömt kontinuierlich Destillat 40 nach, sodass sich eine kontinuierliche Strömung von Destillat 40 durch die Trennkammer 5 bzw. durch das Koaleszenzorgan 11 ergibt. Durch das kontinuierliche Strömen von Destillat 40 verbessert sich auch die Energieübertragung im Wärmetauscher 3 bzw. von der Kondensationsseite 93 auf die Erwärmungsseite 95.

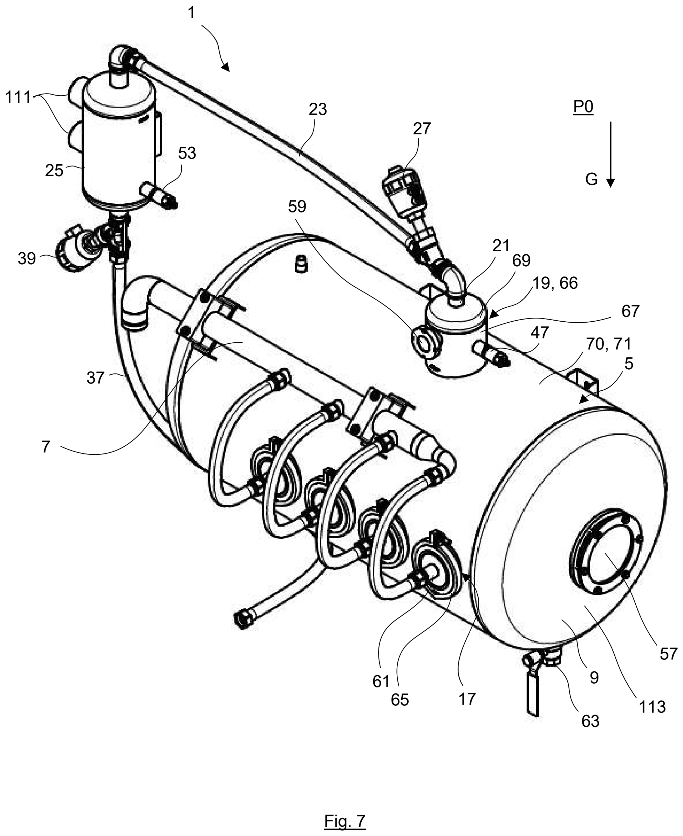

In Figur 7 ist eine isometrische Darstellung einer weiteren beispielhaften Ausführung der erfindungsgemäßen Vorrichtung 1 dargestellt. Aus Gründen der Übersichtlichkeit sind nur die Trennkammer sowie der Leichtphasensammelbehälter 25 abgebildet. Die Trennkammer 5 umfasst eine Mehrzahl, insbesondere zwei, drei oder vier, von Koaleszenzorganen 11. Jedes der Koaleszenzorgane 11 ist in einer Koaleszenzorganaufnahme 17 angeordnet und mittels der Verbindungsschelle 65, insbesondere druckfest bzw. druckdicht mit dem Trennkammergehäuse 9 bzw. der Koaleszenzorganaufnahme 17 verbunden. Die Destillatleitung 7 ist mit jedem der Destillateinlässe 61 verbunden, insbesondere teilt sich die Destillatleitung 7 auf. Insbesondere sind Koaleszenzorgane in Strömungsrichtung des Destillats 40 parallel geschalten. Die Destillateinlässe 61, bzw. die Mittelachsen M der Koaleszenzorgane 11, können beispielsweise ca. 17,5 cm voneinander beabstandet sein.

Das Trennkammergehäuse 9, insbesondere der Koaleszenzabschnitt 71 bzw. der Gehäusegrundkörper 70, ist als Rundtank, insbesondere rotationssymmetrisch, ausgebildet. Beispielsweise mit einem Durchmesser von ca. 60 cm und einer Länge von ca. 100 cm. An einer Endwand 113 ist das Sichtfenster 57 angeordnet. Der Leichtphasensammelbereich 19 bzw. Sammelturm 66, insbesondere der Hülsenabschnitt 67 schließt unmittelbar an den Koaleszenzabschnitt 71 bzw. den Gehäusegrundkörper 70 an. An der Trennkammer ist ein Zusatzauslassventil 63 vorgesehen. Der Wasserablass 21 ist in Figur 7 von dem Trennkammergehäuse 9 verdeckt.

An dem Leichtphasensammelbehälter 25 ist der Leichtphasenfüllstandsensor 53 angeordnet. Der Leichtphasensammelbehälter 25 umfasst ferner Abluftöffnungen 111, die dazu eingerichtet sind, aus der Leichtphase 20 austretenden Gase abzuführen.

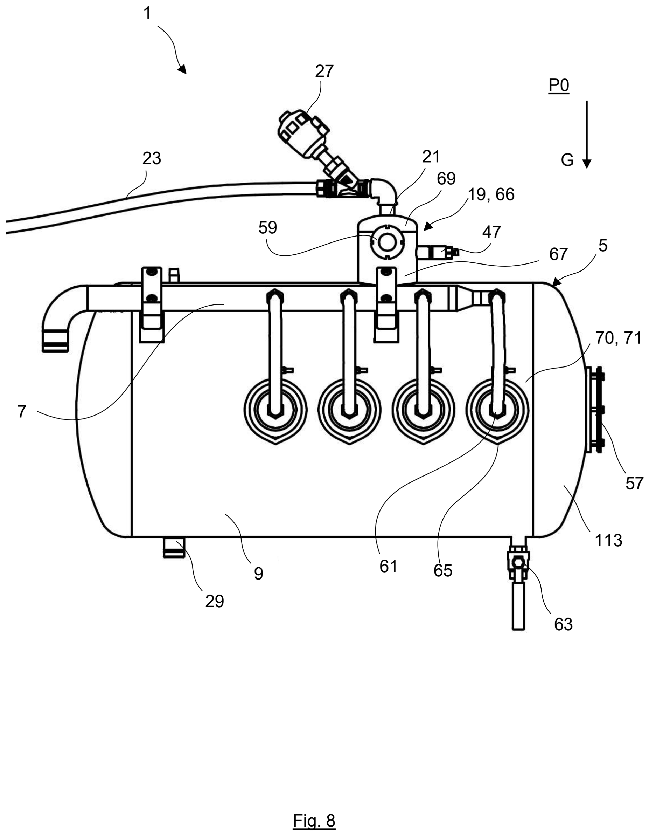

In Figur 8 ist eine seitliche Ansicht der Vorrichtung 1 gemäß Figur 7 dargestellt. Die Mehrzahl von Destillateinlässen 61 und somit die Koaleszenzorgane 11 sind in Gravitationsrichtung G auf gleicher Höhe angeordnet. Der Leichtphasensammelbereich 19 ist quer zur Gravitationsrichtung G mittig der Mehrzahl von Destillateinlässen 61. Dies bietet den Vorteil, dass von den Koaleszenzorganen 11 aufsteigende Leichtphasen 20 in den Leichtphasensammelbereich 19 aufsteigen.

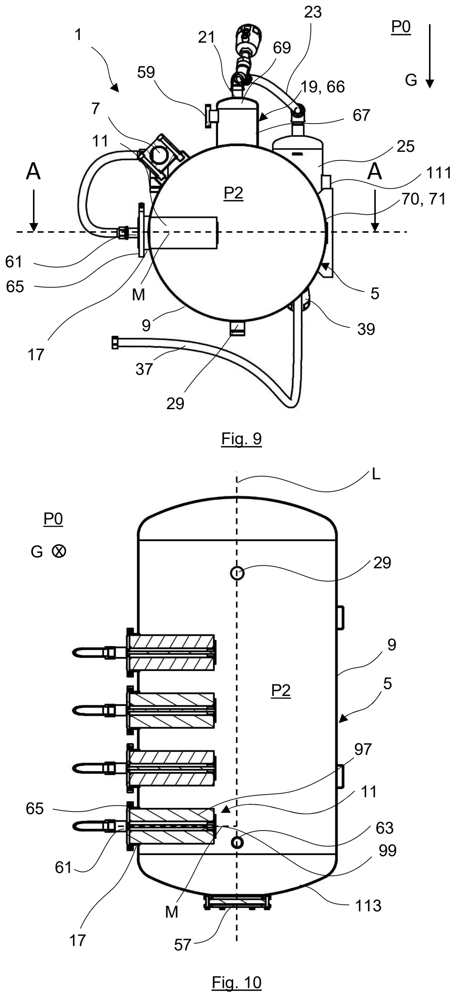

In Figur 9 ist eine Schnittansicht der in Figur 7 dargestellten Vorrichtung 1 abgebildet. Durch die Ausführung der Trennkammer 5 als Rundtank, verjüngt sich die Trennkammer 5 von den Destillateinlässen 61 hin zum Leichtphasensammelbereich 19, insbesondere nur in einer Ebene. Dadurch wird die von den Koaleszenzorganen 11 aufsteigende Leichtphase 20 zum Leichtphasensammelbereich 19 hin abgelenkt. Der Wasserauslass 29 ist in Gravitationsrichtung G am unteren Ende der Trennkammer 5 angeordnet. Dadurch kann sichergestellt werden, dass durch den beim Ablassen des Wassers 30, über den Wasserauslass 29, entstehende Sog möglichst keine koaleszierenden Leichtphasen 20 aus der Trennkammer 5 abgezogen werden.

In Figur 10 ist eine Schnittansicht der in Figur 7 dargestellten Vorrichtung 1 entlang der Schnittebene A - A aus Figur 9 dargestellt. Die Koaleszenzorgane 11 sind gleich zu dem in Figur 7 dargestellten Koaleszenzorgan 11 ausgebildet. Die Trennkammer weist eine Längsachse L auf. Die Trennkammer 5, insbesondere das Trennkammergehäuse 9, bzw. der Koaleszenzabschnitt 71 bzw. der Gehäusegrundkörper 70 ist entlang der Längsachse L rotationssymmetrisch ausgebildet. Vorzugsweise sind die Koaleszenzorgane 11 entlang der Längsachse L äquidistant angeordnet, insbesondere in einem Abstand der Mittelachsen M von 17,5 cm. Der Wasserauslass 29 ist in Richtung der Längsachse L von der Mehrzahl von Koaleszenzorganen 11 beabstandet. Das Sichtfenster 57 ist zentriert zur Längsachse L angeordnet.

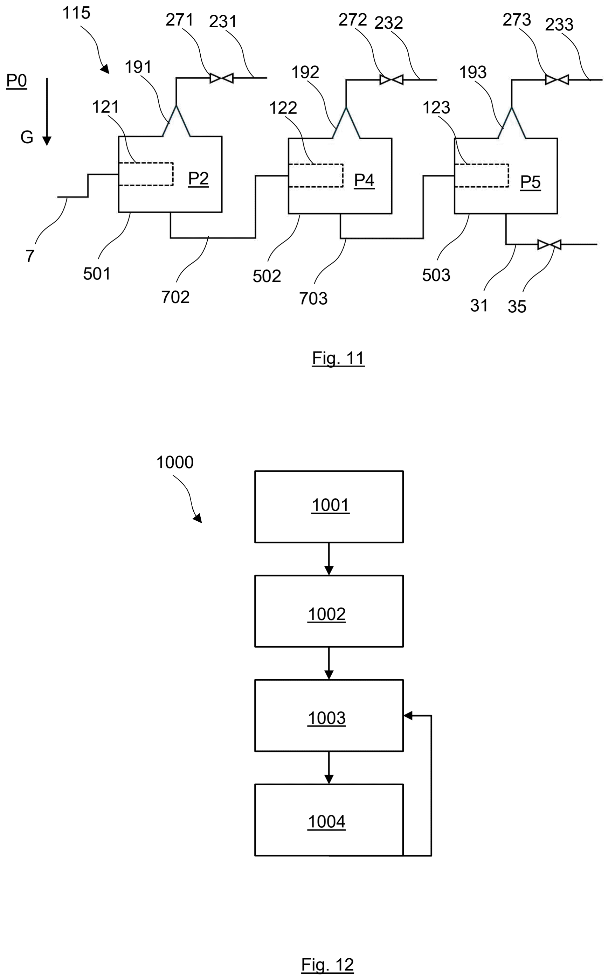

In Figur 11 ist eine schematische Darstellung einer beispielhaften Ausführung der erfindungsgemäßen Vorrichtung 1 dargestellt. In dieser Ausführung sind mehrere, insbesondere drei, Trennkammern 501, 502, 503 kaskadenartig in Strömungsrichtung S hintereinander geschalten. Die Trennkammern 501, 502, 503 können entsprechend der zuvor beschriebenen Trennkammern 5 ausgebildet sein. Die erste Trennkammer 501 ist fluidisch über die Destillatleitung 7 mit dem Wärmetauscher 3 verbunden, wie in den vorherigen Ausführungen beschrieben. Insbesondere strömt das Destillat 40 durch das Koaleszenzorgan 121 in die Trennkammer 501. Die erste Trennkammer 501 ist über eine Verbindungsleitung 702 mit der zweiten Trennkammer 502 verbunden. In der Verbindungsleitung 702 sind keine Ventile oder Drosseln vorgesehen, sodass das Wasser 30 aus der ersten Trennkammer 501 uneingeschränkt in die zweite Trennkammer 502, insbesondere durch das Koaleszenzorgan 122 strömen kann. Die zweite Trennkammer 502 ist über eine Verbindungsleitung 703 mit der dritten Trennkammer 503 verbunden. In der Verbindungsleitung 703 sind keine Ventile oder Drosseln vorgesehen, sodass das Wasser 30 aus der ersten Trennkammer 501 uneingeschränkt in die dritte Trennkammer 503, insbesondere durch das Koaleszenzorgan 123 strömen kann. An der dritten Trennkammer 503 ist die Wasserleitung 31 umfassend das Wasserventil 35 vorgesehen.

In der Trennkammer 501 wirkt der Überdruck P2 gegenüber der Atmosphäre P0, der im Wesentlichen dem Überdruck P1 gegenüber der Atmosphäre P0 des Destillats 40 und des Wärmetauschers 3 entspricht. In der Trennkammer 502 wirkt der Überdruck P4 gegenüber der Atmosphäre P0, der im Wesentlichen dem Überdruck P2 gegenüber der Atmosphäre P0 entspricht. In der Trennkammer 503 wirkt der Überdruck P5 gegenüber der Atmosphäre P0, der im Wesentlichen dem Überdruck P4 gegenüber der Atmosphäre P0 entspricht. Unter im Wesentlichen kann verstanden werden, dass der Wert beispielsweise wenigstens 10 %, insbesondere wenigstens 20 %, wenigsten 30 %, wenigsten 40 %, wenigsten 50 %, wenigstens 60 %, wenigstens 70 %, wenigstens 80 %, vorzugsweise wenigstens 90 % des Referenzwerts entspricht. Insbesondere soll zumindest ein Überdruck P5 gegenüber der Atmosphäre P0 von 30 mbar in der Trennkammer 503 wirken. Die Überdrücke P2, P4 und P5 sollen bei geschlossenen Leichtphasenablassventilen 271, 272, und 273, und geschlossenem Wasserablassventil 35 vorliegen. Insbesondere entspricht der Wert des Überdrucks P2, P4 und P5 dem Überdruck gegenüber der Atmosphäre P0 abzüglich des hydrostatischen Drucks des Fluids am Messpunkt.

In der abgebildeten Kaskadenanordnung kann vorgesehen sein, dass die Koaleszenzorgane 121, 122 und 123 unterschiedlich ausgebildet sind, sodass in den unterschiedlichen Trennkammern 501, 502 und 503 unterschiedliche Leichtphasen aus dem Destillat 40 ausgeschieden werden können. Es ist vorgesehen, dass die Trennkammern druckfest miteinander verbunden sind, sodass der Überdruck P1 aus dem Wärmetauscher 3 in allen drei Trennkammern 501, 502 und 503 wirkt. Das Durchströmen des Destillats 40 durch die Trennkammern 501, 502 und 503 wird über das Wasserventil 35 gesteuert und/oder geregelt. Jede der Trennkammern 501, 502 und 503 umfasst einen Leichtphasensammelbereich 191, 192 und 193, in dem sich die entsprechend abgeschiedenen Leichtphasen sammeln. Über die Leichtphasenventile 271, 272 und 273 können die Leichtphasen, insbesondere entgegen der Gravitationsrichtung G aus den Trennkammern 501, 502 und 503 abgezogen werden. Durch diesen mehrstufigen Prozess ist eine verbesserte Abscheidung von Leichtphasen aus dem Destillat 40 möglich.

In Figur 12 ist ein Diagramm eines beispielhaften Steuer- und/oder Regelungsverfahren 1000 einer beispielhaften Ausführung der erfindungsgemäßen Vorrichtung 1 dargestellt. Insbesondere ist entweder ein zyklischer, insbesondere periodischer Betrieb vorgesehen oder ein kontinuierlicher Betrieb. In einem Schritt 1001 wird die Anlage, beispielsweise der Verdampfer 85, aufgeheizt und der Verdichter 89 gestartet, Leichtphasenventil 27 und Wasserventil 35 sind geschlossen. In Schritt 1002 wird anschließend das Signal des Leichtphasensensors 47, insbesondere kontinuierlich oder in periodischen Intervallen von beispielsweise weniger als 1 Sekunde, insbesondere weniger als 5 Sekunden, weniger als 10 Sekunden oder weniger als 30 Sekunden, ausgewertet. Entspricht das Signal einem Wert, der zum Vorliegen von Luft korrespondiert, wird das Leichtphasenventil 27 geöffnet. Unter Überdruck P1 stehendes Destillat 40 strömt in die Trennkammer 5. Sobald sich der Wert des Signals des Leichtphasensensors 27 zu einem Wert ändert, der zum Vorliegen von Wasser 30 oder Leichtphase 20 korrespondiert, wird das Leichtphasenventil 27, insbesondere mit einem zeitlichen Versatz, geschlossen. Die Schritte 1001 und 1002 finden während eines Initialisierungszustands der Vorrichtung 1 statt und müssen nicht Teil des Steuer- und/oder Regelungsverfahren 1000 sein.

Im laufenden Betrieb der Vorrichtung 1, wird in Schritt 1003 das Signal des Leichtphasensensors 47 ausgewertet. Entspricht das Signal einem Wert, der zum Vorliegen von Leichtphase korrespondiert, wird das Leichtphasenventil 27 geöffnet. Die unter Überdruck P1 stehende Leichtphase 40 strömt über den Leichtphasenauslass 21 entgegen der Gravitationsrichtung G aus der Trennkammer 5 aus. Sobald sich der Wert des Signals des Leichtphasensensors 27 zu einem Wert ändert, der zum Vorliegen von Wasser 30 korrespondiert, wird das Leichtphasenventil 27, insbesondere mit einem zeitlichen Versatz, geschlossen. Schritt 1003 wird vorzugsweise kontinuierlich oder in periodischen Intervallen von beispielsweise weniger als 1 Sekunde, insbesondere weniger als 5 Sekunden, weniger als 10 Sekunden oder weniger als 30 Sekunden, im Betrieb durchgeführt.

In Schritt 1004, der vorzugsweise gleichzeitig zu Schritt 1003 durchgeführt wird, wird das Signal des Füllstandsensors 45 ausgewertet. Im zyklischen, vorzugsweise periodischen Regelungsbetrieb der Vorrichtung 1, wird in Schritt 1004 folgende Logik angewandt. Ist ein vorbestimmter oberer Grenzwert von im Wärmetauscher 3 oder im Pufferbehälter 105 vorliegende Menge von Destillat 40 erreicht, wird das Wasserventil 35 geöffnet. Sobald ein vorbestimmter unterer Grenzwert von im Wärmetauscher 3 oder im Pufferbehälter 105 vorliegender Menge von Destillat 40 erreicht ist, wird das Wasserventil 35 geschlossen. Im kontinuierlichen Regelungsbetrieb der Vorrichtung 1, wird in Schritt 1004 folgende Logik angewandt. Sobald ein vorbestimmter Wert an vorliegender Menge, insbesondere Füllstand, von Destillat 40 im Wärmetauscher oder Pufferbehälter 105 erreicht ist, wird das Wasserventil 35 geöffnet. Die Durchströmmenge von Wasser 30 durch das Wasserventil 35 wird kontinuierlich an die in den Wärmetauscher 3 oder den Pufferbehälter 68 einströmende Menge von Destillat 40 angepasst. Das Wasserventil 35 wird so gedrosselt, dass das Signal des Füllstandsensors 45 möglichst konstant bleibt, also Zustrom und Abstrom aus dem Wärmetauscher 3 oder dem Pufferbehälter 68 und/oder der Trennkammer 5 gleich sind. Ein Abweichen von höchstens 25 %, insbesondere höchstens 20 %, höchstens 15 %, höchstens 10 %, höchstens 5 %, höchstens 3 %, vorzugsweise höchstens 1 % wird toleriert. Sinkt der Wert des Füllstandsensors 45 unter den vorbestimmten Wert, wird die Strömung durch Wasserventil 35 stärker begrenzt, insbesondere wird der Strömungsquerschnitt des Wasserventils 35 verkleinert. Steigt der Wert des Füllstandsensors 45 über den vorbestimmten Wert, wird die Strömung durch das Wasserventil 35 weniger begrenzt, insbesondere wird der Strömungsquerschnitt des Wasserventils 35 vergrößert.

Schritt 1004 wird vorzugsweise kontinuierlich oder in periodischen Intervallen von beispielsweise weniger als 1 Sekunde, insbesondere weniger als 5 Sekunden, weniger als 10 Sekunden oder weniger als 30 Sekunden, im Betrieb durchgeführt.

### BEZUGSZEICHENLISTE

- 1: Vorrichtung
- 3: Wärmetauscher
- 5: Trennkammer
- 7: Destillatleitung
- 9: Trennkammergehäuse
- 11: Koaleszenzorgan
- 13: Trennkammerwand
- 15: Trennkammerboden
- 17: Koaleszenzorganaufnahme
- 19: Leichtphasensammelbereich
- 20: Leichtphase
- 21: Leichtphasenauslass
- 23: Leichtphasenleitung
- 25: Leichtphasensammelbehälter
- 27: Leichtphasenventil
- 29: Wasserauslass
- 30: Wasser
- 31: Wasserleitung
- 33: Wassersammelbehälter
- 35: Wasserventil
- 37: Auslass des Leichtphasensammelbehälters
- 39: Ablassventil des Leichtphasensammelbehälters
- 40: Destillat
- 41: Auslass des Wassersammelbehälters
- 43: Ablassventil des Wassersammelbehälters
- 45: Destillatfüllstandsensor
- 47: Leichtphasensensor
- 49: Wasserfüllstandsensor
- 50: Phasengrenze
- 51: Wasserspiegel
- 53: Leichtphasenfüllstandsensor
- 55: Leichtphasenspiegel
- 57: Sichtfenster Koaleszenzorgan
- 59: Sichtfenster Leichtphasensammelbereich
- 61: Destillateinlass
- 63: Zusatzauslassventil der Trennkammer
- 65: Verbindungsschelle
- 66: Sammelturm
- 67: Hülsenabschnitt des Leichtphasensammelbereichs
- 69: Kuppelabschnitt des Leichtphasensammelbereichs
- 70: Gehäusegrundkörper
- 71: Koaleszenzabschnitt der Trennkammer
- 73: Verjüngungsabschnitt der Trennkammer
- 75: Verbindungselement
- 77: Wärmetauscherauslass
- 80: Verdampfervorrichtung
- 81: Prozessmedium
- 83: Zuführleitung
- 85: Verdampfer
- 87: Brüden
- 89: Verdichter
- 91: Umwälzpumpe
- 93: Kondensationsseite
- 95: Erwärmungsseite
- 97: Kolaeszenzmaterial
- 99: Einströmbereich des Koaleszenzorgans
- 101: Trennwand
- 103: Zusatzauslass des Wassersammelbehälters
- 105: Pufferbehälter
- 107: Verbindungsleitung
- 109: Füllstand im Pufferbehälter
- 111: Abluftöffnung
- 113: Endwand
- 115: Kaskadenanordnung
- 121, 122, 123: Koaleszenzorgane
- 191, 192, 193: Leichtphasensammelbereiche
- 231, 232, 233: Leichtphasenleitungen
- 271, 272, 273: Leichtphasenventile
- 501, 502, 503: Trennkammern
- 702, 703: Verbindungsleitungen

- 1000: Regelungsverfahren
- 1001 - 1004: Verfahrensschritte

- G: Gravitationsrichtung
- L: Längsachse der Trennkammer
- M: Mittelachse des Koaleszenzorgans
- S: Strömungsrichtung
- P0: atmosphärischer Druck
- P1: Überdruck im Wärmetauscher
- P2: Überdruck in der Trennkammer
- P25: Druck im Leichtphasensammelbehälter

## Patentansprüche

1. Vorrichtung (1) zum Aufbereiten eines Prozess- oder Industriemediums (81), insbesondere eines wässrigen Prozess- oder Industriemediums, insbesondere einer kohlenwasserstoffhaltigen Emulsion, umfassend:
einen Wärmetauscher (3), der dazu eingerichtet ist, aus dem Prozess- oder Industriemedium (81) ein unter Überdruck (P1) stehendes Destillat (40) bereitzustellen, das zumindest Wasser (30) und eine weniger dichte Leichtphase (20) enthält, und
eine in Fluidverbindung mit dem Wärmetauscher (3) stehende Trennkammer (5), in der ein Koaleszenzorgan (11) angeordnet und die Leichtphase (20) von Wasser (30) abzusondern ist,
wobei der Wärmetauscher (3) derart mit der Trennkammer (5) verbunden ist, dass in der Trennkammer (5) ein Überdruck (P2) von wenigstens 10 % des in dem Wärmetauscher (3) wirkenden Überdrucks (P1) wirkt.

2. Vorrichtung (1) nach Anspruch 1, wobei in der Trennkammer (5) ein Überdruck (P2) von wenigstens 20 %, insbesondere wenigstens 30 %, wenigstens 40 %, wenigsten 50 %, wenigsten 60 %, wenigsten 70 %, wenigsten 80 %, oder wenigstens 90 %, des in dem Wärmetauscher (3) wirkenden Überdrucks (P1) wirkt.

3. Vorrichtung (1), insbesondere nach einem der vorstehenden Ansprüche, zum Aufbereiten eines Prozess- oder Industriemediums (81), insbesondere eines wässrigen Prozess- oder Industriemediums, insbesondere einer kohlenwasserstoffhaltigen Emulsion, umfassend:
einen Wärmetauscher (3), der dazu eingerichtet ist, aus dem Prozess- oder Industriemedium (81) ein unter Überdruck (P1) stehendes Destillat (40) bereitzustellen, das zumindest Wasser (30) und eine weniger dichte Leichtphase (20) enthält, und
eine in Fluidverbindung mit dem Wärmetauscher (3) stehende Trennkammer (5), in der die Leichtphase (20) koalesziert und von Wasser (30) abzusondern ist,
wobei zumindest ein Bereich der Trennkammer (5), in dem die Leichtphase (20) koalesziert, insbesondere gegenüber der Atmosphäre hermetisch abgedichtet ist.

4. Vorrichtung (1) nach einem der vorstehenden Ansprüche, wobei die Trennkammer (5) ein, insbesondere gegenüber der Atmosphäre, hermetisch abgedichtetes Gehäuse (9) aufweist, und/oder wobei der in dem Wärmetauscher (3) wirkende Überdruck (P1) uneingeschränkt in der Trennkammer (5) wirkt, und/oder wobei in der Trennkammer (5) ein Überdruck (P2) von wenigstens 30 mbar gegenüber der Atmosphäre wirkt, und/oder umfassend zumindest ein in Fluidverbindung mit der Trennkammer (5) stehendes Ablassventil (27, 35), zum Ablassen eines Fluids aus der Trennkammer (5), wobei insbesondere das Ablassventil (27, 35) in Gravitationsrichtung (G) oberhalb einer in der Trennkammer (5) vorliegenden Phasengrenze (50), insbesondere zwischen Wasser (30) und der Leichtphase (20), angeordnet ist.

5. Vorrichtung (1), insbesondere nach einem der vorstehenden Ansprüche, zum Aufbereiten eines Prozess- oder Industriemediums (81), insbesondere eines wässrigen Prozess- oder Industriemediums, insbesondere einer kohlenwasserstoffhaltigen Emulsion, umfassend:
einen Wärmetauscher (3), der dazu eingerichtet ist, aus dem Prozess- oder Industriemedium (81) ein unter Überdruck (P1) stehendes Destillat (40) bereitzustellen, das zumindest Wasser (30) und eine weniger dichte Leichtphase (20) enthält, und
eine in Fluidverbindung mit dem Wärmetauscher (3) stehende Trennkammer (5), in der ein Koaleszenzorgan (11) angeordnet und die Leichtphase (20) von Wasser (30) abzusondern ist,
wobei ein Leichtphasenauslass (21) derart an der Trennkammer (5) angeordnet ist, dass die aus dem Destillat (40) abzusondernde Leichtphase (20) entgegen der Gravitationsrichtung (G) aus der Trennkammer (5) abgezogen wird.

6. Vorrichtung (1) nach Anspruch 5, wobei der Leichtphasenauslass (21) ein insbesondere elektronisch ansteuerbares Ablassventil (27) aufweist, und/oder wobei die Trennkammer (5) einen Leichtphasensammelbereich (19) aufweist, der insbesondere oberhalb des Koaleszenzorgans oder des Bereichs, in dem die Leichtphase koalesziert angeordnet ist, und/oder wobei das Gehäuse (9) der Trennkammer (5) einen unteren Grundkörper (70), vorzugsweise einen zylindrischen oder kastenartigen Grundkörper, umfasst, an dessen oberen Ende ein nach oben vorstehender Sammelturm (66) anschließt, in dem die Leichtphase (20) gesammelt wird, wobei insbesondere der Sammelturm (66) am oberen Ende domförmig, insbesondere kuppelförmig, ausgestaltet ist, und/oder wobei in dem Leichtphasensammelbereich (19) oder Sammelturm (66) ein Sensor (47) angeordnet ist, der dazu eingerichtet ist, die Leichtphase (20) von Wasser (30) und von Luft zu unterscheiden, und/oder wobei ein stromaufwärtig der Trennkammer (5) angeordneter Sensor (45), wie ein Füllstandsensor, dazu eingerichtet ist, insbesondere im Wärmetauscher (3), eine Menge des vom Wärmetauscher (3) bereitgestellten Destillats (40) zu erfassen, und/oder wobei das Koaleszenzorgan (11) ein, insbesondere zylindrisches, Koaleszenzgehäuse aufweist, und/oder wobei die Trennkammer (5) zumindest ein Sichtfenster (57, 59) umfasst, das derart an der Trennkammer (5) angeordnet ist, dass das Koaleszenzorgan (11) oder der Füllstand von einer aus dem Destillat (40) abgeschiedenen Leichtphase (20) in der Trennkammer (5), von außerhalb der Trennkammer (5) visuell erfasst werden kann, und/oder wobei eine zweite, in Fluidverbindung mit der Trennkammer (5), die eine erste Trennkammer (501) darstellt, stehende, insbesondere nach einem der vorstehenden Ansprüche ausgestaltete, Trennkammer (502), in der ein Koaleszenzorgan (122) angeordnet, und eine Leichtphase (20) von Wasser (30) abzusondern ist, stromabwärts der ersten Trennkammer (501) vorgesehen ist, wobei insbesondere die zweite Trennkammer (502) derart mit der ersten Trennkammer (501) verbunden ist, dass in der zweiten Trennkammer (502) ein Überdruck (P4) von wenigstens 10 % des in dem Wärmetauscher (3) oder des in der ersten Trennkammer (501) wirkenden Überdrucks (P1, P2) wirkt, wobei insbesondere in der zweiten Trennkammer (502) ein Überdruck (P4) von wenigstens 20 %, insbesondere wenigstens 30 %, wenigstens 40 %, wenigsten 50 %, wenigsten 60 %, wenigsten 70 %, wenigsten 80 %, oder wenigstens 90 %, des in dem Wärmetauscher (3) oder des in der ersten Trennkammer (501) wirkenden Überdrucks (P1, P2) wirkt, und/oder wobei der in dem Wärmetauscher (3) oder der in der ersten Trennkammer (501) wirkende Überdruck (P1, P2) uneingeschränkt in der zweiten Trennkammer (502) wirkt, und/oder wobei die von der zweiten Trennkammer (502) abzusondernde Leichtphase (20), der in der ersten Trennkammer (501) abzusondernden Leichtphase (20) oder einer anderen in dem Destillat (40) vorhandenen Leichtphase (20) entspricht.

7. Vorrichtung zum Steuern und/oder Regeln einer Vorrichtung (1), insbesondere nach einem der vorstehenden Ansprüche, zum Aufbereiten eines Prozess- oder Industriemediums (81), insbesondere eines wässrigen Prozess- oder Industriemediums, insbesondere einer kohlenwasserstoffhaltigen Emulsion, umfassend:
einen Wärmetauscher (3), der dazu eingerichtet ist, aus dem Prozess- oder Industriemedium (81) ein unter Überdruck (P1) stehendes Destillat (40) bereitzustellen, das zumindest Wasser (30) und einer weniger dichte Leichtphase (20) enthält,
einen Sensor (45), insbesondere einen Füllstandsensor, zum Erfassen einer Menge des von dem Wärmetauscher (3) bereitgestellten Destillats (40),
eine in Fluidverbindung mit dem Wärmetauscher (3) stehende Trennkammer (5), in der ein Koaleszenzorgan (11) angeordnet und die Leichtphase (20) von Wasser (30) abzusondern ist,
eine Steuer- und/oder Regeleinrichtung, die anhand der erfassten Destillatmenge ein Steuersignal erzeugt, und
ein stromabwärtig der Trennkammer (5) angeordnetes und mit dieser in Fluidverbindung stehendes Ablassventil (27, 35), das anhand des Steuersignals der Steuer- und/oder Regeleinrichtung einstellbar ist.

8. Vorrichtung nach Anspruch 7, wobei das Ablassventil (27, 35) derart eingestellt wird, insbesondere die Menge des aus der Trennkammer (5) ausströmenden Fluids derart gedrosselt wird, dass die vorliegende, vom Wärmetauscher (3) bereitgestellte Menge von Destillat (40) höchstens 25 %, insbesondere höchstens 20 %, höchstens 15 %, höchstens 10 %, höchstens 5 %, höchstens 2 %, vorzugsweise höchstens 1 %, von einer vorbestimmten Menge abweicht, und/oder wobei das Ablassventil (27, 35) geöffnet wird, sobald die vom Wärmetauscher (3) bereitgestellte Menge von Destillat (40) einen vorbestimmten oberen Grenzwert erreicht und geschlossen wird, sobald die vom Wärmetauscher (3) bereitgestellte Menge von Destillat (40) einen vorbestimmten unteren Grenzwert erreicht.

9. Verfahren zum Aufbereiten eines Prozess- oder Industriemediums (81), insbesondere eines wässrigen Prozess- oder Industriemediums, insbesondere einer kohlenwasserstoffhaltigen Emulsion, wobei
aus dem Prozess- oder Industriemedium (81) ein unter Überdruck (P1) stehendes Destillat (40), insbesondere von einem Wärmetauscher (3), bereitgestellt wird, das zumindest Wasser (30) und eine weniger dichte Leichtphase (20) enthält, und
das Destillat (40) insbesondere in einer Trennkammer (5) einem Koaleszenzprozess unterzogen wird, bei dem die Leichtphase (20) im Destillat (40) koalesziert wird, und die Leichtphase (20) von Wasser (30) abgesondert wird,
wobei das Koaleszieren und/oder das Absondern der Leichtphase (20) von Wasser (30) unter einem Überdruck (P2) von wenigstens 10 % des in dem bereitgestellten Destillat (40) wirkenden Überdrucks (P1) erfolgt.

10. Verfahren nach Anspruch 9, wobei das Koaleszieren und/oder das Absondern der Leichtphase (20) von Wasser (30) unter einem Überdruck (P2) von wenigstens 20 %, insbesondere wenigstens 30 %, wenigstens 40 %, wenigsten 50 %, wenigsten 60 %, wenigsten 70 %, wenigsten 80 %, oder wenigstens 90 %, des in dem bereitgestellten Destillat (40) wirkenden Überdrucks (P1) erfolgt.

11. Verfahren, insbesondere nach Anspruch 9 oder 10, zum Aufbereiten eines Prozess- oder Industriemediums (81), insbesondere eines wässrigen Prozess- oder Industriemediums, insbesondere einer kohlenwasserstoffhaltigen Emulsion, wobei
aus dem Prozess- oder Industriemedium (81) ein unter Überdruck (P1) stehendes Destillat (40), insbesondere von einem Wärmetauscher (3), bereitgestellt wird, das zumindest Wasser (30) und eine weniger dichte Leichtphase (20) enthält, und
das Destillat (40) insbesondere in einer Trennkammer (5) einem Koaleszenzprozess unterzogen wird, bei dem die Leichtphase (20) im Destillat (40) koalesziert wird, und die Leichtphase (20) von Wasser (30) abgesondert wird,
wobei das Koaleszieren und/oder Absondern der Leichtphase (20) in einem gegenüber der Atmosphäre abgedichteten Raum erfolgt.

12. Verfahren nach einem der Ansprüche 9 bis 11, wobei das Koaleszieren und/oder Absondern der Leichtphase in einem Gehäuse (9), insbesondere von einer Trennkammer (5), erfolgt, das, vorzugsweise hermetisch, insbesondere gegenüber der Atmosphäre, abgedichtet wird, und/oder wobei das Destillat (40) uneingeschränkt von einem Wärmetauscher (3) in eine Trennkammer (5) strömt, und/oder wobei das Koaleszieren und/oder das Absondern der Leichtphase (20) von Wasser (30) unter einem Überdruck (P2) von wenigstens 30 mbar gegenüber atmosphärischem Druck erfolgt, und/oder wobei das Wasser (30) und/oder die abgesonderte Leichtphase (20) durch ein Ablassventil (27, 35) strömt, wobei dabei insbesondere der in Wasser (30) und/oder Leichtphase (20) wirkende Überdruck (P2), vorzugsweise auf atmosphärischen Druck, entspannt wird, wobei insbesondere das Wasser (30) und/oder die Leichtphase (20) beim Strömen durch das Ablassventil (27, 35) zumindest eine Strömungskomponente entgegen der Gravitationsrichtung (G) aufweist.

13. Verfahren, insbesondere nach einem der Ansprüche 9 bis 12, zum Aufbereiten eines Prozess- oder Industriemediums (81), insbesondere eines wässrigen Prozess- oder Industriemediums, insbesondere einer kohlenwasserstoffhaltigen Emulsion, wobei
aus dem Prozess- oder Industriemedium ein unter Überdruck stehendes Destillat (40), insbesondere von einem Wärmetauscher (3), bereitgestellt wird, das zumindest Wasser (30) und eine weniger dichte Leichtphase (20) enthält,
das Destillat (40) in eine Trennkammer (5) strömt, in der das Destillat (40) einem Koaleszenzprozess unterzogen wird, bei dem die Leichtphase (20) im Destillat (40) koalesziert wird, und die Leichtphase (20) von Wasser (30) abgesondert wird, und
die abgesonderte Leichtphase (20) entgegen der Gravitationsrichtung (G) aus der Trennkammer (5) abgezogen wird.

14. Verfahren nach Anspruch 13, wobei die abgesonderte Leichtphase (20) durch ein insbesondere elektronisch ansteuerbares Ablassventil (27) abgezogen wird, und/oder wobei die abgesonderte Leichtphase (20) in einen in der Trennkammer (5) angeordneten Leichtphasensammelbereich (19) steigt, und/oder wobei die Trennkammer (5) ein Gehäuse (9) aufweist, das einen unteren Grundkörper (70), vorzugsweise einen zylindrischen oder kastenartigen Grundkörper, umfasst, an dessen oberen Ende ein nach oben vorstehender Sammelturm (66) anschließt, in den die abgesonderte Leichtphase (20) steigt, wobei insbesondere sich die abgesonderte Leichtphase (20) an einem domförmigen, insbesondere kuppelförmigen, oberen Ende des Sammelturms (66) sammelt, und/oder wobei das Vorliegen der Leichtphase (20) in dem Leichtphasensammelbereich (19) oder Sammelturm (66) erfasst wird, und/oder wobei eine Menge des bereitgestellten Destillats (40) erfasst wird., und/oder wobei die Leichtphase in einem, insbesondere zylindrischen, Koaleszenzgehäuse eines Koaleszenzorgans (11) koalesziert wird, und/oder wobei das Koaleszieren und/oder das Absondern der Leichtphase (20) und/oder ein Füllstand der abgesonderten Leichtphase (20) visuell, insbesondere durch ein Sichtfenster (57, 59) von außerhalb eines Gehäuses einer Trennkammer (5), erfasst wird, und/oder wobei das Wasser (30) einem weiteren Koaleszenzprozess unterzogen wird, bei dem eine weitere Leichtphase in dem Wasser (30) koalesziert wird, und die weitere Leichtphase von Wasser (30) abgesondert wird, wobei insbesondere das Koaleszieren und/oder das Absondern der weiteren Leichtphase von Wasser (30) unter einem Überdruck (P4) von wenigstens 10 % des in dem bereitgestellten Destillat (40) oder dem Wasser (30) während des Koaleszierens und/oder Absondern der Leichtphase (20) wirkenden Überdrucks (P1, P2) erfolgt, wobei insbesondere das Koaleszieren und/oder das Absondern der weiteren Leichtphase von Wasser (30) unter einem Überdruck (P4) von wenigstens 20 %, insbesondere wenigstens 30 %, wenigstens 40 %, wenigsten 50 %, wenigsten 60 %, wenigsten 70 %, wenigsten 80 %, oder wenigstens 90 %, des in dem bereitgestellten Destillat (40) oder dem Wasser (30) während des Koaleszierens und/oder Absondern der Leichtphase (20) wirkenden Überdrucks (P1, P2) erfolgt, und/oder wobei das Wasser (30) uneingeschränkt von einer ersten Trennkammer (501), in der die Leichtphase (20) koalesziert und von Wasser (30) abgesondert wird, in eine zweite Trennkammer (502), in der die weitere Leichtphase koalesziert wird und von Wasser (30) abgesondert wird, strömt, und/oder wobei die weitere Leichtphase der Leichtphase (20) entspricht oder eine andere Leichtphase ist.

15. Verfahren zum Steuern und/oder Regeln einer Vorrichtung (1), insbesondere nach einem der Ansprüche 1 bis 8, zum Aufbereiten eines Prozess- oder Industriemediums (81), insbesondere eines wässrigen Prozess- oder Industriemediums, insbesondere einer kohlenwasserstoffhaltigen Emulsion, wobei
eine Füllstandhöhe von aus dem Prozess- oder Industriemedium (81) bereitgestellten Destillat (40), das zumindest Wasser (30) und eine weniger dichte Leichtphase (20) enthält, erfasst wird,
ein Soll-Ist-Wert-Vergleich der erfassten Füllstandhöhe mit einem Referenzwert vollzogen wird und
anhand des Soll-Ist-Wert-Vergleichs eine Zufuhrmenge von Destillat (40) in eine Trennkammer (5), in der das Destillat einem Koaleszenzprozess unterzogen wird, bei dem die Leichtphase (20) im Destillat (40) koalesziert wird, und die Leichtphase (29) von Wasser (30) abgesondert wird, durch Abziehen von Wasser (30) und/oder Leichtphase (20) eingestellt wird.

16. Verfahren nach Anspruch 15, wobei das Abziehen von Wasser (30) und/oder Leichtphase (20) derart eingestellt wird, dass die erfasste Füllstandhöhe höchstens 25 %, insbesondere höchstens 20 %, höchstens 15 %, höchstens 10 %, höchstens 5 %, höchstens 2 %, vorzugsweise höchstens 1 %, von einer vorbestimmten Füllstandhöhe abweicht, wobei insbesondere das Abziehen von Wasser (30) und/oder Leichtphase (20) derart eingestellt wird, dass ein Abziehen erfolgt, sobald die erfasste Füllstandhöhe einen vorbestimmten oberen Referenzwert erreicht und das Abziehen beendet wird, sobald die erfasste Füllstandhöhe einen vorbestimmten unteren Referenzwert erreicht.

17. Verfahren zum Nachrüsten einer Vorrichtung (1) zum Aufbereiten eines Prozess- oder Industriemediums (81), insbesondere eines wässrigen Prozess- oder Industriemediums, insbesondere einer kohlenwasserstoffhaltigen Emulsion, umfassend
einen Wärmetauscher (3), der dazu eingerichtet ist, aus dem Prozess- oder Industriemedium (81) ein unter Überdruck (P1) stehendes Destillat (40) bereitzustellen, das zumindest Wasser (30) und eine weniger dichte Leichtphase (20) enthält, und
eine in Fluidverbindung mit dem Wärmetauscher (3) stehende Trennkammer (5), in der ein Koaleszenzorgan (11) angeordnet und die Leichtphase (20) von Wasser (30) abzusondern ist,
wobei die Vorrichtung (1) derart nachgerüstet wird, dass die Vorrichtung (1) nach einem der Ansprüche 1 bis 8 ausgestaltet ist und/oder nach einem der Ansprüche 9 bis 16 betrieben werden kann.
